Europäisches Patentamt

(19) European Patent Office

Office européen des brevets

(11) Publication number : **0 447 495 B1**

(12) **EUROPEAN PATENT SPECIFICATION**

(45) Date of publication of patent specification :
28.12.94 Bulletin 94/52

(51) Int. Cl.[5] : **H04B 1/66, G11B 20/10**

(21) Application number : 90903695.6

(22) Date of filing : 29.01.90

(86) International application number :
PCT/US90/00507

(87) International publication number :
WO 90/09064 09.08.90 Gazette 90/19

(54) **LOW TIME-DELAY TRANSFORM CODER, DECODER, AND ENCODER/DECODER FOR HIGH-QUALITY AUDIO.**

(30) Priority : 27.01.89 US 303714
20.11.89 US 439868
29.12.89 US 458894

(43) Date of publication of application :
25.09.91 Bulletin 91/39

(45) Publication of the grant of the patent :
28.12.94 Bulletin 94/52

(84) Designated Contracting States :
AT BE CH DE DK ES FR GB IT LI LU NL SE

(56) References cited :
EP-A- 0 176 243
EP-A- 0 289 080
Speech Communication, vol. 6, 1987, pages
299-308; A.W. Johnson, A.W. Bradley:
"Adaptive Transform Coding Incorporating
Time Domain Aliasing Cancellation"
IEEE Transactions on Acoustics, Speech and
Signal Processing, vol. 28, no. 1, February
1980, pages 99-102; R.E. Crochière: "A
Weighted Overlap-Add Method of Short-Time
Fourier Analysis/Synthesis"

(56) References cited :
IEEE Transactions on Acoustics, Speech and
Signal Processing, vol. 27, no. 5, October 1979,
pages 512-530; J.M. Tribolet, R.E. Crochière:
"Frequency Domain Coding of Speech"
Frequenz, vol. 43, no. 9, 1989, B. Edler:
"Codierungen von Audiosignalen mit überlap-
pen der Transformation und adaptiven Fen-
sterfunktionen"
IEEE Transactions on Acoustics, Speech and
Signal Processing, vol. 34, no. 5, October 1986,
pages 1153-1161; J.P. Princen, A.B. Bradley:
"Analysis/Synthesis Filter Bank Design Based
on Time Domain Aliasing Cancellation"

(73) Proprietor : DOLBY LABORATORIES
LICENSING CORPORATION
100 Potrero Avenue
San Francisco California 94103-4813 (US)

(72) Inventor : FIELDER, Louis, Dunn
1210 Tuolumne Road
Millbrae, CA 94030 (US)
Inventor : DAVIS, Mark, Franklin
1110 Manzanita Drive
Pacifica, CA 94044 (US)

(74) Representative : Hoffmann, Eckart et al
Patentanwalt,
Blumbach & Partner,
Bahnhofstrasse 103
D-82166 Gräfelfing (DE)

EP 0 447 495 B1

## Description

### Technical Field

The invention relates in general to the high-quality low bit-rate digital signal processing of audio signals, such as music signals. More particularly, the invention relates to transform encoders and decoders for such signals, wherein the encoders and decoders have a short signal-propagation delay. Short delays are important in applications such as broadcast audio where a speaker must monitor his own voice. A delay in voice feedback causes serious speech disruption unless the delay is very short.

### Background Art

#### INTRODUCTION

Transform coding of high-quality signals in the prior art have used long signal sample block lengths to achieve low bit-rate coding without creating objectionable audible distortion. For example, a transform coder disclosed in EP-A-0 251 028 uses a block length of 1024 samples. Long block lengths have been necessary because shorter blocks degrade transform coder selectivity. Filter selectivity is critical because transform coders with sufficient filter bank selectivity can exploit psychoacoustic masking properties of human hearing to reduce bit-rate requirements without degrading the subjective quality of the coded signal.

Coders using long block lengths suffer from two problems: (1) audible distortion of signals with large transients caused by the temporal spreading of the transient's effects throughout the transform block, and (2) excessive propagation delay of the signal through the encoding and decoding process. In prior art coders, these processing delays are too great for applications such as broadcast audio where a speaker must monitor his own voice. A delay in voice feedback causes serious speech disruption unless the delay is kept very short.

The background art is discussed in more detail in the following Background Summary.

#### BACKGROUND SUMMARY

There is considerable interest among those in the field of signal processing to discover methods which minimize the amount of information required to represent adequately a given signal. By reducing required information, signals may be transmitted over communication channels with lower bandwidth, or stored in less space. With respect to digital techniques, minimal informational requirements are synonymous with minimal binary bit requirements.

Two factors limit the reduction of bit requirements:

(1) A signal of bandwidth W may be accurately represented by a series of samples taken at a frequency no less than 2 x W. This is the Nyquist sampling rate. Therefore, a signal T seconds in length with a bandwidth W requires at least 2 x W x T number of samples for accurate representation.

(2) Quantization of signal samples which may assume any of a continuous range of values introduces inaccuracies in the representation of the signal which are proportional to the quantizing step size or resolution. These inaccuracies are called quantization errors. These errors are inversely proportional to the number of bits available to represent the signal sample quantization.

If coding techniques are applied to the full bandwidth, all quantizing errors, which manifest themselves as noise, are spread uniformly across the bandwidth. Techniques which may be applied to selected portions of the spectrum can limit the spectral spread of quantizing noise. Two known techniques, subband coding and transform coding, are discussed in Tribolet and Crochiere, "Frequency Domain Coding of Speech," IEEE Trans. on Acoust., Speech, Signal Proc., vol. ASSP-27, October, 1979, pp. 512-30. By using subband coding or transform coding, quantizing errors can be reduced in particular frequency bands where quantizing noise is especially objectionable by quantizing that band with a smaller step size.

Subband coding may be implemented by a bank of digital bandpass filters. Transform coding may be implemented by any of several time-domain to frequency-domain transforms which simulate a bank of digital bandpass filters. Although transforms are easier to implement and require less computational power and hardware than digital filters, they have less design flexibility in the sense that each bandpass filter "frequency bin" represented by a transform coefficient has a uniform bandwidth. By contrast, a bank of digital bandpass filters can be designed to have different subband bandwidths. Transform coefficients can, however, be grouped together to define "subbands" having bandwidths which are multiples of a single transform coefficient bandwidth. The term "subband" is used hereinafter to refer to selected portions of the total signal bandwidth, whether implemented by a subband coder or a transform coder. The term is used in this manner because, as discussed by Tribolet and Crochiere, the mathematical basis of subband coders and transform coders are interchangeable, therefore the two coding methods are potentially capable of duplicating each other. A subband as implemented by transform coder is defined by a set of one or more adjacent transform coefficients or frequency bins. The bandwidth of a transform coder frequency bin depends upon the coder's sampling rate and the number of samples in each signal sample block (the transform length).

Tribolet and Crochiere observed that two characteristics of subband bandpass filters are particularly critical to the performance of subband coder systems because they affect the amount of signal leakage between subbands. The first is the bandwidth of the regions between the filter passband and stopbands (the transition bands). The second is the attenuation level in the stopbands. As used herein, the measure of filter "selectivity" is the steepness of the filter response curve within the transition bands (steepness of transition band rolloff), and the level of attenuation in the stopbands (depth of stopband rejection).

It is known from Tribolet and Crochiere that reducing leakage between subbands is important to subband coder performance because such leakage distorts the results of spectral analysis, and therefore adversely affects coding decisions made in response to the derived spectral shape. Such leakage can also cause frequency-domain aliasing. These effects are discussed in more detail below.

The two filter characteristics, steepness of transition band rolloff and depth of stopband rejection, are also critical because the human ear displays frequency-analysis properties resembling those of highly asymmetrical tuned filters having variable center frequencies. The frequency-resolving power of the human ear's tuned filters varies with frequency throughout the audio spectrum. The ear can discern signals closer together in frequency at frequencies below about 500 Hz, but widening as the frequency progresses upward to the limits of audibility. The effective bandwidth of such an auditory filter is referred to as a critical band. An important quality of the critical band is that psychoacoustic-masking effects are most strongly manifested within a critical band--a dominant signal within a critical band can suppress the audibility of other signals anywhere within that critical band. Signals at frequencies outside that critical band are not masked as strongly. See generally, the Audio Engineering Handbook, K. Blair Benson ed., McGraw-Hill, San Francisco, 1988, pages 1.40-1.42 and 4.8-4.10.

Psychoacoustic masking is more easily accomplished by subband and transform coders if the subband bandwidth throughout the audible spectrum is about half the critical bandwidth of the human ear in the same portions of the spectrum. This is because the critical bands of the human ear have variable center frequencies that adapt to auditory stimuli, whereas subband and transform coders typically have fixed subband center frequencies. To optimize the opportunity to utilize psychoacoustic-masking effects, any distortion artifacts resulting from the presence of a dominant signal should be limited to the subband containing the dominant signal. If the subband bandwidth is about half or less than half of the critical band (and if the transition band rolloff is sufficiently steep and the stopband rejection is sufficiently deep), the most effective masking of the undesired distortion products is likely to occur even for signals whose frequency is near the edge of the subband passband bandwidth. If the subband bandwidth is more than half a critical band, there is the possibility that the dominant signal will cause the ear's critical band to be offset from the coder's subband so that some of the undesired distortion products outside the ear's critical bandwidth are not masked. These effects are most objectionable at low frequencies where the ear's critical band is narrower.

Transform coding performance depends upon several factors, including the signal sample block length, transform coding errors, and aliasing cancellation.

## Block Length

Inasmuch as the transform function must wait for the receipt of all signal samples in the entire block before performing the transform, the fastest theoretical time delay in an encode/decode system is twice the time period of the signal sample block. In practical systems, computation adds further delays such that the actual time delay is likely to be three or four times the time period of the signal sample block. If the encode/decode system must operate in an environment requiring a short propagation delay, a short block length is therefore required.

As block lengths become shorter, transform encoder and decoder performance is adversely affected not only by the consequential widening of the frequency bins, but also by degradation of the response characteristics of the bandpass filter frequency bins: (1) decreased rate of transition band rolloff, and (2) reduced level of stopband rejection. This degradation in filter performance results in the undesired creation of or contribution to transform coefficients in nearby frequency bins in response 5 to a desired signal. These undesired contributions are called sidelobe leakage.

Thus, depending on the sampling rate, a short block length may result in a nominal filter bandwidth exceeding the ear's critical bandwidth at some or all frequencies, particularly low frequencies. Even if the nominal subband bandwidth is narrower than the ear's critical bandwidth, degraded filter characteristics manifested as a broad transition band and/or poor stopband rejection may result in significant signal components outside

3

the ear's critical bandwidth. In such cases, greater constraints are ordinarily placed on other aspects of the system, particularly quantization accuracy.

Another disadvantage resulting from short sample block lengths is the exacerbation of transform coding errors, described in the next section.

## Transform Coding Errors

Discrete transforms do not produce a perfectly accurate set of frequency coefficients because they work with only a finite segment of the signal. Strictly speaking, discrete transforms produce a time-frequency representation of the input time-domain signal rather than a true frequency-domain representation which would require infinite transform lengths. For convenience of discussion here, however, the output of discrete transforms will be referred to as a frequency-domain representation. In effect, the discrete transform assumes the sampled signal only has frequency components whose periods are a submultiple of the finite sample interval. This is equivalent to an assumption that the finite-length signal is periodic. The assumption in general is not true. The assumed periodicity creates discontinuities at the edges of the finite time interval which cause the transform to create phantom high-frequency components.

One technique which minimizes this effect is to reduce the discontinuity prior to the transformation by weighting the signal samples such that samples near the edges of the interval are close to zero. Samples at the center of the interval are generally passed unchanged, i.e., weighted by a factor of one. This weighting function is called an "analysis window" and may be of any shape, but certain windows contribute more favorably to subband filter performance.

As used herein, the term "analysis window" refers merely to the windowing function performed prior to application of the forward transform. As will be discussed below, the design of an analysis window used in the invention is constrained by synthesis window design considerations. Therefore, design and performance properties of an "analysis window" as that term is commonly used in the art may differ from such analysis windows as implemented in this invention.

While there is no single criteria which may be used to assess a window's quality, general criteria include steepness of transition band rolloff and depth of stopband rejection. In some applications, the ability to trade steeper rolloff for deeper rejection level is a useful quality.

The analysis window is a time-domain function. If no other compensation is provided, the recovered or "synthesized" signal will be distorted according to the shape of the analysis window. There are several compensation methods. For example:

(a) The recovered signal interval or block may be multiplied by an inverse window, one whose weighting factors are the reciprocal of those for the analysis window. A disadvantage of this technique is that it clearly requires that the analysis window not go to zero at the edges.

(b) Consecutive input signal blocks may be overlapped. By carefully designing the analysis window such that two adjacent windows add to unity across the overlap, the effects of the window will be exactly compensated. (But see the following paragraph.) When used with certain types of transforms such as the Discrete Fourier Transform (DFT), this technique increases the number of bits required to represent the signal since the portion of the signal in the overlap interval must be transformed and transmitted twice. For these types of transforms, it is desirable to design the window with an overlap interval as small as possible.

(c) Signal synthesis or decoding performed in a decoder may also require synthesis filtering. As discussed in Crochiere, "A Weighted Overlap-Add Method of Short-Time Fourier Analysis/Synthesis," IEEE Trans. Acoust., Speech, and Signal Proc., vol. ASSP-28, February, 1980, pp. 99-102, synthesis interpolation filtering can be implemented more efficiently by a synthesis-window weighted overlap-add method. Thus, some subband coders implemented with transforms, including one used in a preferred embodiment of the present invention, use synthesis windowing with overlap-add. Further, quantizing errors may cause the inverse transform to produce a time-domain signal which does not go to zero at the edges of the finite time interval. Left alone, these errors may distort the recovered time-domain signal most strongly within the window overlap interval. A synthesis window can be used to shape each synthesized signal block at its edges. In this case, the signal will be subjected to an analysis and a synthesis window, i.e., the signal will be weighted by the product of the two windows. Therefore, both windows must be designed such that the product of the two will sum to unity across the overlap. See the discussion in the previous paragraph.

Short transform sample blocks impose greater compensation requirements on the analysis and synthesis windows. As the transform sample blocks become shorter there is more sidelobe leakage through the filter's transition band and stopband. A well shaped analysis window reduces this leakage.

Sidelobe leakage is undesirable because it causes the transform to create spectral coefficients which misrepresent the frequency of signal components outside the filter's passband. This misrepresentation is a distortion called aliasing.

## Aliasing Cancellation

The Nyquist theorem holds that a signal may be accurately recovered from discrete samples when the interval between samples is no larger than one-half the period of the signal's highest frequency component. When the sampling rate is below this Nyquist rate, higher-frequency components are misrepresented as lower-frequency components. The lower-frequency component is an "alias" for the true component.

Subband filters and finite digital transforms are not perfect passband filters. The transition between the passband and stopband is not infinitely sharp, and the attenuation of signals in the stopband is not infinitely great. As a result, even if a passband-filtered input signal is sampled at the Nyquist rate suggested by the passband cut-off frequency, frequencies in the transition band above the cutoff frequency will not be faithfully represented.

It is possible to design the analysis and synthesis filters such that aliasing distortion is automatically cancelled by the inverse filter. Quadrature Mirror Filters in the time domain possess this characteristic. The transform coder technique used in a preferred embodiment of the present invention, which is discussed in Johnson and Bradley, "Adaptive Transform Coding Incorporating Time Domain Aliasing Cancellation," <u>Speech Communications</u>, vol 6, North Holland: Elsevier Science Publishers, 1987, pp. 299-308, also cancels aliasing distortion.

Suppressing the audible consequences of aliasing distortion in transform coders becomes more difficult as the sample block length is made shorter. As explained above, shorter sample blocks degrade filter performance: the passband bandwidth increases, the passband-stopband transition becomes less sharp, and the stopband rejection deteriorates. As a result, aliasing becomes more pronounced. If the alias components are coded and decoded with insufficient accuracy, these coding errors prevent the inverse transform from completely cancelling aliasing distortion. The residual aliasing distortion will be audible unless the distortion is psychoacoustically masked. With short sample blocks, however, some transform frequency bins may have a wider passband than the auditory critical bands, particularly at low frequencies where the ear's critical bands have the greatest resolution. Consequently, alias distortion may not be masked. One way to minimize the distortion is to increase quantization accuracy in the problem subbands, but that increases the required bit rate.

## Bit-rate Reduction Techniques

The two factors listed above (Nyquist sample rate and quantizing errors) should dictate the bit-rate requirements for a specified quality of signal transmission or storage. Techniques may be employed, however, to reduce the bit rate required for a given signal quality. These techniques exploit a signal's redundancy and irrelevancy. A signal component is redundant if it can be predicted or otherwise provided by the receiver. A signal component is irrelevant if it is not needed to achieve a specified quality of representation. Several techniques used in the art include:

(1) Prediction: a periodic or predictable characteristic of a signal permits a receiver to anticipate some component based upon current or previous signal characteristics.

(2) Entropy coding: components with a high probability of occurrence may be represented by abbreviated codes. Both the transmitter and receiver must have the same code book. Entropy coding and prediction have the disadvantages that they increase computational complexity and processing delay. Also, they inherently provide a variable rate output, thus requiring buffering if used in a constant bitrate system.

(3) Nonuniform coding: representations by logarithms or nonuniform quantizing steps allow coding of large signal values with fewer bits at the expense of greater quantizing errors.

(4) Floating point: floating-point representation may reduce bit requirements at the expense of lost precision. Block-floating-point representation uses one scale factor or exponent for a block of floating-point mantissas, and is commonly used in coding time-domain signals. Floating point is a special case of nonuniform coding.

(5) Bit allocation: the receiver's demand for accuracy may vary with time, signal content, strength, or frequency. For example, lower frequency components of speech are usually more important for comprehension and speaker recognition, and therefore should be transmitted with greater accuracy than higher frequency components. Different criteria apply with respect to music signals. Some general bit-allocation criteria are:

(a) Component variance: more bits are allocated to transform coefficients with the greatest level of AC power.

(b) Component value: more bits are allocated to transform coefficients which represent frequency bands with the greatest amplitude or energy.

(c) Psychoacoustic masking: fewer bits are allocated to signal components whose quantizing errors are masked (rendered inaudible) by other signal components. This method is unique to those applications where audible signals are intended for human perception. Masking is understood best with respect to single-tone signals rather than multiple-tone signals and complex waveforms such as music signals.

## SUMMARY OF PROBLEM

Although the foregoing discussion applies to subband coders implemented with either a true subband filter bank or with a time-domain to frequency-domain transform, most of the following summary pertains more particularly to transform-implemented coders in order to simplify the discussion and to more clearly identify the problem in relation to a preferred embodiment of the present invention.

Subband coding with adaptive bit allocation by subband is known from Tribolet and Crochiere, however, this coding technique has several limitations which make it unsuitable for use in a low time-delay encoder/decoder system for high-quality audio signals such as music. First, the coding technique is not well suited for high-quality music because it relies upon characteristics of voiced and non-voiced speech to adapt bit allocation and quantizing step size.

Second, the encoded signal includes overhead bits in the form of side information which is required by a receiver/decoder to determine subband bit allocations.

Third, the coding technique does not fully exploit psychoacoustic masking effects because it allocates bits according to only transform coefficient variances. The bit allocation does not take account of psychoacoustic masking thresholds which vary with signal content. Furthermore, the bit allocation technique does not allocate bits to subbands adjacent to those subbands with large spectral components where spectral leakage is likely, therefore high filter bank selectivity is required.

Fourth, although higher filter selectivity can be realized by using longer analysis windows, the coding technique is constrained to use windows no longer than the transform block length to avoid time-domain aliasing. Hence, the required filter bank selectivity for a 3 kHz bandwidth signal is achieved by using a sample block length of 256 samples sampled at a rate of 8 kHz. In order to achieve the same filter bank selectivity for a 15 kHz bandwidth signal, the coder must use a sample block length of at least 1280 samples sampled at a rate of 40 kHz. Therefore, the block delays through an encoder/decoder system implemented by the Tribolet and Crochiere coding technique is at least 64 msec. The total signal-propagation delay is further increased by the time required to perform encoding and decoding.

This propagation delay is too long for use in applications requiring real-time aural feedback to a human operator (such as for broadcast audio). When a person's own voice is returned to his ears after a delay, speech disturbances are created unless the delay is kept very short. See for example "Effects of Delayed Speech Feedback" by Bernard S. Lee, Journal of the Acoustical Soc. of America, vol. 22, no. 6, November 1950, pp. 824-826. Lee showed that delays in aural feedback of 40 msec caused noticeable speech disturbances, and extrapolation of his empirical data suggests the delay should be no more than approximately 10 msec to avoid such speech disturbances.

Fifth, the encoded signal is vulnerable to corruption by noise encountered during transmission or storage. The coding technique makes no provision for error detection and correction, nor for formatting the encoded signal in such a way to bound the effects of such noise.

The coding technique taught by Johnson and Bradley improves upon the Tribolet and Crochiere coding technique by utilizing a time-domain to frequency-domain transform which provides time-domain aliasing cancellation. This cancellation allows a coder to use an analysis window which is longer than the transform length, thereby improving filter bank selectivity. But this coding technique is intended to code speech signals and is not well suited for coding high-quality music signals. It relies upon spectral characteristics learned during a "training phase" which analyzes a signal segment.

Furthermore, although higher filter selectivity can be realized by using longer analysis windows, the Johnson and Bradley coding technique cannot use windows longer than twice the transform block length. In the implementation taught by Johnson and Bradley, however, a coder is not able to use the longest possible analysis window. A suboptimal window shorter than the theoretical maximum must be used in order to reduce the size of a quantization code book to a practical length. Hence, the required filter bank selectivity for a 3 kHz bandwidth signal is achieved by using a sample block length of 128 samples sampled at a rate of 8 kHz. In order to achieve the same filter bank selectivity for a 15 kHz bandwidth signal, the coder must use a sample block of at least 640 samples sampled at a rate of 40 kHz. Therefore, the block delays through an encoder/decoder system implemented by the Johnson and Bradley coding technique is at least 32 msec. The total signal-propagation delay is further increased by the time required to perform encoding and decoding. As discussed above, this propagation delay is unsuitable for use in applications requiring real-time aural feedback to a human operator.

In patent application EP-A-0 176 243, Koh and Xydeas disclose an adaptive bit allocation technique which may be used in transform and subband coders. The allocation technique does not require any overhead in the encoded signal in the form of side information, but it does not fully exploit psychoacoustic masking effects because its bit allocation, like that of Tribolet and Crochiere, is made according to only transform coefficient variances. In addition, the coding technique is intended to code speech signals and is not well suited for coding high-quality music signals because it allocates bits to subbands according to a fixed allocation pattern constructed in response to a training signal segment.

Furthermore, the required filter bank selectivity for a 7 kHz bandwidth signal is achieved by using a sample block length of 128 samples sampled at a rate of 14 kHz. In order to achieve the same filter bank selectivity for a 15 kHz bandwidth signal, the coder must use a sample block of at least 274 samples sampled at a rate of 30 kHz. Therefore, the block delays through an encoder/decoder system implemented with the Koh and Xydeas adaptive bit allocation technique is at least 18 msec. The total signal-propagation delay is further increased by the time required to perform encoding and decoding. As discussed above, this propagation delay is unsuitable for use in applications requiring real-time aural feedback to a human operator.

In patent application EP-A-0 289 080, Veldhuis, Vand Der Waal, and Breeuwer disclose a subband coding technique implemented with a QMF filter bank. This coding technique is intended for high-quality music encoding. Adaptive bit allocation does not require any overhead in the encoded signal in the form of side information, but it does not fully exploit psychoacoustic masking effects because it allocates bits according to subband audibility threshold which is fixed and independent of signal content. Bit allocation is not always adaptive because bits are reallocated from one subband to another only when a subband is found to be inaudible under all conditions.

Furthermore, bit allocation is suboptimal because the coding technique is unable to allocate available bits whenever the number of available bits is less than the total bits required to allocate to all samples in the subband selected for allocation. The technique also does not allocate bits to subbands adjacent to those subbands with large spectral components where spectral leakage is likely.

The coding technique disclosed by Velduis, et al. is also unsuitable for use in applications requiring real-time aural feedback to a human operator. Bit allocation is based upon information derived from a block of signal samples 46 msec in length. Hence, the block delays through an encoder/decoder system implemented with the Velduis coding technique is at least 92 msec. The total signal-propagation delay is further increased by the time required to perform encoding and decoding. As discussed above, this propagation delay is unsuitable for use in applications requiring real-time aural feedback to a human operator.

## Disclosure of Invention

It is an object of this invention to provide for the digital processing of wideband audio information, particularly music, using an encode/decode apparatus having a signal propagation delay short enough as to be usable for real-time aural feedback to a human operator and having a high degree of immunity against signal corruption by transmission paths.

The object is achieved with an encoder and a decoder according to claims 1 and 34, respectively.

Additional objects are achieved by specific embodiments of the invention according to the remaining claims, such as:

to provide such an encode/decode apparatus suitable for the high-quality transmission or storage and reproduction of music, wherein the quality of reproduction is suitable, for example, for broadcast audio links;

to provide a quality of reproduction subjectively as good as that obtainable from Compact Discs;

to provide such an encode/decode apparatus embodied in a digital processing system having a low bit rate;

to provide such an encode/decode apparatus embodied in a digital processing system requiring a small amount of space to store the encoded signal;

to provide an encode/decode apparatus embodied in a digital processing system employing transform coding having short transform blocks to achieve a short signal propagation delay but which provides the high quality reproduction of music while employing a low bit rate;

to compensate for the negative effects on transform coder performance resulting from the use of short transform blocks;

to provide improved psychoacoustic-masking techniques in a transform coder processing music signals; and

to provide techniques for psychoacoustically compensating for otherwise audible distortion artifacts in a transform coder.

Further details of the above objects and still other objects of the invention are set forth throughout this document, particularly in the section describing the Modes for Carrying Out the Invention, below.

In accordance with the teachings of the present invention, an encoder provides for the digital encoding of wideband audio information, the encoder having a short signal propagation delay. The wideband audio signals are sampled and quantized into time-domain sample blocks, the sample blocks having a time period resulting in a signal propagation delay short enough so that an encode/decode system employing the encoder is usable for real-time aural feedback to a human operator. Each sample block is then modulated by an analysis window. Frequency-domain spectral components are then generated in response to the analysis-window weighted time-domain sample block. A transform coder having adaptive bit allocation nonuniformly quantizes each transform coefficient, and those coefficients are assembled into a digital output having a format suitable for storage or transmission. Error correction codes may be used in applications where the transmitted signal is subject to noise or other corrupting effects of the communication path.

Also in accordance with the teachings of the present invention, a decoder provides for the high-quality reproduction of digitally encoded wideband audio signals encoded by the encoder of the invention. The decoder receives the digital output of the encoder via a storage device or transmission path. It derives the nonuniformly coded spectral components from the formatted digital signal and reconstructs the frequency-domain spectral components therefrom. Time-domain signal sample blocks are generated in response to frequency-domain spectral components by means having characteristics inverse to those of the means in the encoder which generated the frequency-domain spectral components. The sample blocks are modulated by a synthesis window. The synthesis window has characteristics such that the product of the synthesis-window response and the response of the analysis-window in the encoder produces a composite response which sums to unity for two adjacent overlapped sample blocks. Adjacent sample blocks are overlapped and added to cancel the weighting effects of the analysis and synthesis windows and recover a digitized representation of the time-domain signal which is then converted to a high-quality analog output.

Further in accordance with the teachings of the present invention, an encoder/decoder system provides for the digital encoding and high-quality reproduction of wideband audio information, the system having a short signal propagation delay. In the encoder portion of the system, the analog wideband audio signals are sampled and quantized into time-domain sample blocks, the sample blocks having a time period resulting in a signal propagation delay short enough so that an encode/decode system employing the encoder is usable for real-time aural feedback to a human operator. Each sample block is then modulated by an analysis window. Frequency-domain spectral components are then generated in response to the analysis-window weighted time-domain sample block. Nonuniform spectral coding, including adaptive bit allocation, quantizes each spectral component, and those components are assembled into a digital format suitable for storage or transmission over communication paths susceptible to signal corrupting noise. The decoder portion of the system receives the digital output of the encoder via a storage device or transmission path. It derives the nonuniformly coded spectral components from the formatted digital signal and reconstructs the frequency-domain spectral components therefrom. Time-domain signal sample blocks are generated in response to frequency-domain transform coefficients by means having characteristics inverse to those of the means in the encoder which generated the frequency-domain transform coefficients. The sample blocks are modulated by a synthesis window. The synthesis window has characteristics such that the product of the synthesis-window response and the response of the analysis-window in the encoder produces a composite response which sums to unity for two adjacent overlapped sample blocks. Adjacent sample blocks are overlapped and added to cancel the weighting effects of the analysis and synthesis windows and recover a digitized representation of the time-domain signal which is then converted to a high-quality analog output.

In an embodiment of the encoder of the present invention, a discrete transform generates frequency-domain spectral components in response to the analysis-window weighted time-domain sample blocks. Preferably, the discrete transform has a function equivalent to the alternate application of a modified Discrete Cosine Transform (DCT) and a modified Discrete Sine Transform (DST). In an alternative embodiment, the discrete transform is implemented by a Discrete Fourier Transform (DFT), however, virtually any time-domain to frequency-domain transform can be used.

In a preferred embodiment of the invention for a two-channel encoder, a single FFT is utilized to simultaneously calculate the forward transform for one signal sample block from each channel. In a preferred embodiment of the invention for a two-channel decoder, a single FFT is utilized to simultaneously calculate the inverse transform for two transform blocks, one from each of the two channels.

In the preferred embodiments of the encoder and decoder, the sampling rate is 44.1 kHz. While the sampling rate is not critical, 44.1 kHz is a suitable sampling rate and it is convenient because it is also the sampling rate used for Compact Discs. An alternative embodiment employs a 48 kHz sampling rate. In the preferred embodiment employing the 44.1 kHz sampling rate, the nominal frequency response extends to 15 kHz and the time-domain sample blocks have a length of 128 samples to provide an acceptably low signal-propagation delay so that the system is usable for providing real-time aural feedback to a human operator. The overall encode/decode system is assumed to have a delay of about three times the sample block period or about 10 milliseconds (msec) or less which is sufficiently short to overcome speech disturbance problems. In the preferred embodiment, the serial bit rate of the encoder output is in the order of 192 kBits per second (including overhead information such as error correction codes). Other bit rates yielding varying levels of signal quality may be used without departing from the basic spirit of the invention.

In a preferred embodiment of the encoder, the nonuniform transform coder computes a variable bit-length code word for each transform coefficient, which code-word bit length is the sum of a fixed number of bits and a variable number of bits determined by adaptive bit allocation based on whether, because of current signal content, noise in the subband is less subject to psychoacoustic masking than noise in other subbands. The fixed number of bits are assigned to each subband based on empirical observations regarding psychoacoustic-masking effects of a single-tone signal in the subband under consideration. The assignment of fixed bits takes into consideration the poorer subjective performance of the system at low frequencies due to the greater selectivity of the ear at low frequencies. Although masking performance in the presence of complex signals ordinarily is better than in the presence of single tone signals, masking effects in the presence of complex signals are not as well understood nor are they as predictable. The system is not aggressive in the sense that most of the bits are fixed bits and a relatively few bits are adaptively assigned. This approach has several advantages. First, the fixed bit assignment inherently compensates for the undesired distortion products generated by the inverse transform because the empirical procedure which established the required fixed bit assignments included the inverse transform process. Second, the adaptive bit-allocation algorithm can be kept relatively simple. In addition, adaptively-assigned bits are more sensitive to signal transmission errors occurring between the encoder and decoder since such errors can result in incorrect assignment as well as incorrect values for these bits in the decoder.

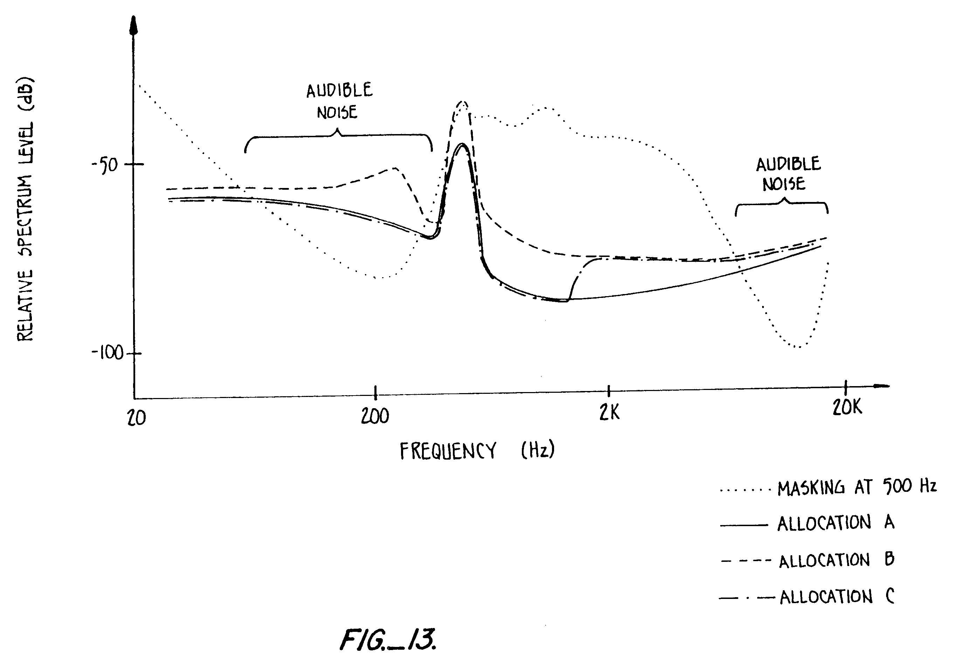

The empirical technique for allocating bits in accordance with the invention may be better understood by reference to Figure 13 which shows critical band spectra of the output noise and distortion (e.g., the noise and distortion shown is with respect to auditory critical bands) resulting from a 500 Hz tone (sine wave) for three different bit allocations compared to auditory masking. The Figure is intended to demonstrate an empirical approach rather than any particular data.

Allocation A (the solid line) is a reference, showing the noise and distortion products produced by the 500 Hz sine wave when an arbitrary number of bits are allocated to each of the transform coefficients. Allocation B (the short dashed line) shows the noise and distortion products for the same relative bit allocation as allocation A but with 2 fewer bits per transform coefficient. Allocation C (the long dashed line) is the same as allocation A for frequencies in the lower part of the audio band up to about 1500 Hz. Allocation C is then the same as allocation B for frequencies in the upper part of the audio band above about 1500 Hz. The dotted line shows the auditory masking curve for a 500 Hz tone.

It will be observed that audible noise is present at frequencies below the 500 Hz tone for all three cases of bit allocation due to the rapid fall off of the masking curve: the noise and distortion product curves are above the masking threshold from about 100 Hz to 300 or 400 Hz. The removal of two bits (allocation A to allocation B) exacerbates the audible noise and distortion; adding back the two bits over a portion of the spectrum including the region below the tone, as shown in allocation C, restores the original audible noise and distortion levels. Audible noise is also present at high frequencies, but does not change as substantially when bits are removed and added because at that extreme portion of the audio spectrum the noise and distortion products created by the 500 Hz tone are relatively low.

By observing the noise and distortion created in response to tones at various frequencies for various bit allocations, bit lengths for the various transform coefficients can be allocated that result in acceptable levels of noise and distortion with respect to auditory masking throughout the audio spectrum. With respect to the example in Figure 13, in order to lower the level of the noise and distortion products below the masking threshold in the region from about 100 Hz to 300 or 400 Hz, additional bits could be added to the reference allocation for the transform coefficient containing the 500 Hz tone and nearby coefficients until the noise and distortion dropped below the masking threshold. Similar steps would be taken for other tones throughout the audio spectrum until the overall transform-coefficient bit-length allocation resulted in acceptably low audible noise in the presence of tones, taken one at a time, throughout the audio spectrum. This is most easily done by way of computer simulations. The fixed bit allocation assignment is then taken as somewhat less by removing one or more bits from each transform coefficient across the spectrum (such as allocation B). Adaptively allocated bits are added to reduce the audible noise to acceptable levels in the problem regions as required (such as allocation C). Thus, empirical observations regarding the increase and decrease of audible noise with respect to bit allocation such as in the example of Figure 13 form the basis of the fixed and adaptive bit allocation scheme of the present invention.

In a preferred embodiment of the encoder, the nonuniformly quantized transform coefficients are expressed by a block-floating-point representation comprised of block exponents and variable-length code words. As described above, the variable-length code words are further comprised of a fixed bit-length portion and a variable length portion of adaptively assigned bits. For each signal sample block, the encoded signal is assembled into frames composed of exponents and the fixed-length portion of the code words followed by a string of all adaptively allocated bits. The exponents and fixed-length portion of code words are assembled separately from adaptively allocated bits to reduce vulnerability to noise burst errors.

Unlike many coders in the prior art, an encoder conforming to this invention need not transmit side information regarding the assignment of adaptively allocated bits in each frame. The decoder can deduce the correct assignment by applying the same allocation algorithm to the exponents as that used by the encoder.

In applications where frame synchronization is required, the encoder portion of the invention appends the formatted data to frame synchronization bits. The formatted data bits are first randomized to reduce the probability of long sequences of bits with values of all ones or zeroes. This is necessary in many environments such as T-1 carrier which will not tolerate such sequences beyond specified lengths. In asynchronous applications, randomization also reduces the probability that valid data within the frame will be mistaken for the block synchronization sequence. In the decoder portion of the invention, the formatted data bits are recovered by removing the frame synchronization bits and applying an inverse randomization process.

In applications where the encoded signal is subject to corruption, error correction codes are utilized to protect the most critical information, that is, the exponents and fixed portions of the lowest-frequency coefficient code words. Error codes and the protected data are scattered throughout the formatted frame to reduce sensitivity to noise burst errors, i.e., to increase the length of a noise burst required before critical data cannot be corrected.

The various features of the invention and its preferred embodiments are set forth in greater detail in a following section describing the Modes for Carrying Out the Invention and in the accompanying drawings.

## Brief Description of Drawings

Figures 1a and 1b are functional block diagrams illustrating the basic structure of the invention, particularly for the TDAC transform version of the invention.

Figures 2a through 2e are block diagrams showing the hardware architecture for one embodiment of the invention, particularly for the TDAC transform version of the invention.

Figures 3a and 3b are block diagrams showing in greater detail the serial-communications interface of the processor for a two-channel embodiment of the invention.

Figure 4 is a hypothetical graphical representation showing a time-domain signal sample block.

Figure 5 is a further hypothetical graphical representation of a time-domain signal sample block showing discontinuities at the edges of the sample block caused by a discrete transform assuming the signal within the block is periodic.

Figure 6a is a functional block diagram showing the modulation of a function X(t) by a function W(t) to provide the resulting function Y(t).

Figures 6b through 6d are further hypothetical graphical representations showing the modulation of a time-domain signal sample block by an analysis window.

Figure 7 is a flow chart showing the high level logic for the nonuniform quantizer utilized in the invention.

Figure 8 is a flow chart showing more detailed logic for the adaptive bit allocation process utilized in the invention.

Figure 9 is a graphical representation showing a representative TDAC coder filter characteristic response curve and two psychoacoustic masking curves.

Figure 10 is a graphical representation showing a TDAC coder filter characteristic response with respect to a 4 kHz psychoacoustic masking curve.

Figure 11 is a graphical representation showing a TDAC coder filter characteristic response with respect to a 1 kHz psychoacoustic masking curve.

Figure 12 is a graphical representation illustrating a composite masking curve derived from the psychoacoustic masking curves of several tones.

Figure 13 is a graphical representation showing the spectral levels of coding noise and distortion of an encoded 500 Hz tone for three different bit allocation schemes with respect to the psychoacoustic masking curve for a 500 Hz tone.

Figures 14a through 14e are hypothetical graphical representations illustrating a time-domain signal grouped into a series of overlapped and windowed time-domain signal sample blocks.

Figures 15a through 15d are hypothetical graphical representations illustrating the time-domain aliasing distortion created by the TDAC transform.

Figures 16a through 16g are hypothetical graphical representations illustrating the cancellation of time-domain aliasing by overlap-add during TDAC transform signal synthesis.

Figure 17 is a graphical representation comparing filter transition band rolloff and stopband rejection of a filter bank using an analysis-only window with that of a filter bank using the analysis window of an analysis-synthesis window pair designed for the preferred TDAC transform embodiment of the invention.

Figure 18 is a hypothetical graphical representation showing the overlap-add property of adjacent windowed blocks.

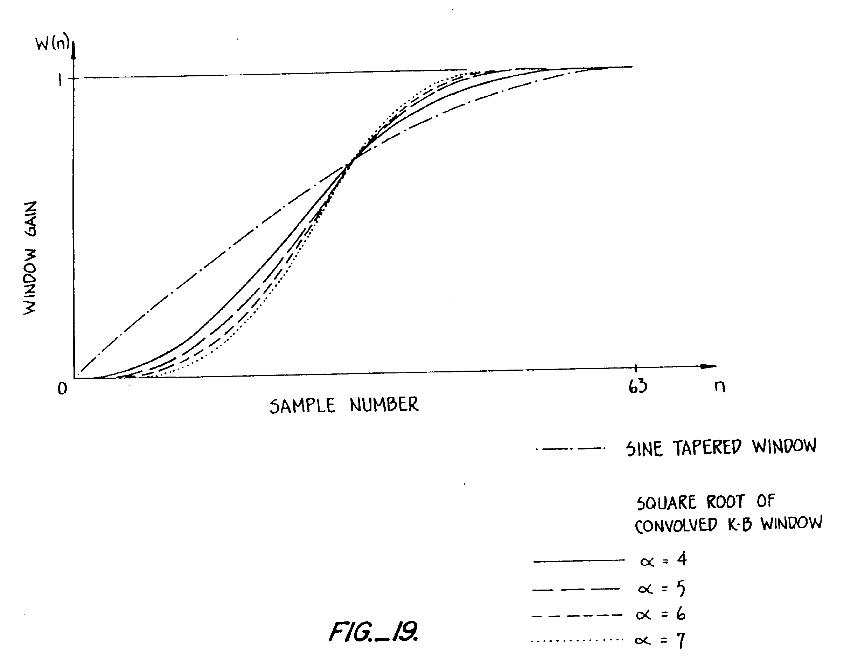

Figure 19 is a hypothetical graphical representation comparing the shape of several convolved Kaiser- Bessel analysis windows for a range of alpha values 4 to 7 with a sine-tapered window.

Figure 20 is a schematic representation illustrating the format of a frame of two encoded transform blocks without error correction, particularly for the TDAC transform version of the invention.

Figure 21 is a schematic representation illustrating the format of a frame of two encoded transform blocks with error correction codes, particularly for the TDAC transform version of the invention.

Figures 22a and 22b are functional block diagrams illustrating the basic structure of the invention, particularly for the DFT version of the invention.

Figure 23 is a graphical representation comparing the shapes of two coder analysis windows for the TDAC transform and DFT coders.

Figure 24 is a graphical representation comparing the characteristic filter response of a TDAC transform coder using windows with 100% overlap to the response of a DFT coder using windows with 25% overlap.

Figure 25 is a schematic representation illustrating the format of a frame of two encoded transform blocks without error correction, particularly for the DFT version of the invention.

Figure 26 is a schematic representation illustrating the format of a frame of two encoded transform blocks with error correction codes, particularly for the DFT version of the invention.

Table I shows master exponents, subband grouping, and coefficient bit lengths for the TDAC transform coder.

Table II shows subband grouping and coefficient bit lengths for the DFT coder.

Modes for Carrying Out the Invention

## I. PREFERRED IMPLEMENTATION OF INVENTION

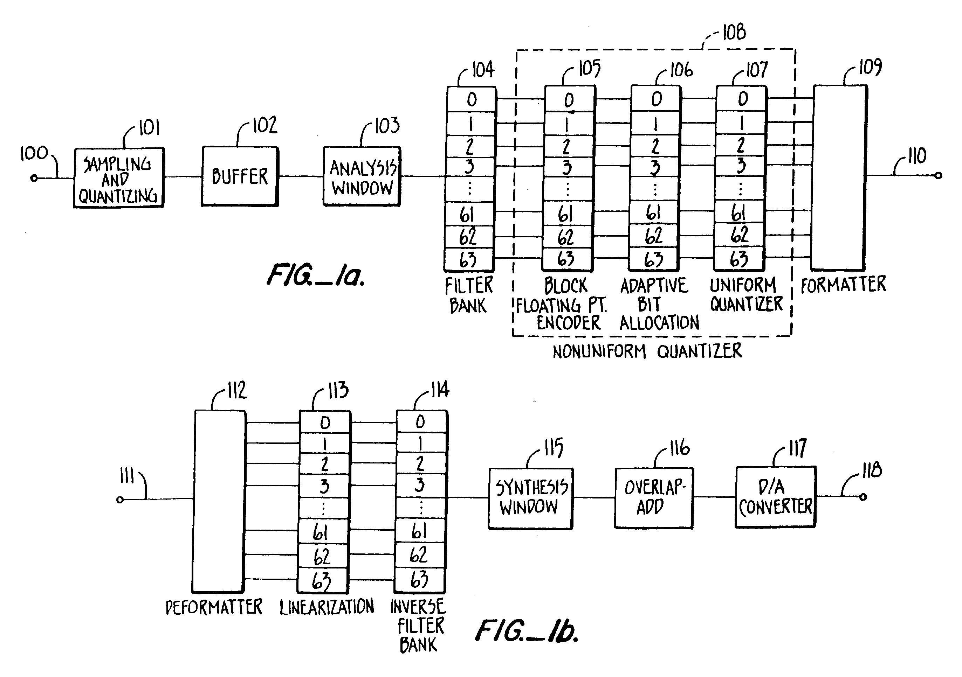

Figures 1a and 1b show the basic structure of the invention. The coder portion of the invention shown in Figure 1a comprises time-domain signal input 100, signal sampler and quantizer 101, signal sample buffer 102, analysis-window multiplier 103 which modulates each digitized time-domain signal block, digital filter bank 104 which transforms the quantized signal into frequency coefficients, block-floating-point encoder 105 which converts each integer-valued transform coefficient into a floating-point representation, adaptive bit allocator 106 which assigns bits to the representation of each transform coefficient according to the total signal's spectral composition, uniform quantizer 107 which rounds each transform coefficient to an assigned bit length, and formatter 109 which assembles the coded frequency coefficients into a bit stream for transmission or storage. Figure 1a depicts a transmission path 110, however, it should be understood that the encoded signal may be stored immediately for later use.

The decoder portion of the invention shown in Figure 1b comprises encoded bit-stream signal input 111, deformatter 112 which extracts each encoded frequency coefficient from the assembled bit stream, linearizer 113 which converts each encoded coefficient into an integer-valued transform coefficient, inverse digital filter bank 114 which transforms the transform coefficients into a time-domain -signal block, synthesis-window multiplier 115 which modulates the time-domain signal block, signal block overlap-adder 116 which recovers a digitized representation of the time-domain signal, analog signal generator 117, and analog signal output 118.

Any one of several discrete digital transforms may be used to implement the forward and inverse filter banks. The transform used in the preferred embodiment of the invention was first described in Princen and Bradley, "Analysis/Synthesis Filter Bank Design Based on Time Domain Aliasing Cancellation," IEEE Trans. on Acoust., Speech, Signal Proc., vol. ASSP-34, 1986, pp. 1153-1161. This technique is the time-domain equivalent of a critically sampled single-sideband analysis-synthesis system. This transform is referred to herein as Time-Domain Aliasing Cancellation (TDAC). The Discrete Fourier Transform (DFT) may be used in another embodiment of the invention. The preferred embodiment for the DFT version is discussed after the TDAC version has been fully described.

## A. Processing Hardware

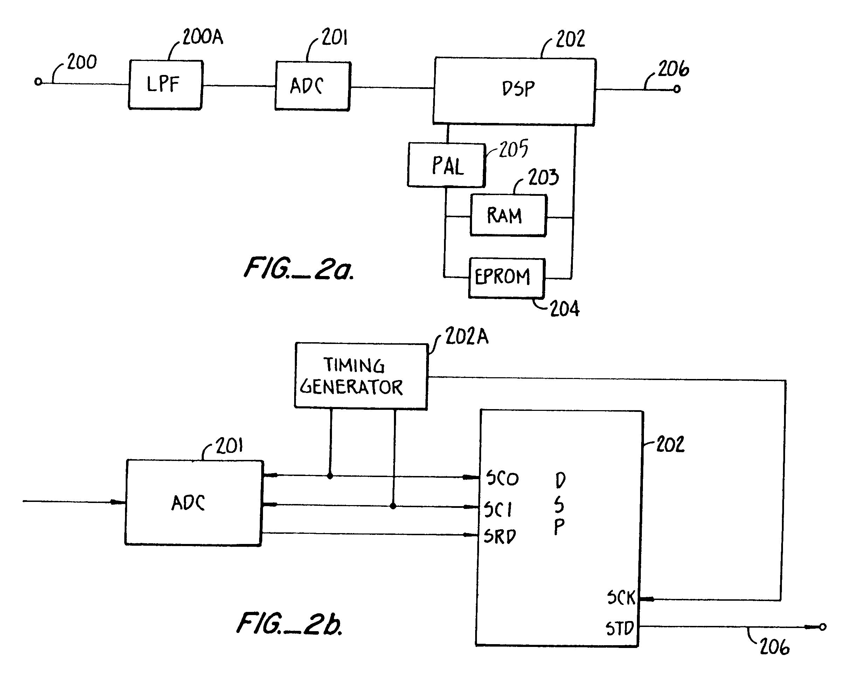

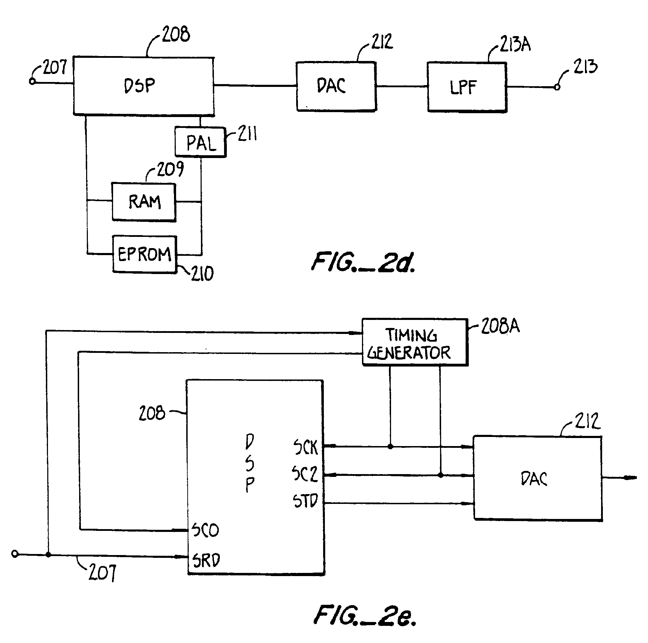

The basic hardware architecture for the TDAC transform version of the invention is illustrated in Figures 2a and 2b. Empirical studies have shown that, unless special measures are taken, transform computations must be performed to an accuracy of at least 20 significant bits to achieve stated performance objectives. One special measure permitting implementation of a coder utilizing 16-bit arithmetic is described later as part of the DFT embodiment.

A practical implementation of a preferred embodiment of a single-channel version of the invention, employing either a 44.1 kHz or a 48 kHz sample rate, utilizes a 16-bit analog-to-digital converter (ADC) with a cycle time of no more than 20 microseconds to quantize the input time-domain signal. Each 16-bit digitized sample is used to form the 16 most-significant bits of a 24-bit word which is used in subsequent computations. A Motorola DSP56001 24-bit digital-signal processor (DSP) operating at 20.5 MHz with no wait states is used to perform the required computations and to control the encode and decode processes. Static random access memory (RAM) provides program and data memory for the DSP. A 16-bit digital-to-analog converter (DAC) with a cycle time of no more than 20 microseconds is used to generate an analog signal from the decoded digital signal.

The encoder hardware architecture, shown in Figure 2a, is comprised of analog signal input 200, low-pass filter (LPF) 200A, ADC 201, DSP 202, static RAM 203, erasable programmable read-only memory (EPROM) 204, programmable array logic (PAL) 205, and encoded serial-signal output 206. LPF 200A (a low-pass filter which is not shown in Figure 1a) insures the input signal is bandwidth limited. ADC 201 digitizes (samples and quantizes) the incoming signal into a serial stream of 16-bit words. DSP 202 receives and buffers the serial stream of digitized samples, groups the samples into blocks, performs the calculations required to transform the blocks into the frequency domain, encodes the transform coefficients, formats the code words into a data stream, and transmits the encoded signal through serial data path 206. The programming and data work areas for the DSP are stored in one 24 kilobyte (KB) bank of static RAM 203 which is organized into 8,192 24-bit words. The DSP requires fast-access-time program memory which can be implemented more cheaply in RAM than it can be in programmable ROM. Consequently, EPROM 204 stores programming and static data in a compressed format which the DSP unpacks into a usable form into RAM 203 when the encoder is first powered on. PAL 205 allows the encoder to store program and data into a single 24 KB bank of RAM by translating program and data addresses generated by DSP 202 into specific address segments of RAM bank 203.

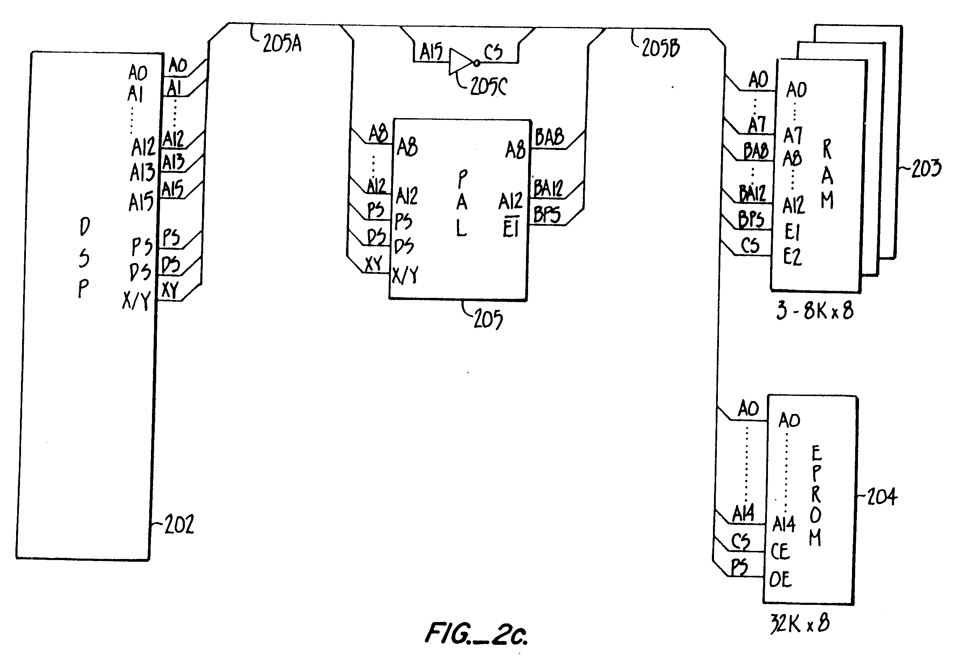

Figures 2b and 2c provide more detail on two DSP interfaces. Figure 2b shows the serial-communication interface for DSP 202, ADC 201, and serial data path 206. Timing generator 202A generates the receive clock, frame-synchronization, and transmit clock signals for the encoder. Line SC0 clocks a serial-bit stream of digitized input signal samples along line SRD from ADC 201 into DSP 202. Line SC1 provides the frame-synchronization signal to the ADC and the DSP which marks the beginning of each 16-bit word. Line SCK clocks a serial-bit stream of the encoded signal along line STD from the DSP to serial data path 206.

Figure 2c shows the memory addressing interface. PAL 205 translates addresses put on address bus 205A by DSP 202, and passes the translated addresses to bus 205B which connects to RAM 203 and EPROM 204. Memory for the Motorola DSP56001 is divided into three segments: program, X data, and Y data. The memory translation provided by PAL 205 permits these three segments to be mapped into one 24 KB bank of RAM. The actual addresses for each of these segments is determined by size and design of the encoder/decoder software. In one embodiment, 4 K words (4096 or $1000_{16}$ 24-bit words) of program memory are mapped into addresses $0000\text{-}0FFF_{16}$, 2 K words ($800_{16}$ of 24-bit words) of X data memory are mapped into addresses $1000_{16}\text{-}17FF_{16}$, and 2 K words of Y data memory are mapped into addresses $1800_{16}\text{-}1FFF_{16}$.

RAM 203 and EPROM 204 are mapped into separate address spaces. Inverter 205C allows DSP 202 to select either RAM or EPROM according the state of address line A15. When DSP 202 sets A15 high, inverter 205C sets the chip-select (CS) lines of RAM 203 and EPROM 204 low. Only EPROM 204 is selected when CS is low. When DSP 202 sets A15 low, inverter 205C sets the CS lines of RAM 203 and EPROM 204 high. Only static RAM 203 is selected when CS is high.

The decoder hardware architecture, shown in Figure 2d, is comprised of encoded serial-signal input path 207, DSP 208, static RAM 209, EPROM 210, PAL 211, DAC 212, LPF 213A, and analog signal output 213. DSP 208 receives and buffers the encoded signal, deformats the signal into the encoded transform coefficients, performs the calculations required to transform the coefficients into the time domain, groups the coefficients into time-domain blocks, overlap-adds the blocks into a time-domain sequence of digital samples, and transmits the digital samples in a serial-bit stream to DAC 212. The programming and data work areas for the DSP are stored in one 24 KB bank of static RAM 209 which is organized into 8,192 24-bit words. EPROM 210 stores in a compressed format programming and static data which the DSP unpacks into usable form into RAM 209 when the decoder is first powered on. PAL 211 allows the decoder to store program and data into a single 24 KB bank of RAM by translating program and data addresses generated by DSP 208 into specific address segments of RAM bank 209. DAC 212 generates an analog signal corresponding to the serial-data stream received from the DSP. LPF 213A (a low-pass filter which is not shown in Figure 1b) insures signal output 213 is free of any spurious high-frequency components created by the encode/decode process.

Figure 2e shows the serial-communication interface for DSP 208, serial-signal input path 207, and DAC 212. Timing generator 208A, using a phase-locked loop circuit to extract a timing reference from the encoded serial-bit input signal, generates the receive clock, frame-synchronization, and transmit clock signals for the decoder. Line SC0 clocks the encoded serial-bit signal along line SRD into DSP 208. Line SCK clocks a serial-bit stream of the decoded digitized signal samples along line STD from DSP 208 to DAC 212. Line SC2 provides a frame-synchronization signal to the DAC and to the DSP which marks the beginning of each 16-bit word. The interface between DSP 208 and the memory-address bus is implemented in the same manner as that described above for the encoder. See Figure 2c.

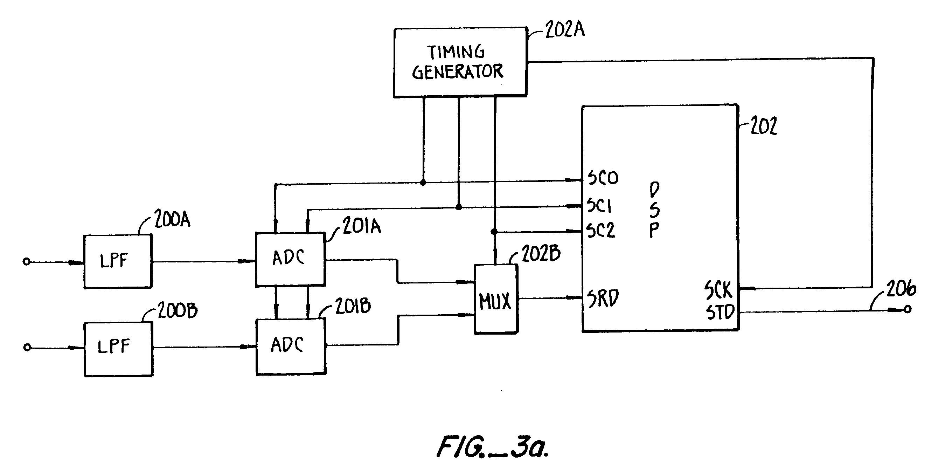

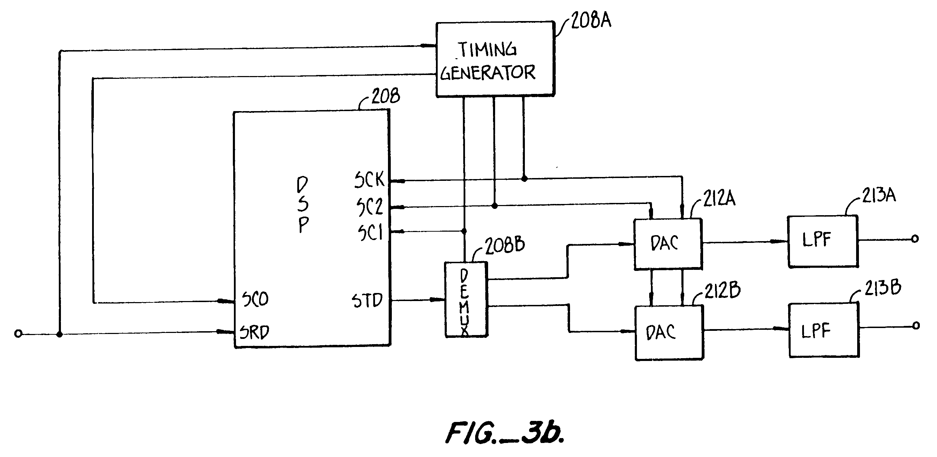

A two-channel encoder requires LPF 200A and 200B, and ADC 201A and 201B, connected as shown in Figure 3a. The interface between the DSP and ADC components operates in a manner similar to that described above for a one-channel encoder. Timing generator 202A provides an additional signal to line SC2 of the DSP at one-half the rate of the frame-synchronization signal to control multiplexer 202B and indicate to the DSP which of the two ADC is currently sending digitized data.

A two-channel decoder requires DAC 212A and 212B, and LPF 213A and 213B, connected as shown in Figure 3b. The interface between the DSP and DAC components operates in a manner similar to that described above for a one-channel decoder. Timing generator 208A provides an additional signal to line SC1 of the DSP at one-half the rate of the frame-synchronization signal to control demultiplexer 208B and indicate to the DSP which of the two DAC is currently receiving digital data.

The basic hardware architecture may be modified For example, one Motorola DSP56001 operating at 27 MHz with no wait states can implement a two-channel encoder or decoder. Additional RAM is required. One 24 KB bank is utilized for program memory. A second 24 KB bank is utilized for X data and Y data memory. No PAL is required for address translation when two banks of RAM are used.

Further, specialized hardware may be used to perform certain functions such as window modulation or the Fast Fourier Transform (FFT). The entire encoder/decoder may be implemented in a custom-designed integrated circuit. Many other possible implementations will be obvious to one skilled in the art.

## B. Input Signal Sampling and Windowing

In the TDAC embodiment of the invention, signal sampler and quantizer 101 is an analog-to-digital converter which quantizes the input signal into 16 bits which are subsequently padded on the right with 8 zero bits to form a 24-bit integer representation. All subsequent transform calculations are performed in 24-bit integer arithmetic. The analog input signal should be limited in bandwidth to at most 15 kHz (20 kHz for a 20 kHz bandwidth coder). This may be accomplished by a low-pass filter not shown in Figure 1a.

As discussed above, the length of the signal sample block created by signal sampling and quantizing means 101 is of critical importance. The length must be chosen to balance signal propagation delay with digital filter performance. The forward transform (digital filter bank 104) must wait for all of the block's samples before all transform coefficients may be calculated. A similar delay is experienced by the inverse transform (digital filter bank 114), waiting for all coefficients before the time-domain signal may be recovered. As a result, assuming both forward and inverse transforms may be performed in a period of time equal in magnitude to the block interval, the delay for a signal passing through the invention is three times the block length. Because the desired overall delay is no greater than approximately 10 milliseconds, the block length should not exceed 3.3 milliseconds.

It is desirable, however, to use as long a block as possible because shorter block lengths reduce the filter bandwidth and adversely affect the transition band rolloff and depth of stopband rejection. Therefore, the chosen block length should be as long as possible, subject to the 3.3 millisecond limitation discussed in the previous paragraph.

A music signal with at least Compact Disc (CD) quality has, in addition to other qualities, a bandwidth in excess of 15 kHz. From the Nyquist theorem, it is known that a 15 kHz bandwidth signal must be sampled at no less than 30 Khz. A sample rate of 44.1 Khz is chosen for the current embodiment of the invention because this rate is used in CD applications and such a choice simplifies the means necessary to use this invention in such applications. (This sample rate also supports an alternative 20 kHz bandwidth embodiment of the invention.) Given this sampling rate, a 3.3 millisecond block comprises 147 samples. Digital filter transform calculations are simplified, however, if the number of samples is a power of two. Consequently, the number of samples per block is reduced to 128 which establishes the block length at 2.9 milliseconds.

Other sampling rates, such as 48 kHz which is a rate common to many professional audio applications, may be utilized. If an alternate rate is chosen, the frequency separation between adjacent transform coefficients will be altered and the number of coefficients required to represent the desired signal bandwidth will change. The full effect that a change in sampling rate will have upon the implementation of the invention will be apparent to one skilled in the art.

Assuming the input signal is not a complex one, i.e., all imaginary components are zero, a frequency-domain transform of a 128 sample block produces at most 64 unique nonzero transform coefficients. Hence, the invention shown in Figures 1a and 1b is comprised of 64 frequency bins. In this implementation, the bandwidth of each bin is equal to 344.5 Hz (or 44.1 kHz / 128). (For some discrete transforms such as TDAC, bin 0, the DC or zero frequency component, has a bandwidth equal to half of this amount.) Only coefficients 0-45 are used to pass a 15.7 kHz signal. (Coefficients 0-62 are used in a 20 kHz version to pass a 21.5 kHz signal.) The additional high-frequency coefficients above the input signal bandwidth are used to minimize the adverse effects of quantizing errors upon aliasing cancellation within the design bandwidth. Note that it is assumed the input signal is band-limited to 15 kHz (or 20 kHz) and the final output signal is also band-limited to reject any aliasing passed in the highest coefficients.

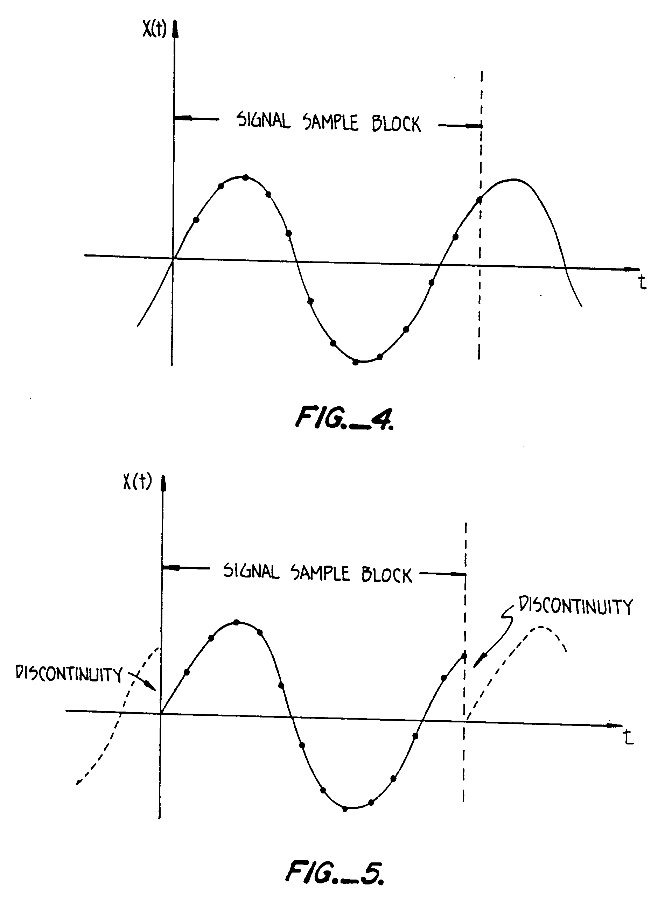

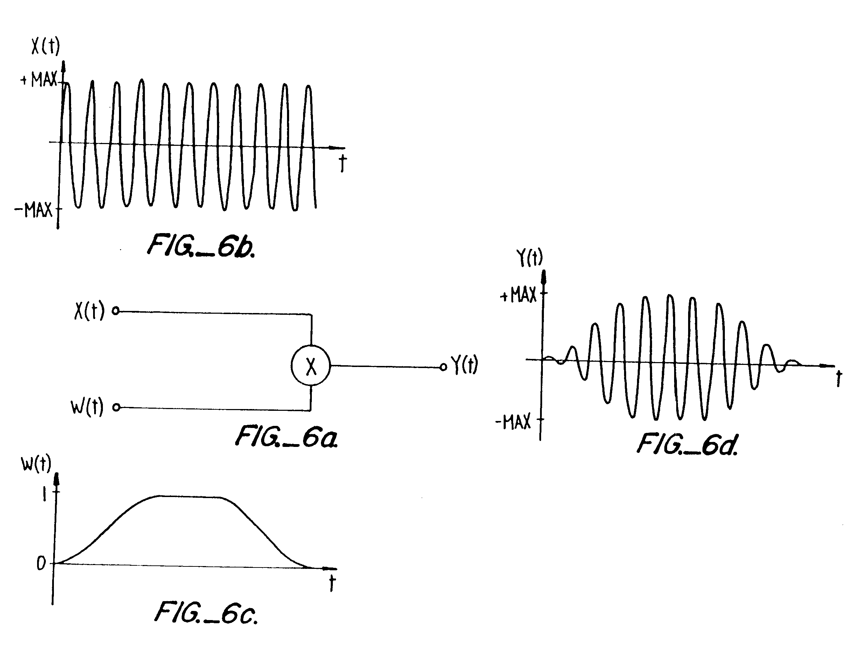

Unless the sample block is modified, a discrete transform will erroneously create nonexistent spectral components because the transform assumes the signal in the block is periodic. See Figure 4. These transform errors are caused by discontinuities at the edges of the block as shown in Figure 5. These discontinuities may be smoothed to minimize this effect. Figures 6a through 6d illustrate how a block is modified or weighted such that the samples near the block edges are close to zero. The multiplier circuit shown in Figure 6a modulates the sampled input signal x(t) shown in Figure 6b by the weighting function shown in Figure 6c. The resultant signal is shown in Figure 6d. This process is represented by box 103 in Figure 1a. This weighting function, called an analysis window, is a sample-by-sample multiplication of the signal sample block, and has been the subject of considerable study because its shape has profound affects upon digital filter performance. See, for example, Harris, "On the Use of Windows for Harmonic Analysis with the Discrete Fourier Transform," Proc. IEEE, vol. 66, 1978, pp. 51-83. Briefly, a good window increases the steepness of transition band rolloff for a given level of depth of stopband rejection, and permits correction of its modulation effects by overlapping and adding adjacent blocks. Window design is discussed below in more detail.

## C. Analysis Filter Bank - Forward Transform

A discrete transform implements digital filter bank 104 shown in Figure 1a. Filtering is performed by converting the time-domain signal sample blocks into a set of time varying spectral coefficients. The transform technique used in one embodiment of the invention is Time-Domain Aliasing Cancellation (TDAC).

TDAC utilizes a transform function which is equivalent to the alternate application of a modified Discrete Cosine Transform (DCT) with a modified Discrete Sine Transform (DST). The DCT, shown in equation 1, and the DST, shown in equation 2, are

$$C(k) = \sum_{n=0}^{N-1} x(n)\cdot\cos[2\pi k(\frac{n+m}{N})] \qquad \text{for } 0 \le k < N \qquad (1)$$

$$S(k) = \sum_{n=0}^{N-1} x(n)\cdot\sin[2\pi k(\frac{n+m}{N})] \qquad \text{for } 0 \le k < N \qquad (2)$$

where
$k$ = frequency coefficient number,
$n$ = input signal sample number,
$N$ = sample block length,
$m$ = phase term for TDAC,
$x(n)$ = quantized value of input signal x(t) at sample n,
$C(k)$ = DCT coefficient k, and
$S(k)$ = DST coefficient k.

The TDAC transform alternately produces one of two sets of spectral coefficients or transform blocks for each signal sample block. These transform blocks are of the form

$$\{C(k)\}_i = \left[ \begin{array}{ll} C(k) & \text{for } 0 \leq k < N/2 \\ 0 & \text{for } k = N/2 \end{array} \right. \tag{3}$$

$$\{S(k)\}_i = \left[ \begin{array}{ll} S(k) & \text{for } 1 \leq k \leq N/2 \\ 0 & \text{for } k = 0 \end{array} \right. \tag{4}$$

where
    $i$ = signal sample block number,
    $C(k)$ = DCT coefficient (see equation 1), and
    $S(k)$ = DST coefficient (see equation 2).

The computation algorithm used is the Fast Fourier Transform (FFT). See Cooley and Tukey, "An Algorithm for the Machine Calculation of Complex Fourier Series," Math. Comput., vol. 19, 1965, pp. 297-301. A single FFT can be used to perform the DCT and DST simultaneously by defining them respectively as the real and imaginary components of a single complex transform. This technique exploits the fact the FFT is a complex transform, yet both input signal sample blocks consist only of real-valued samples. By factoring these transforms into the product of one FFT and an array of complex constants, the DCT coefficients emerge from the transform as the set of real values and the DST coefficients are represented by the set of imaginary values. Therefore the DCT of one signal sample block can be concurrently calculated with the DST of another signal sample block by only one FFT followed by array multiplication and additions.

The basic technique of using one FFT to concurrently calculate two transforms is well known in the art and is described in Brigham, The Fast Fourier Transform, Englewood Cliffs, NJ: Prentice-Hall, Inc., 1974. Additional information regarding the concurrent calculation of the modified DCT and DST for the TDAC transform may be found in Lookabaugh, "Variable Rate and Adaptive Frequency Domain Vector Quantization of Speech," Stanford, CA: Stanford University, PhD Thesis, June, 1988.

This concurrent process is especially useful in two-channel applications where a transform block is generated concurrently for each channel, a DCT block for one channel and a DST block for the other channel. The coded blocks for a given channel alternate between the DCT and DST (see expression 5), and are always of the opposite type from that of the other channel's blocks. A pair of blocks, one for each channel, are transformed and formatted together.

Princen showed that with the proper phase component m (see equation 6) and a carefully designed pair of analysis-synthesis windows, the TDAC technique can accurately recover an input signal from an alternating sequence of cosine and sine transform blocks of the form

$$\{C(k)\}_0, \{S(k)\}_1, \{C(k)\}_2, \{S(k)\}_3, \tag{5}$$

where each transform block represents one time-domain signal sample block. This process is shown in Figures 14a-14e, 15a-15d, and 16a-16g.

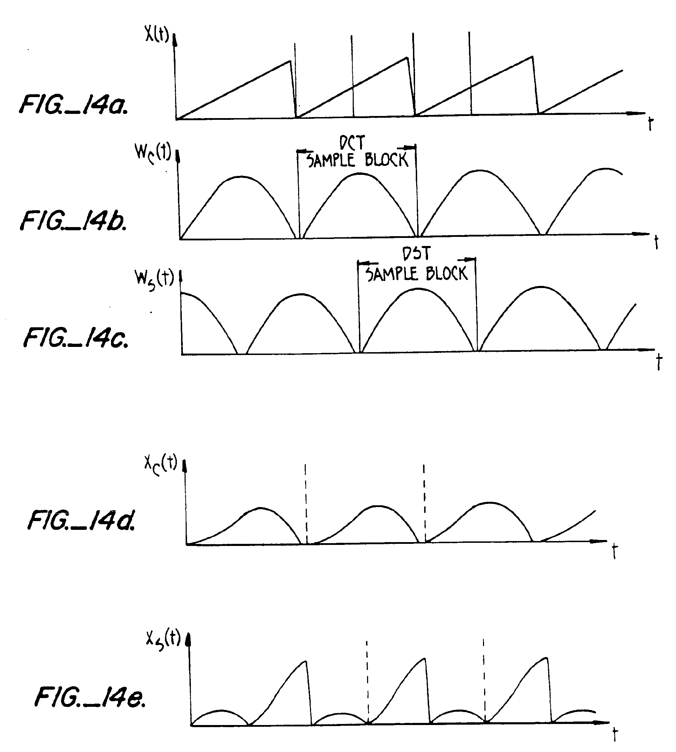

Referring to Figure 14a, it may be seen that quantized input signal x(t) is grouped into blocks. One set of blocks, modulated by the window function $W_c$ shown in Figure 14b, produces signal $x_c(t)$ shown in Figure 14d. Signal $x_c(t)$ is input to the DCT. Another set of blocks of the sampled input signal x(t), which overlap the first set by one-half block length, are windowed by window function $W_s$ shown in Figure 14c (which window function is identical to $W_c$ but shifted in time by one-half block length) producing signal $x_s(t)$ shown in Figure 14e and subsequently passed to the DST.

Using only the alternate DCT and DST transform blocks results in a loss of the information contained in the discarded half of the transform blocks. This loss produces a time-domain aliasing component, but the distortion may be cancelled by choosing the appropriate phase term m for equations 1 and 2, applying the forward transform to overlapped time-domain signal sample blocks, and by overlapping and adding adjacent time-domain signal sample blocks recovered by the inverse transform.

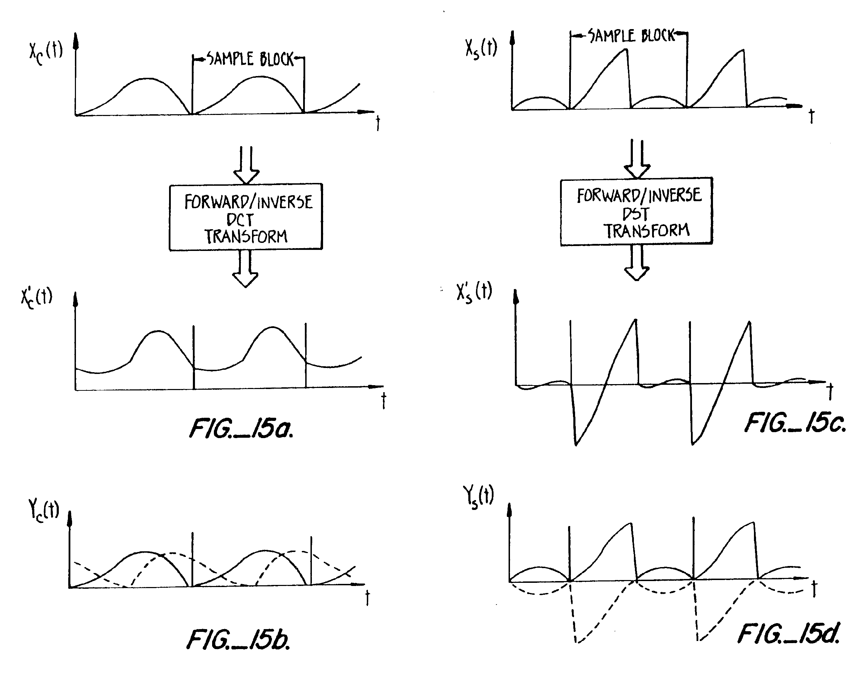

The phase term m in equations 1 and 2 controls the phase shift of the time-domain aliasing distortion. Figures 15a-15d and 16a-16g illustrate this distortion. Signal $y_c(t)$, recovered from the inverse DCT, is shown in Figure 15a. Figure 15b illustrates that the recovered signal is composed of two components: the original windowed signal (solid line), and time-domain aliasing distortion (dotted line). Figures 15c and 15d illustrate similar information for signal $y_s(t)$ recovered from the inverse DST. To cancel this alias distortion and accurately recover the original time-domain signal, TDAC requires the aliasing to be as follows. For the DCT, the time-domain alias component consists of the first half of the sampled signal reversed in time about the one-quarter point of the sample block, and the second half of the sampled signal reversed in time about the three-quarter point of the sample block. For the DST, the alias component is similar to that for the DCT except its amplitude is inverted in sign. See Figures 15b and 15d. The phase term required for alias cancellation is

$$m = \frac{(N/2 + 1)}{2} \quad (6)$$

where N = sample block length.

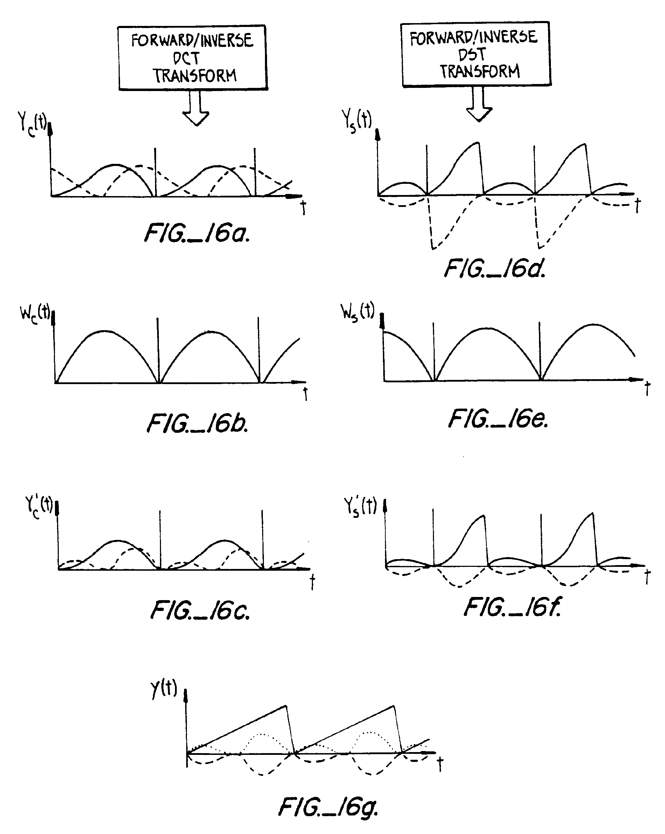

TDAC also requires application of a pair of carefully designed analysis-synthesis windows to overlapped signal sample blocks. The signal sample blocks must have a 100% overlap, i.e., 50% of a given block is overlapped by the previous block, and 50% of the same block is overlapped by the following block. Figures 16a-16g illustrate the overlapping of signal sample blocks and the resulting cancellation of alias distortion. Signals $y_c(t)$ and $y_s(t)$ shown in Figure 16a and 16d, recovered from the inverse DCT and DST, are modulated by window functions $W_c(t)$ and $W_s(t)$ respectively, shown in Figures 16b and 16e, to produce signals $\dot{y}_c(t)$ and $\dot{y}_s(t)$ shown in Figures 16c and 16f. When the overlapped blocks of these windowed signals are added, the alias components are cancelled and the resulting signal y(t) shown in Figure 16g is an accurate reconstruction of the original input signal x(t).

Window design and overlap-add used during the synthesis process is discussed below in more detail. It is sufficient at this point to notice that omitting half the transform blocks halves the required bit rate, but the 100% window overlap required for TDAC during signal synthesis doubles the required bit rate. Consequently, TDAC has a neutral effect upon the required bit rate.

## D. Nonuniform Quantization

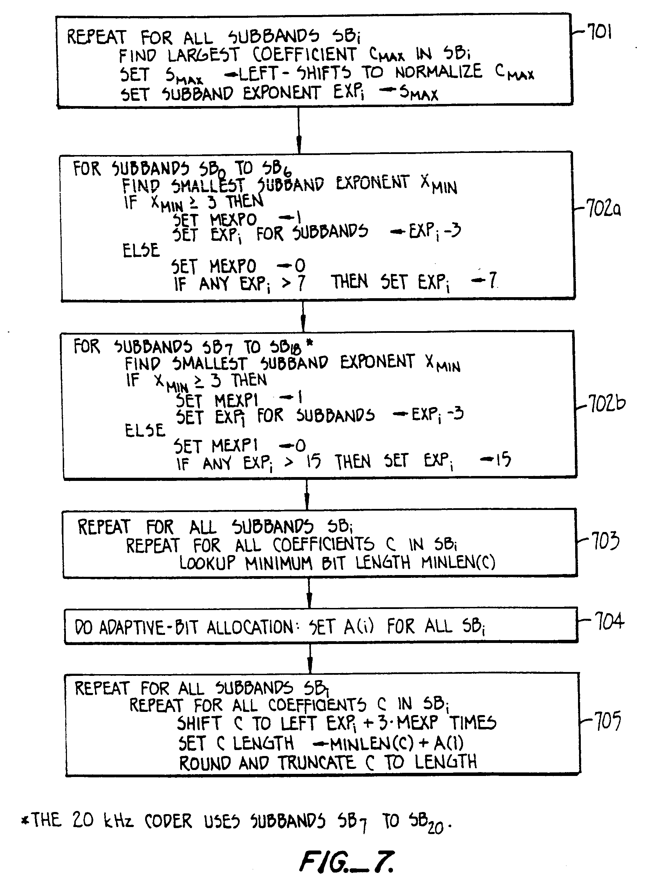

Each transform coefficient derived from filter bank 104 is encoded and grouped into subbands by nonuniform quantizer 108. (Table I shows the assignment of transform coefficients to subbands.) The nonuniform quantizer is composed of block-floating-point encoder 105, adaptive bit allocator 106, and uniform quantizer 107 shown in Figure la. As depicted in Figure 7, nonuniform quantization is comprised of five major sections: (1) calculating subband exponents, (2) determining the master exponents, (3) initially setting the bit length of each coefficient code word as a function of the coefficient's frequency, (4) adaptively allocating additional bits to specific code words, and (5) rounding and truncating the code word according to the bit length computed from the sum of the adaptive bit allocations and the minimum bit length based on the coefficient's frequency.

Floating-point representation of numerical quantities is well known in the art of digital data processing and is used to represent a wider range of values with fewer bits than is possible with integer representation. A floating-point number is composed of a mantissa and an exponent. In a preferred embodiment of the invention, the mantissa is a signed integer-valued expression expressed in two's complement form. The corresponding exponent is an unsigned value equal to the power of two of the multiplier required to convert the mantissa (either normalized or unnormalized) into the true value of the represented numerical quantity. This representation can be expressed as

$$F = M \cdot 2^{-E} \quad (7)$$

where

    F = the value of the floating-point number,

    M = the signed integer-valued mantissa, and

    E = unsigned integer-valued exponent.

For example, an exponent of three indicates the true value of the floating-point number is obtained by multiplying the integer-valued mantissa by $2^{-3}$. This is equivalent to shifting a binary representation of the mantissa three places to the right.

A positive nonzero mantissa is said to be normalized when its most significant data bit is nonzero. A negative-valued mantissa is normalized when its most significant data bit is zero. A normalized mantissa insures the greatest number of significant bits for the numerical quantity is contained within the mantissa's limited bit length

Block-floating-point representation is also well known in the art and is used to represent a set of floating-point numbers with fewer bits than is possible with conventional floating-point representation. This technique uses one exponent for a group of mantissas. Some mantissas in the group may not be normalized. The mantissa for the quantity with the largest magnitude in the group will be normalized provided it is not too small, i.e., the exponent is incapable of expressing the multiplier required for normalization. Whether the mantissas are normalized or not, however, the exponent always represents the number of times each integer-valued mantissa in the group must be shifted to the right to obtain the true value of the floating-point quantity.

### 1. Subband Exponents

The block-floating-point encoder comprises sections one and two of the nonuniform quantizer. The functions performed by the first section are shown in box 701 of Figure 7. This section calculates the subband exponents for each of several subband frequency coefficients. The subbands are shown in Table I. The procedure is comprised of three steps. The first step finds the largest transform coefficient in each subband. The second step determines the number of left shifts required to normalize these largest 24-bit coefficients. The third step saves these quantities as the exponent for the corresponding subband.

### 2. Master Exponent

The second section of the nonuniform quantizer determines the value of a one-bit master exponent for each of two subband groups. The master exponent is used to expand the dynamic range of the coder. Referring to Table I, it may be seen that master exponent MEXP0 represents the low frequency subbands zero through six. Master exponent MEXP1 represents high frequency subbands seven through eighteen. (For a 20 kHz coder, two additional subbands are required as shown in Table I.) If all subband exponents in a group are three or greater, the master exponent for that group is set to one and all subband exponents in that group are reduced by three. When a master exponent is set to one, it indicates that all coded coefficients within all subbands in the group are shifted to the left three more times than is indicated by the subband exponent values. When a master exponent is zero, each subband exponent in the group correctly represents the total left shifts for each transform coefficient in the subband. These master exponents permit using shorter subband exponents while allowing for a sufficient dynamic range. This step in the process is shown in boxes 702a and 702b of Figure 7.

An additional step can be taken which may reduce the total bits required to represent the coded signal. In all subbands where an exponent represents a single coefficient, the sign bit of a normalized mantissa is superfluous. As discussed above, the sign bit and the most significant data bit in a normalized mantissa are always of opposite value. The sign bit can therefore be dropped by the encoder and restored by the decoder. The dropped sign bit is referred to herein as a "hidden bit."

Whether a mantissa is normalized can be determined by examining the exponent. If the exponent is less than its maximum value (which is 15 after adjusting for the master exponent in the floating point scheme used in the preferred embodiment of the invention), the mantissa is normalized. If the exponent is equal to its maximum value, no conclusion can be drawn, therefore it is assumed the mantissa is not normalized and there is no hidden bit.

This technique can be used only for those mantissas representing transform coefficients in subbands containing only one coefficient. Assuming such coefficients will usually be normalized, the reduction in bit requirements is realized by reducing the fixed or minimum bit length for the coefficients, as shown in Table I. If a transform coefficient happens to be unnormalized, the reduced bit length is not likely to created audible quantization noise because the frequency component will be of very low amplitude.

### 3. Fixed-Bit Length

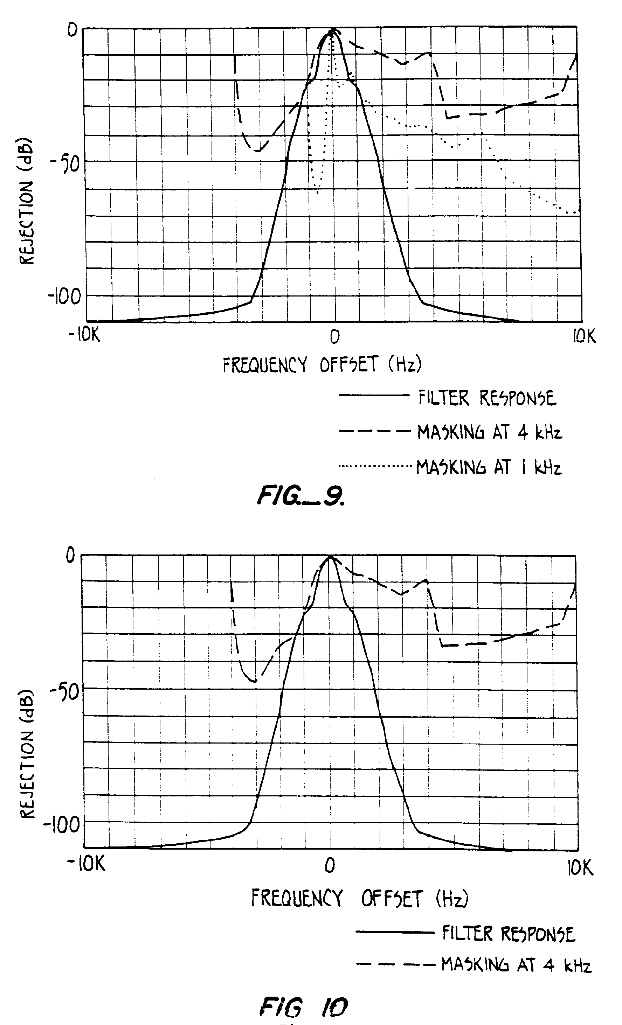

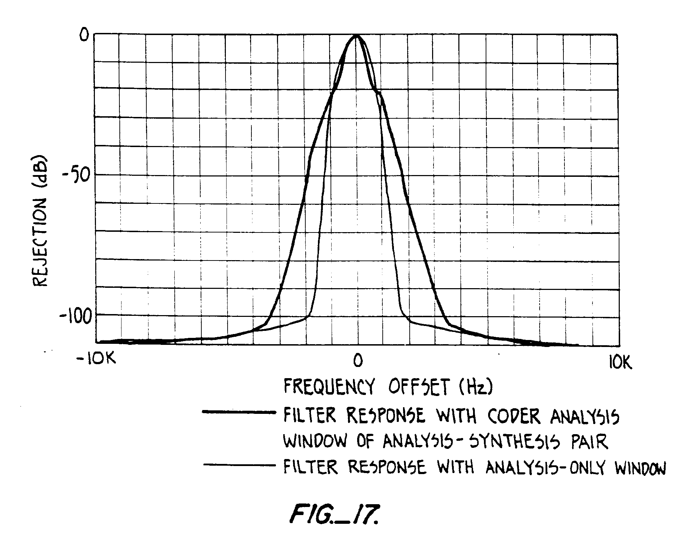

The third section of the nonuniform quantizer sets an initial minimum bit length for the representation of each left-shifted transform coefficient. This length is set according to the coefficient's frequency. Box 703 in Figure 7 represents this section of the process and Table I shows the minimum number of bits fixed for each coefficient's code word. The minimum bit length was derived by comparing a representative filter bank response curve to a psychoacoustic masking threshold curve. Because filter performance is a function only of the difference in frequency between a signal and the coefficient's frequency, any frequency coefficient may be used to represent the filter bank's response. The response curve shown in Figure 9 is obtained from the root mean square average of the filter's response to a range of frequencies within the filter passband. As discussed above, filter selectivity is affected by the shape of the analysis window and the number of samples in each time-domain signal block. It may be noted here that the overall coder characteristic response is not as good as that shown in Figure 9 because an additional selectivity loss occurs during the signal synthesis process. This effect is discussed below and is also shown in Figure 17.

Two psychoacoustic masking curves are shown in Figure 9. These curves were derived from Fielder, "Evaluation of the Audible Distortion and Noise Produced by Digital-Audio Converters," J. Audio Eng. Soc., vol. 35, 1988, pp. 517-534. Auditory selectivity of the human ear varies greatly with frequency, however, the 1 kHz curve is representative of ear characteristics for frequencies between 500 and 2 kHz, and the 4 kHz curve is representative of the ear's response to higher frequencies. The rate of transition band rolloff and depth of stopband rejection for a transform coder must be as great as that for the psychoacoustic masking curve to achieve the lowest bit rates. In particular, note that ear selectivity for frequencies below a 1 kHz masking tone is very high. Other transform coders in the art have achieved the required subband bandwidth and selectivity by using time-domain block lengths of at least 512 samples. For example, see Brandenburg, "OCF -- A New Coding Algorithm for High Quality Sound Signals," IEEE Int. Conf. on Acoust., Speech, and Signal Proc., 1987, pp. 141-144.

Because of time delay constraints discussed above, this invention uses a 128 sample block and must overcome undesirably wide subband bandwidth and degraded filter selectivity in other ways. This is accomplished in part by reserving additional bits for all coded frequency coefficients below 4 kHz. Figure 10 compares the filter response against the 4 kHz psychoacoustic masking curve. Because coder bandwidth and selectivity improve relative to the psychoacoustic masking curve as frequency increases, fewer bits are required to represent higher frequency transform coefficients above 4 kHz. This relationship is reflected in the minimum bit length values as shown in Table I.

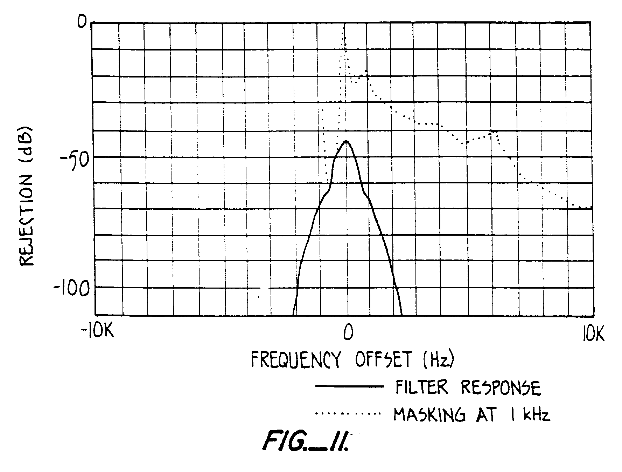

Figure 11 compares the 1 kHz masking curve against the filter response curve which is offset such that the psychoacoustic masking curve is always higher. The offset for the filter response is due to the increased accuracy afforded by additional bits reserved for the lower-frequency coefficients. Each additional bit improves the signal-to-noise ratio approximately 6 db. The graph in Figure 11 indicates an offset of 42 dB (or approximately 7 additional bits of accuracy) may be necessary to encode a low-frequency transform coefficient if no other tones are present to contribute to the masking effect.

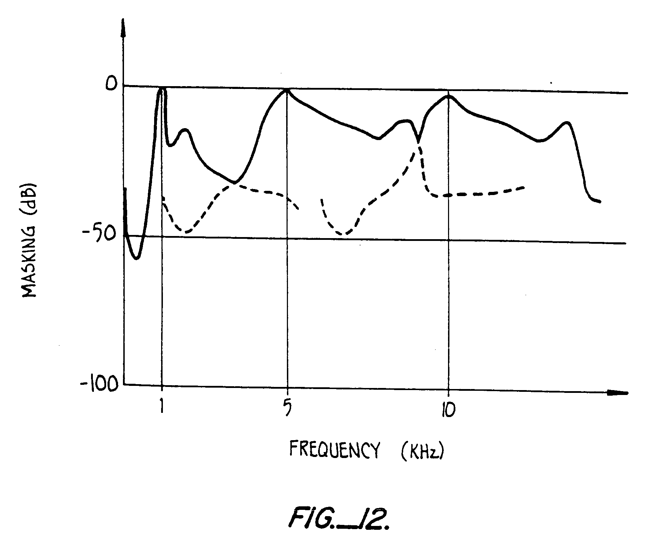

The minimum lengths suggested by the masking curves shown in Figures 9, 10, and 11 are conservative, however, because the curves shown in these figures represent the psychoacoustic masking effect produced by a single tone or a very narrow band of noise. Figure 12 shows a composite masking curve derived from a simple overlay of the individual masking curves of three tones. Empirical evidence indicates that even this composite curve is very conservative, understating the actual masking effect of multiple tones. Furthermore, music is generally a more complex signal than a few discrete frequencies, and the resulting increase in masking levels permits a reduction in the required accuracy of transform coefficient code words. Consequently, the minimum bit lengths shown in Table I are obtained by deducting two bits from the bit length of each coefficient code word suggested by the masking curves in Figures 10 and 11. Adaptive-bit allocation provides additional bits where needed for increased accuracy of specific coefficients.

### 4. Adaptive Bit Allocation

a. Overview

The fourth section of the nonuniform quantizer performs the adaptive bit allocation. Box 704 in Figure 7 provides an overview of this allocation process. In general, for each transform block, bit allocation assigns a fixed number of additional bits to specific coefficients in four phases. The number of bits may be chosen to balance signal coding quality and transmission bit rate. The preferred embodiment of the present invention sets the allocation at thirty-four bits. This limit is referred to herein as the allocation maximum or as the number of allocable bits.

The current implementation assigns a maximum of 4 bits per coefficient. This maximum represents a design compromise between coding accuracy and total bit rate. It will be realized by one skilled in the art that this maximum and the total number of adaptively allocable bits may be altered without changing the concept or basic purpose of the invention.

Phase zero is an initialization process for the remaining phases. Phase one assigns bits, up to a maximum of four per transform coefficient, to the coefficients within the same critical band of those frequency components with the greatest spectral energy. If all allocable bits are assigned during phase one, the allocation process stops. If not, phase two allocates additional bits to the transform coefficients which were allocated bits during phase one such that the total adaptively allocated bits for each coefficient is four. If all allocable bits are assigned during phase two, the allocation process stops. If any bits remain, phase three allocates bits to those coefficients which are adjacent to coefficients that were allocated bits during phase one and two. A more detailed conceptual description of this procedure is provided in the following paragraphs. The actual logic implementation of the procedure is discussed later.

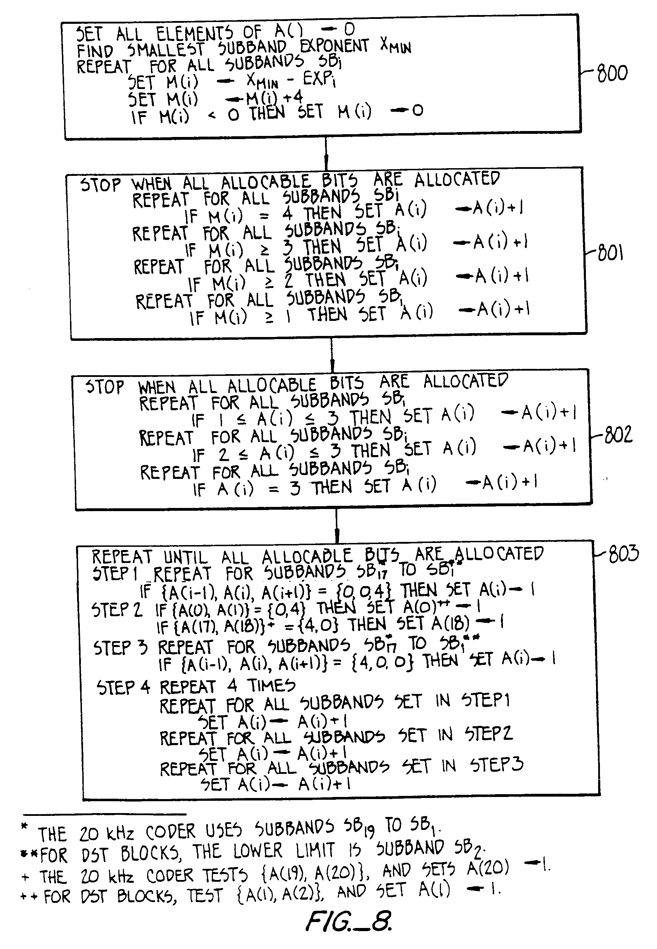

Figure 8 is a diagram of the conceptual process used to adaptively allocate bits to specific transform coefficients. The initialization steps of phase zero are shown in box 800. The first step initializes the elements of an array A() to zero. The next step identifies the smallest subband exponent, which is the exponent for the subband with the largest spectral component, and saves the value as $X_{MIN}$. All subband exponents are subtracted from $X_{MIN}$ and the difference is stored in array M(). Note that the smallest possible subband exponent is zero and the largest possible subband exponent is eighteen, which is the sum of a maximum value of fifteen for a 4-bit high frequency subband exponent plus the value of three for the master exponent MEXP1. See Table I. Therefore, the range of possible values in array M() is negative eighteen to zero. In the next step, four is added to each element of array M() and all elements below zero are set to zero. At the end of phase zero, array M() consists of a set of elements, one for each subband, whose values range from zero to four. The elements with a value of four represent those subbands where at least one of the coefficients in the subband has one of the largest spectral coefficients in the total signal.

Phase one constructs another array A(), which represents the bits to be allocated to the coefficients in each subband, using the process shown in Figure 8 box 801. Each element in A() corresponds to a subband. Recall from Table I that the higher subband exponents represent multiple transform coefficients, therefore each element of A() represents the number of bits assigned to all transform coefficients in the corresponding subband. For example, referring to Table I, subband 7 represents coefficients 7 and 8. If element A(7) has a value of one, this indicates that 2 bits are allocated, one each to transform coefficients 7 and 8. Continuing the example, if element A(18) has a value of two, then 14 bits are allocated, 2 bits each to coefficients 39-45. During the allocation process, as each element of A() is incremented, the number of allocated bits is deducted from the number of bits remaining for allocation.

When all of the allocable bits are assigned during this or any following phase, that phase immediately terminates and all of the subsequent phases are skipped. During the final step in which the allocation limit is reached, the number of bits assigned to a subband during that step will not exceed the number of bits remaining for allocation. If the last of the allocable bits are assigned while processing a subband with more than one coefficient, it is likely that not all of the coefficients in that subband will be allocated the same number of bits.

Starting with the M() array element representing the lowest-frequency coefficient (M(0) for DCT blocks, or element M(1) for DST blocks), each element of M() is examined in turn. As many as four passes are made through array M(), or until all allocable bits are allocated. On the first pass, each element in array A() is incremented by one if the corresponding element in array M() has a value equal to four. The second pass increments by one each element in A() which corresponds to each element in M() which has a value equal to three or four. On the third pass, array A() elements are incremented if the corresponding M() element has a value within the range of two to four. The final pass increments those elements in array A() corresponding to those M() elements which have a value in the range between one and four. It may be noted that if the elements in array M() sum to the allocation limit or less, the contents of arrays M() and A() at this point will be identical. If the number of bits assigned has reached the allocation limit, the bit-allocation process is complete at the end of phase one.

If any allocable bits remain, allocation continues with phase two shown in box 802 of Figure 8. This phase makes as many as three passes through array A(), stopping earlier if and when the maximum allocable bits are assigned. Each pass starts with the lowest frequency element (A(0) for DCT blocks, or A(1) for DST blocks) and works upward in frequency. On the first pass through array A(), each element which has a value between one and three is incremented by one. On the second pass, elements with values of two or three are incremented. On the third pass, elements equal to three are incremented. If this phase completes without exceeding the allocation limit, every element in array A() will have a value of either four or zero.

If any allocable bits remain, allocation continues with phase three shown in box 803 of Figure 8. Like the previous phases, phase three allocation will terminate as soon as the allocation limit has been reached. This final phase assigns additional bits to transform coefficients with lower spectral energy which are adjacent to subbands of coefficients with higher energy. This assignment is accomplished in four steps. The first step scans array A() starting with the highest frequency element A(18) (element A(20) is the starting element in 20 kHz bandwidth coders) in search of a group of three adjacent elements which have the values {0,0,4}. If found, the center element is set to one such that the group values become {0,1,4}.

Two special cases comprise the second step. The bit allocation of the lowest frequency transform coefficient is set to one if the values of the two lowest-frequency elements (A(0) and A(1) for DCT blocks, or A(1) and A(2) for DST blocks) are {0,4}. Then elements A(17) and A(18) are tested to determine if their values are {4,0}. If so, the allocation for the highest frequency subband is set to one. (Elements A(19) and A(20) are tested in a 20 kHz coder.)

If the allocation limit has not been reached, step three of phase three begins by scanning array A() downward starting with the highest frequency subband in search of a group of three adjacent elements which have the values {4,0,0}. If found, the center element is set to one to produce values {4,1,0}.

The fourth and final step of phase three allocates additional bits to the coefficients in subbands assigned bits in steps one through three of this phase. Starting at the highest frequency element of array A(), each element modified in step one is incremented. Any elements modified in step two are incremented next. Finally, elements modified in step three are incremented, starting with the highest frequency subbands. This fourth step reiteratively increments the array elements in the same order discussed above until all allocable bits are assigned, or until all of the elements modified in steps one through three are assigned a total of 4 bits each. If the latter condition is met and any allocable bits remain to be assigned, phase three repeats starting with step one.

b. Adaptive Bit Allocation Logic

The concept of the adaptive bit allocation algorithm is represented in Figure 8 and described above. An understanding of the algorithm's concept is helpful in gaining an understanding of the actual logic of the adaptive bit allocation routine.

Phase zero begins by initializing all elements of array A() equal to zero, and constructing four tables $T_1$ through $T_4$. The construction of the tables is accomplished through the following steps: (1) identify the smallest subband exponent and save this value as $X_{MIN}$; (2) starting with the lowest frequency subband (subband 0 for DCT blocks, or subband 1 for DST blocks), subtract the subband exponent (see Table I) from $X_{MIN}$; (3) if the difference is zero, insert the subband number into tables $T_1$, $T_2$, $T_3$, and $T_4$; (4) if the difference is negative one, insert the subband number into tables $T_1$, $T_2$, and $T_3$; (5) if the difference is negative two, insert the subband number into tables $T_1$, and $T_2$; (6) if the difference is negative three, insert the subband number into table $T_1$; (7) continue steps three through six for each subband until all subbands have been processed. At the end of this step, table $T_1$ contains the numbers of all subbands that have exponents in the range $X_{MIN}$-3 to $X_{MIN}$, table $T_2$ contains subbands with exponents from $X_{MIN}$-2 to $X_{MIN}$, table $T_3$ contains subbands with exponents from $X_{MIN}$-1 to $X_{MIN}$, and table $T_4$ contains subbands with exponents equal to $X_{MIN}$. Of significance, subband entries in each table are in ascending order according to frequency.

Phase one allocates bits to transform coefficients in subbands with the largest subband exponents. Starting with the first (lowest frequency) entry in table $T_4$, one bit is allocated to each transform coefficient within each subband represented in the table. The allocation is repeated in turn for table $T_3$, $T_2$, and finally table $T_1$. This process continues until all allocable bits have been assigned or until all entries in tables $T_4$ to $T_1$ have been processed. As a bit is assigned to all coefficients in a subband, an entry in array A() corresponding to that subband is incremented by one such that the elements in A() reflect the total bits allocated to each transform coefficient in each subband.

As noted earlier, allocation terminates immediately when all of the allocable bits are assigned. Each table entry represents a subband which, in general, contains multiple transform coefficients. Therefore, if the last of the allocable bits are assigned to a table entry representing a subband with more than one coefficient, it is probable that not all of the coefficients in that subband can be allocated the same number of bits. In such situations, the allocation process notes which coefficients in the subband must have a bit deducted from the subband's allocation amount subsequently stored in array A().

Phase two constructs four new tables, $T_1$ through $T_4$, using a procedure similar to that used in phase zero: (1) $X_{MIN}$ still retains the smallest subband exponent; (2) for the lowest frequency subband (subband 0 for DCT blocks, or subband 1 for DST blocks), subtract the subband exponent from $X_{MIN}$; (3) if the difference is zero, insert the subband number into table $T_4$; (4) if the difference is negative one, insert the subband number into table $T_3$; (5) if the difference is negative two, insert the subband number into table $T_2$; (6) if the difference is negative three, insert the subband number into table $T_1$; (7) continue steps three through six for each subband until all subbands have been processed. At the end of this step, table $T_1$ contains the numbers of all subbands that have exponents equal to $X_{MIN}$-3, table $T_2$ contains subbands with exponents equal to $X_{MIN}$-2, table $T_3$ contains subbands with exponents equal $X_{MIN}$-1, and table $T_4$ contains subbands with exponents equal to $X_{MIN}$. The entries in all of the tables are in ascending order according to the frequency of the transform coefficient.

Phase two assigns bits to all coefficients represented by subbands in tables $T_3$ to $T_1$ until each coefficient has received a total of four additional bits, or until the allocation limit has been reached. Starting with the first (lowest frequency) entry in table $T_3$, one bit is assigned to each coefficient contained within each subband represented in the table. As each subband is processed, the entry is removed from table $T_3$ and inserted into table $T_4$. Next, coefficients associated with entries in table $T_2$ are allocated an additional bit, moving each entry from table $T_2$ to $T_3$ as the additional bit is assigned. Then entries in table $T_1$ are processed, moving the entries from table $T_1$ to $T_2$. If any allocable bits remain, allocation continues by repeating the process for table $T_3$, and then table $T_2$. If bits remain to assign, a final pass is made through the entries in table $T_3$. If phase two does not assign all remaining allocable bits, table $T_4$ contains all of the coefficients, each having received 4 bits, and tables $T_3$ through $T_1$ are empty. If all allocable bits have been assigned, array A() is rebuilt from the information contained in tables $T_1$ through $T_4$ to reflect the total bits allocated to each transform coefficient. Each element in array A() corresponding to an entry in table $T_4$ is assigned a value of four. Each A() element corresponding to an entry in table $T_3$ is assigned a value of three; for table $T_2$ a value of two; and for table $T_1$ a value of one. All other elements of A(), i.e., those subbands which are not represented by entries in tables $T_1$ through $T_4$, are zero.

If any allocable bits remain, allocation continues with phase three. Table $T_4$ is sorted, ordering the subband numbers into descending frequency. The first step adds subbands to table $T_1$ which are not in table $T_4$ that are lower in frequency and adjacent to subbands which are in table $T_4$. Starting with the first (highest frequency)

20

entry in table $T_4$, adjacent entries in the table are examined to determine if they are separated by two or more subbands. If they are, the number of the subband immediately below the higher subband is inserted into table $T_1$. For example, suppose two adjacent entries in table $T_4$ represent subbands 16 and 12. These two subbands are separated by three subbands. Therefore the number 15, representing the subband below subband 16, would be inserted into table $T_1$.

Two special cases for subbands 0 and 18 (subbands 0 and 20 in the 20 kHz version) are handled next. If subband 1 is the last entry in table $T_4$, the number for subband 0 is inserted into table $T_1$. If the first entry in table $T_4$ is subband 17 (subband 19 in the 20 kHz version), the number for subband 18 (subband 20) is inserted into table $T_1$.

The third step adds subbands to table $T_1$ which are not in table $T_4$ that are higher in frequency and adjacent to subbands which are in table $T_4$. Starting with the first (highest frequency) entry in table $T_4$, adjacent entries in the table are examined to determine if they are separated by two or more subbands. If they are, the number of the subband immediately above the lower subband is inserted into table $T_1$. For example, suppose two adjacent entries in table $T_4$ represent subbands 16 and 12. As discussed above, these two subbands are separated by 3 subbands. Therefore the number 13, representing the subband above subband 12, would be inserted into table $T_1$.

Starting with the first entry in table $T_1$, an additional bit is assigned to each transform coefficient associated with each subband represented by an entry in table $T_1$. As each subband entry is processed, it is moved from table $T_1$ into table $T_2$. If any allocable bits remain at the end of processing table $T_1$, a similar process repeats for the entries in table $T_2$, moving each entry from table $T_2$ into table $T_3$. Processing continues with table $T_3$ entries if any bits remain to allocate, moving entries from table $T_3$ into table $T_4$. If any bits remain after this step, phase three repeats from the beginning by sorting table $T_4$ entries into descending frequency order. When all allocable bits have been assigned, array A() is built from the four tables as described above for phase two.

After all bits have been allocated, each transform coefficient code word is rounded off to a bit length equal to the value of the element of array A() representing the subband in which the coefficient is grouped. Some coefficients in one subband, however, may have one bit deducted from their length as required to keep the total number of allocated bits equal to the allocation maximum.

### 5. Code Word Truncation

The fifth section of the nonuniform quantizer, shown in box 705 of Figure 7, follows the adaptive bit allocation routine. Using the subband and master exponents determined in previous sections, each transform coefficient in a transform block is shifted to the left a number of times equal to the value of the exponent for the subband in which the coefficient is grouped, plus three more shifts if the associated master exponent is set to one. Each coefficient's total bit length is then calculated by adding its minimum bit length (see Table I) to the number of adaptively allocated bits assigned to coefficients in each subband, found in array A(). Each transform coefficient code word is rounded off to this bit length.

As described above, each element of array A() represents the number of bits assigned to all coefficients within a subband. Some coefficients in one subband may have one bit deducted from their length as required to keep the total number of bits allocated to the transform block equal to the allocation maximum.

### E. Formatting

The formatting process prepares the encoded transform blocks for transmission or storage. This process is represented by box 109 in Figure 1a. The following description discusses the formatting of a two-channel signal such as that used in stereophonic applications. The basic scheme, however, can be utilized in single-channel or multiple-channel systems without departing from the basic invention.

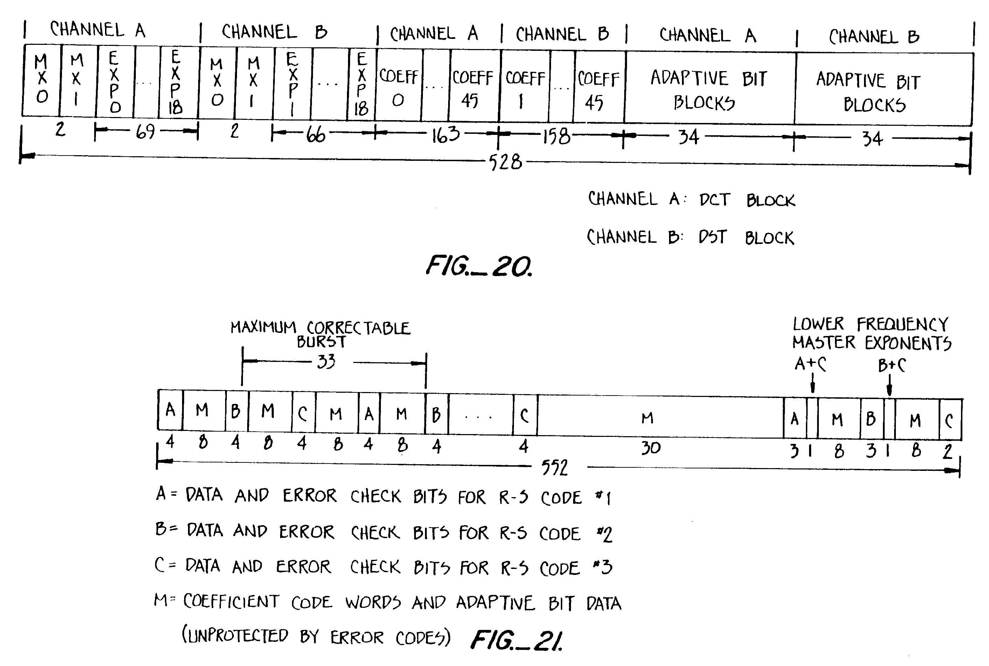

A fixed length representation of each transform coefficient code word is formed by truncating the rounded code word to a length equal to the minimum bit length shown in Table I. Any additional bits allocated to the code word are formatted separately in an adaptive bit block. The master exponents, subband exponents, truncated coefficient code words, and adaptive bit blocks are then assembled according to the grouping shown in Figure 20.

The formatted frame of transform blocks in Figure 20 depicts a structure where channel A has encoded a DCT block and channel B has encoded a DST block. If the frame will be subject to bit errors such as those caused by noise during transmission, error correction codes are intermixed with the data as shown in Figure 21. Additional overhead bits may be required, such as frame synchronization bits if the digital signal is intended for transmission, or database pointers or record keys if the frames are intended for storage. If frame synchronization bits are required, the formatted frame is randomized using a technique described in Smith, Digital Transmission Systems, New York, NY: Van Nostrand Reinhold Co., 1985, pp. 228-236. Randomization is performed to reduce the probability that valid data within the frame will be mistaken for the synchronization pattern. The randomized frame is then appended to the frame synchronization bits.

Note that each transform coefficient may be represented in as many as two distinct parts or segments. The first part represents the coefficient's minimum length and is composed of a fixed number of bits. See Table I. The second part of the representation, if present, is of varying length and is composed of the adaptively allocated bits. This two-part representation scheme is chosen over one which represents each coefficient as a variable length word because it is more immune to corruption by noise. If a noise burst occurs in a frame utilizing the preferred scheme, the effects of the noise will be confined to the value of the exponents, code words, or allocated bits directly affected by the noise. If a noise burst occurs in a frame utilizing variable length code words, the effects of the noise can be propagated through the remainder of the frame. This propagation may occur because the noise burst will alter not only the value of the exponents and code words hit directly by the noise, but also the information needed to determine the length of each variable length code word. If the length of one code word is in error, the remainder of the frame will be misinterpreted.

Table I shows that an encoded DCT block is composed of two master exponent bits, nineteen subband exponents for 69 bits, and forty-six coefficient code words for 163 bits. An additional 34 adaptively allocated bits bring the total DCT block length to 268 bits. (For the 20 kHz version of the invention, an encoded DCT block is composed of two master exponents, twenty-one subband exponents of 77 bits, sixty-three coefficient code words of 197 bits, and 34 adaptively allocated bits, for a total of 310 bits.) As noted in Table I and shown in expression 4, the code word for DST coefficient S(0) is always zero, therefore the code word and its exponent need not be transmitted or stored. This reduces an encoded DST block by a total of 8 bits (three exponent bits and 5 coefficient code word bits) to a length of 260 bits (302 bits for the 20 kHz version). The total length for an encoded frame of a DCT-DST block pair is 528 bits.

No side-information is required to indicate the coefficients to which additional bits have been allocated. The deformatting process is able to determine the proper allocation from the transmitted subband exponents by performing the same allocation algorithm as that used in the encoding process.

When data corruption is not a problem, a preferred structure for formatting a frame of transform blocks is one which places the exponents first, coefficient code words second, and finally the adaptively allocated bits. This reduces processing delays because, after all subband exponents have been received, the deformatting process is able to determine bit allocations made to each transform coefficient while the adaptive bit blocks are being received. The formatting structure used in the preferred embodiment of the invention is shown in Figure 20. The bit stream is formatted with the master and subband exponents for one channel assembled in ascending frequency order, followed by the master and subband exponents of the other channel. Next, the fixed length portion of the transform coefficient code words for the first channel are assembled in ascending frequency order, followed by the coefficient code words of the other channel. Finally, the adaptive bit blocks for the first channel are appended to the bit stream, followed by the adaptive bit blocks for the other channel.

In applications where potential data corruption is of concern, an error correction scheme is necessary. Errors in subband exponents, and to the lesser extent, errors in the lower-frequency coefficient code words generally produce the greatest audible distortion. This information is the most critical data to protect. A preferred scheme protects these values with error detection and correction codes, and separates these values as much as possible to improve their immunity to noise burst errors. Such a scheme is shown in Figure 21.

It will be obvious to one skilled in the art that other frame formats and correction codes may be utilized without departing from the basic invention.

The total length for one frame of a DCT/DST block pair is 528 bits (612 bits for the 20 kHz version). Of this length, 139 bits are subband and master exponents (155 bits for the 20 kHz version). Three (15,13) Reed-Solomon error correction codes are added to the bit stream. Each of these codes provide single-symbol error detection/correction for as many as thirteen 4-bit symbols (nibbles), or 52 bits. See, for example, Peterson and Weldon, Error-Correcting Codes, Cambridge, Mass: The M.I.T. Press, 1986, pp. 269-309, 361-362. Three of these error correction codes are inserted into each frame to protect up to 39 nibbles (156 bits) of data, bringing the total frame length to 552 bits (636 bits for the 20 kHz version).

Because the three codes may protect up to 156 bits, yet there are only 139 subband exponent bits in the 15 kHz version, protection may also be provided to the three lowest-frequency coefficient code words in the block-pair frame (coefficients C(0) and C(1) for the DCT block, and coefficient S(1) for DST block). The remaining error correction capacity is utilized by providing redundant protection for the two low frequency master exponents (MEXP0 shown in Table I) of each transform block. Assignment of the three error codes to specific data elements is somewhat arbitrary, however, the DCT master exponents should be assigned to one code, the DST master exponents should be assigned to another code, and the two low frequency master exponents from each transform block should be assigned to the third code.

The Reed-Solomon codes process data in nibbles, therefore the error codes, protected data, and unprotected data are grouped into 4-bit nibbles for ease of processing. The ratio of protected data to unprotected data in each block-pair frame is approximately two-to-one. This permits scattering protected data throughout the formatted frame, each 4-bit nibble of protected data separated by two nibbles of unprotected data. In addition, because each error code itself can sustain a single-symbol error, protected nibbles are assigned to each of the three codes in sequence. For example, the first five protected nibbles are assigned to error codes 1, 2, 3, 1, and 2, respectively. See Figure 21. With this technique, a single burst error of as many as 33 bits may occur anywhere in the frame without corrupting more than a single nibble from each error code. Therefore, protected data can be recovered from any single noise burst no longer than 33 bits in length.

Subject to the constraints discussed above, exponents and transform coefficient code words are assembled in ascending frequency order, and are followed by the adaptive bit blocks.

### F. Transmission or Storage

The formatted frame is now ready for transmission or for storage. Figure la illustrates transmission means 110. Transmission media include public dissemination such as broadcasting, internal use such as studio monitoring or signal mixing, and interfacility or telephonic use via terrestrial or satellite links. Storage media include magnetic tape and magnetic or optical disks.

### G. Deformatting

A deformatting process takes place when the digitized and coded signal is received from transmission means 111 either by receipt of a transmitted signal or retrieved from storage. The process is represented by box 112 in Figure 1b. If the formatted frame of code words was randomized prior to transmission, the formatted frame is recovered by an inverse randomizing process. Then the frame is split into the component parts of each transform block: the master exponents, subband exponents, fixed length portion of transform coefficient code words, and adaptively assigned bits. Error correction codes, if present, may be used to rectify errors introduced during transmission or storage.

Each of the master exponent bits are checked with its corresponding redundant bit to verify accuracy. If this check fails, i.e., a master exponent and its redundant counterpart are not equal, the value of the master exponent is assumed to be one. If the correct value of the master exponent is actually zero, this assumption will reduce the amplitude of all transform coefficients within the subbands grouped under the errant master exponent. This assumption produces less objectionable distortion than erroneously setting a master exponent to zero (when it should be one) which would increase the amplitude of all affected coefficients.

The exponent for all single coefficient subbands are also checked to determine if any hidden bit adjustments are necessary.

The adaptive bit allocation routine discussed above is used to process the exponents extracted from the received signal, and the results of this process are used to determine the proper allocation of the adaptive bit blocks to the transform coefficients. The portion of each transform coefficient whose length equals the minimum bit length plus any adaptively allocated bits are loaded into a 24-bit word and then shifted to the right a number of times equal to the value of the appropriate subband exponent plus three additional shifts if the associated master exponent is set to one. This process is represented by box 113 in Figure 1b.

### H. Synthesis Filter Bank - Inverse Transform

Box 114 in Figure 1b represents a bank of synthesis filters which transform each set of frequency-domain coefficients recovered from the deformatting and linearization procedures into a block of time-domain signal samples. An inverse transform from that used in analysis filter bank 104 in Figure 1a implements synthesis filter bank 114. The inverse transforms for the TDAC technique used in this embodiment of the invention are alternating applications of a modified inverse DCT and an inverse DST. Because half of the transform blocks are omitted from transmission or storage (see expression 5), those blocks must be recreated for the inverse transforms. The missing DCT blocks may be recreated from the available DCT blocks as shown in equation 8. The missing DST blocks may be recreated as shown in equation 9. The inverse DCT is expressed in equation 10, and the inverse DST is expressed in equation 11.

$$\hat{C}(k) = -\hat{C}(N - k) \qquad \text{for } N/2 \leq k < N \quad (8)$$
$$\hat{S}(k) = \hat{S}(N - k) \qquad \text{for } N/2 < k \leq N \quad (9)$$

$$\hat{x}(n) = \frac{1}{K} \sum_{k=0}^{K-1} \hat{C}(k) \cdot \cos[2\pi k(\frac{n+m}{K})] \quad \text{for } 0 \le n < N \tag{10}$$

$$\hat{x}(n) = \frac{1}{K} \sum_{k=0}^{K-1} \hat{S}(k) \cdot \sin[2\pi k(\frac{n+m}{K})] \quad \text{for } 0 \le n < N \tag{11}$$

where

  k = transform coefficient number,
  n = signal sample number,
  K = number of transform coefficients,
  N = sample block length,
  m = phase term for TDAC (see equation 6),
  $\hat{C}$(k) = quantized DCT coefficient k,
  $\hat{S}$(k) = quantized DST coefficient k, and
  $\hat{x}$(n) = recovered quantized signal x(n).

Calculations are performed using an FFT algorithm. The same techniques as those employed in the forward transform are used in the inverse transform to permit concurrent calculation of both the DCT and DST using a single FFT.

Figures 14a-14e and 16a-16g illustrate the transform process of the analysis-synthesis filter banks. The analysis filter bank transforms the time-domain signal into an alternating sequence of DCT and DST blocks. The inverse transform applies the inverse DCT to every other block, and applies the inverse DST to the other half of the blocks. As shown in Figures 15a-15d, the recovered signal contains aliasing distortion. This distortion is cancelled during a subsequent time-domain block overlap-add process represented by box 116 in Figure 1b. The overlap-add process is discussed below.

## I. Synthesis Window

Figures 16a-16g illustrate cancellation of time-domain aliasing by the overlap-add of adjacent time-domain signal sample blocks. As derived by Princen, to cancel time-domain aliasing distortion, the TDAC transform requires the application of a synthesis window identical to the analysis window and an overlap-add of adjacent blocks. Each block is overlapped 100%; 50% by the previous block and 50% by the following block. Synthesis-window modulation is represented by box 115 in Figure 1b.

Analysis-synthesis window design must consider filter bank performance. Because both windows are used to modulate the time-domain signal, the total effect upon filter performance is similar to the effect caused by a single window formed from the product of the two windows. Design of the analysis-synthesis window pair, therefore, is accomplished by designing a suitable product-window representing a point-by-point multiplication of the analysis and synthesis windows. This design is highly constrained, reducing flexibility in trading off the steepness of transition band rolloff and the depth of stopband rejection. As a result, filter performance is degraded to a greater extent than it is by an analysis-only window designed without this constraint. For example, see Figure 17.

While analysis windows have received much attention, the prior art teaches little about analysis-synthesis window pairs. The technique described below derives a good analysis-synthesis window pair from a known good analysis-window design. A window pair derived by this technique is substantially the same as a window pair derived from a computer-based optimization technique discussed in more detail later. While any analysis window may be used as a starting point, several windows permit design of a filter bank with good selectivity, and they offer a means to trade off steepness of transition band rolloff against depth of stopband rejection. Three examples are the Kaiser-Bessel window, the Dolph-Chebyshev window, and a window derived from finite impulse filter coefficients using the Parks-McClellan method. See Parks and McClellan, "Chebyshev Approximation for Nonrecursive Digital Filters with Linear Phase," IEEE Trans. Circuit Theory, vol. CT-19, March 1972, pp. 189-94. Only the Kaiser-Bessel window is discussed here. This window allows the trade off mentioned above through the choice of a single parametric alpha value. As a general rule, low alpha values improve transition band rolloff, and high alpha values increase the depth of stopband rejection. See Harris, cited above.

An alpha value in the range of 4 through 7 is usable in the preferred embodiment of the invention. This range provides a good compromise between steepness of transition band rolloff at mid-frequencies (1-2 kHz), and depth of stopband rejection for low frequencies (below 500 Hz) and high frequencies (above 7 kHz). The range of acceptable alpha values was determined using computer simulations by identifying the lowest alpha values which have sufficient stopband rejection to keep quantizing noise below the psychoacoustic masking threshold.

The Kaiser-Bessel window function is

$$W(n) = \frac{I_0[\pi\alpha\sqrt{\{1 - ( dow12\frac{n}{N/2})^2\}}]}{I_0[ fon128p\alpha]} \qquad \text{for } 0 \leq n \leq N \quad (12)$$

where

$\alpha$ = Kaiser-Bessel alpha factor,
n = window sample number,
N = window length in number of samples, and

$$I_0[x] = \sum_{k=0}^{\infty} \frac{(x/2)^k}{k!}.$$

To satisfy the overlap-add criteria, an analysis-synthesis product-window WP(n) of length N is derived by convolving window W(n) of length v+1 with a rectangular window of length N-v. The value v is the window overlap-add interval. The overlap-add process cancels alias distortion and the modulation effects of the analysis and synthesis windows. The convolution which derives the product window is shown in equation 13, where the denominator of the expression scales the window such that its maximum value approaches but does not exceed unity. This expression may be simplified to that shown in equation 14.

$$WP(n) = \frac{\sum_{k=0}^{N-1} s(k)\cdot W(n-k)}{\sum_{k=0}^{v} W(k)} \qquad \text{for } 0 \leq n < N \qquad (13)$$

$$WP(n) = \frac{\sum_{k=0}^{N-v-1} W(n-k)}{\sum_{k=0}^{v} W(k)} \qquad \text{for } 0 \leq n < N \qquad (14)$$

where

n = product-window sample number,
v = number of samples within window overlap interval,
N = desired length of the product-window,
W(n) = beginning window function of length v+1,
WP(n) = derived product-window of length N, and

$$s(k) = \begin{bmatrix} 1 & \text{for } 0 \leq k < N\text{-v} \\ 0 & \text{otherwise.} \end{bmatrix}$$

The analysis and synthesis windows shown in equations 15 and 16 are obtained by taking the derived product-window WP(n) to the A and S powers respectively.

$$WA(n) = WP(n)^A \qquad \text{for } 0 \leq n < N \quad (15)$$
$$WS(n) = WP(n)^S \qquad \text{for } 0 \leq n < N \quad (16)$$

where

WP(n) = derived product-window (see equations 13 and 14),
WA(n) = analysis window,
WS(n) = synthesis window,
N = length of the product-window, and
A + S = 1.

In the current embodiment of the invention, the analysis and synthesis windows have a length of 128 samples with a 100% window overlap, or an overlap interval of 64 samples. The values of A and S are each set to one-half which produces a pair of identical analysis and synthesis windows as required by the TDAC transform. Substituting these values into equation 14, the resulting analysis window is seen to be

$$WA(n) = \sqrt{\left\{\frac{\sum\limits_{k=0}^{63} W(n-k)}{\sum\limits_{k=0}^{64} W(k)}\right\}} \qquad \text{for } 0 \leq n < N \qquad (17)$$

where W(n) = Kaiser-Bessel function of length 65, and the alpha factor is in the range 4 to 7.

## J. Overlap-Add

An additional requirement is placed upon window design: the analysis and synthesis windows must be designed such that the analysis-synthesis product-window always sums to unity when two adjacent product-windows are overlapped. This requirement is imposed because an overlap-add process is used to cancel the time-domain effects of the analysis- and synthesis-window modulation. This process is represented by box 116 in Figure 1b, and illustrated in Figures 16a-16g. Signals $y_c(t)$ and $y_s(t)$, recovered from the inverse DCT and DST respectively, are shown in Figures 16a and 16d. Each signal is grouped into a series of blocks. Each signal block is modulated by the synthesis-window functions shown in Figures 16b and 16e. The resulting blocks of signals $\dot{y}_c(t)$ and $\dot{y}_s(t)$ are shown in Figures 16c and 16f. The two signals, overlapped by one-half block length, are added to produce signal y(t), shown in Figure 16g. Signal y(t) is an accurate reconstruction of the original input signal.

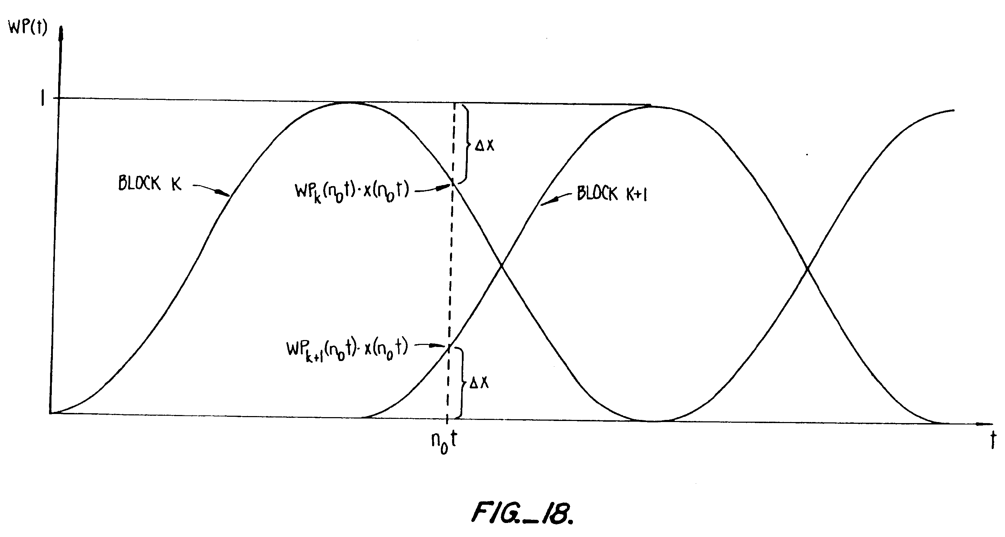

As shown in Figure 18, a signal sample at some time not within the overlap interval between block k and block k+1 is represented by a sample in each of the two blocks. Following an overlap-add of the two windowed blocks, the recovered signal sample at time $n_0t$ is seen to be the sum of the samples from windowed blocks k and k+1, which may be expressed as

$$x(n_0t) = WP_k(n_0t) \cdot x(n_0t) + WP_{k+1}(n_0t) \cdot x(n_0t) \qquad (18)$$

where

$WP_k(n_0t) = WA_k(n_0t) \cdot WS_k(n_0t) = \{WA_k(n_0t)\}^2$,

$WA_k(n_0t)$ = analysis window in block k at time $n_0t$,

$WS_k(n_0t)$ = synthesis window in block k at time $n_0t$, and

$WA_k(n_0t) = WS_k(n_0t)$ as required by the TDAC transform.

The product-window modulation effects are cancelled if the sum of the two adjacent product-windows across the window overlap interval equals unity. Therefore, signal x(nt) may be accurately recovered if

$$WP_k(nt) + WP_{k+1}(nt) = 1 \qquad \text{for } 0 \leq n < N \qquad (19)$$

for all time samples nt within the overlap interval between block k and block k+1.

It is difficult to work with the product-window as a function of time, so it is desirable to translate the requirement as expressed in equation 19 into a function of window sample number n. Equations 20 through 23 express this requirement for a product-window created from the product of a pair of 128 sample analysis and synthesis windows with 100% overlap. Equation 20 represents the overlap of the first half of window $WP_k$ and the last half of the previous window $WP_{k-1}$. Equation 21 represents the overlap of the last half of window $WP_k$ and the first half of the following window $WP_{k+1}$. Equations 22 and 23 show the equivalent expressions in terms of the analysis window. Note that the analysis and synthesis windows must be identical for the TDAC transform.

$$WP_{k-1}(n+64) + WP_k(n) = 1 \qquad \text{for } 0 \leq n < 64 \qquad (20)$$
$$WP_k(n) + WP_{k+1}(n-64) = 1 \qquad \text{for } 64 \leq n < 128 \qquad (21)$$
$$\{WA_{k-1}(n+64)\}^2 + \{WA_k(n)\}^2 = 1 \qquad \text{for } 0 \leq n < 64 \qquad (22)$$
$$\{WA_k(n)\}^2 + \{WA_{k+1}(n-64)\}^2 = 1 \qquad \text{for } 64 \leq n < 128 \qquad (23)$$

where

$WP_k(n) = WA_k(n) \cdot WS_k(n) = \{WA_k(n)\}^2$,

$WA_k(n)$ = analysis window value for sample n in block k,

$WS_k(n)$ = synthesis window value for sample n in block k, and

$WA_k(n) = WS_k(n)$ as required by the TDAC transform.

## K. Signal Output

Box 117 in Figure 1b represents a conventional digital-to-analog converter which generates a varying voltage analog signal in response to a digital input. The digital input is obtained from the 16 most significant bits of the 24-bit integer words produced by the overlap-add process. The analog output should be filtered by a low-pass filter with a passband bandwidth of 15 kHz (20 kHz for the 20 kHz coder) to remove spurious high-frequency components. This filter is not shown in Figure 1b.

## II. ALTERNATIVE DFT IMPLEMENTATION OF INVENTION

The TDAC transform is preferred for most applications, however, the signal processing resources required for a TDAC coder are greater than that required for Discrete Fourier Transform (DFT) based coders. Using a DFT, a coder may be implemented which requires less memory, processing speed, and arithmetic accuracy to only 16 significant bits. The design objectives for the DFT coder are the same as that for the TDAC version; CD quality signal, minimal bit rates, and low time delay through the coder. The following discussion assumes a sample rate of 48 kHz although other rates such as the 44.1 kHz sample rate discussed above for the TDAC version may also be used.

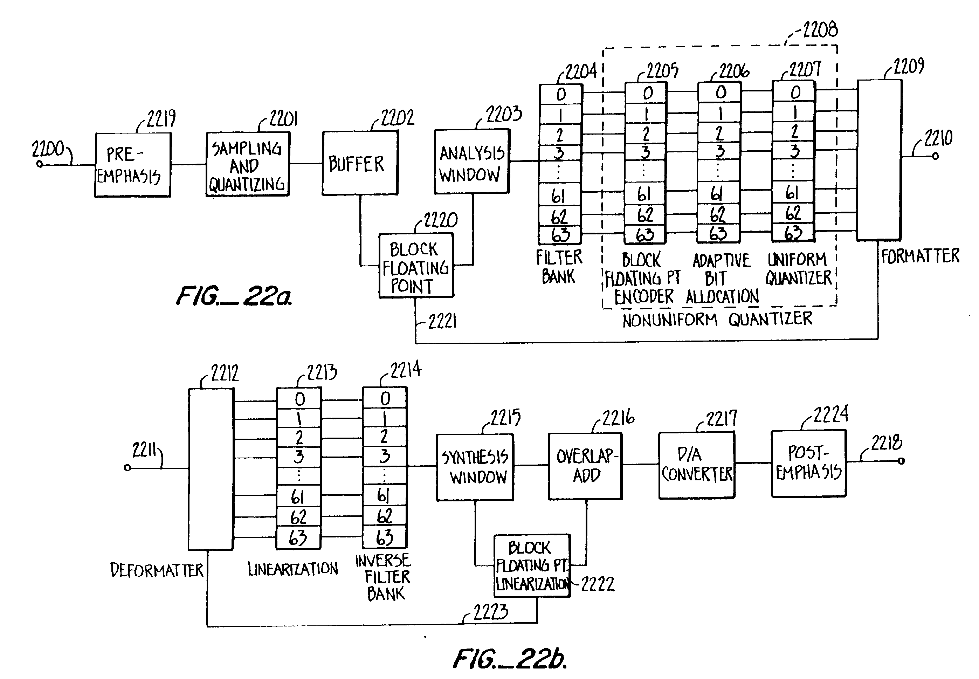

Figures 22a and 22b show the basic structure of the DFT embodiment of the invention. This structure is similar to that of the TDAC version. Four differences are required to compensate for the lower accuracy of 16-bit arithmetic: (1) a preemphasis gain is applied to the analog input signal by a network represented by box 2219, (2) block-floating-point encoder represented by box 2220 operates prior to analysis-window modulation represented by box 2203, (3) block-floating-point decoder represented by box 2222 operates to recover the time-domain signal samples into 16-bit integer form, and (4) a complementary postemphasis boost represented by box 2224 is applied to the analog output signal.

The signal samples are converted to block-floating-point form to increase the number of significant bits because otherwise the DFT calculations, performed with only 16 significant bits of accuracy, produce audible levels of noise due to cumulative round-off errors and an inability to represent the required dynamic range. For further information on round-off noise accumulation in FFT algorithms, see Prakash and Rao, "Fixed-Point Error Analysis of Radix-4 FFT," Signal Processing 3, North-Holland Publishing Co., 1981, pp. 123-133. By expressing each signal sample in block-floating-point form with a 4-bit exponent, the effective dynamic range of each transform coefficient is increased.

The block-floating-point encoder represented by box 2220 in Figure 22a first finds the magnitude of the largest sample in the digitized signal block. The number of left shifts required to normalize this value is determined. The number of shifts, which will be in the range 0-15, establishes the value of the master exponent MEXP. See Table II. Finally, all samples in the block are shifted to the left an amount equal to the value of the master exponent. During decode, block-floating-point linearizer 2222 shown in Figure 22b shifts each sample to the right an amount equal to the master exponent and the sample block is derived from its block-floating-point representation.

The use of block-floating-point representation provides a lower noise floor for low level signals because all samples are left shifted on encode and right shifted on decode, reducing the effects of arithmetic round-off errors. Unfortunately, modulation of the arithmetic noise floor occurs with high signal levels similar to that created by a broadband audio signal compander. But empirical evidence shows that the major audible effects of this modulation occur at frequencies below 300 Hz. Because 16-bit transform coder distortion and round-off noise below 300 Hz are inaudible, the input signal (and consequently the noise floor) may be reduced by a special preemphasis attenuation before ADC quantizing, and compensated by a postemphasis boost after digital-to-analog conversion. The preemphasis attenuation represented by box 2219 in Figure 22a and the postemphasis boost represented by box 2224 in Figure 22b provide a large reduction in audible modulation noise for low frequency signals. The preemphasis characteristic is complementary to the postemphasis characteristic so that the frequency response of the coder remains flat. The preemphasis gain characteristic is a low frequency attenuation given by

$$G(s) = \frac{s^2 + 2\pi \cdot 100s + (2\pi \cdot 100)^2}{s^2 + 2\pi \cdot 300s + (2\pi \cdot 300)^2} \quad (24)$$

where

G(s) = preemphasis gain

$s = j \cdot f$,

$j = \sqrt{-1}$, and

$f$ = input frequency in radians/sec.

This preemphasis gain is a second order shelf with 19 dB attenuation at DC (0 Hz) and unity gain at high

27

frequencies. The upper cutoff frequency is 300 Hz and the lower cutoff frequency is 100 Hz. For further details on the use of pre- and postemphasis, see Fielder, "Pre- and Postemphasis Techniques as Applied to Audio Recording Systems," J. Audio Eng. Soc., vol. 33, September 1985, pp. 649-657.

The following description discusses the differences between the DFT and TDAC transform versions of the invention.

## A. Processing Hardware

The basic hardware architecture of the DFT version of the invention is the same as that for the TDAC transform version of the invention, illustrated in Figures 2a and 2d. A practical implementation of a preferred embodiment of a single-channel DFT version of the invention, employing either a 44.1 kHz or a 48 kHz sample rate, utilizes a 16-bit ADC with a cycle time of no more than 20 microseconds to quantize the input time-domain signal. Any of several 16-bit digital signal processors such as the AT&T DSP-16 or Texas Instruments TMS32020 may be used to perform the required computations and to control the encode and decode processes. Static RAM provides program and data memory for the DSP. A 16-bit DAC with a cycle time of no more than 20 microseconds is used to generate an analog signal from the decoded digital signal.

Design of the coder hardware and configuration of the DSP serial ports is not unlike that described above for the TDAC transform version of the invention, and will be obvious to one skilled in the art.

## B. Input Signal Sampling and Windowing

As discussed above, the input signal is attenuated by preemphasis gain prior to sampling and quantization. The sampling in the DFT embodiment under discussion here occurs at 48 kHz. The quantized values from the ADC are 16 bits in length and are buffered into blocks 128 samples in length. One block is received every 2.67 milliseconds, which provides for a short propagation delay through the coder.

The buffered block of samples is then converted into a block-floating-point representation using one 4-bit master exponent. The block of 128 samples, left shifted by an amount equal to the value of the master exponent, is then modulated by an analysis window.

This analysis window is different from that used by the TDAC coder because of differences between the TDAC transform and the DFT. Unlike the TDAC transform, the DFT creates a sequence of one type of transform block. Each transform block is comprised of a pair of values for each of 41 transform coefficients; a real value component and an imaginary value component. (Coefficient 0 is an exception, represented by a single real value component.) See Table II. It is important to choose a window design which reduces the amount of input signal sample block overlap because the transmission rate or data storage requirements is doubled for the signal samples in the overlap interval. The DFT coder using an analysis window with 100% overlap requires approximately two times the bit rate as that required by the TDAC coder.

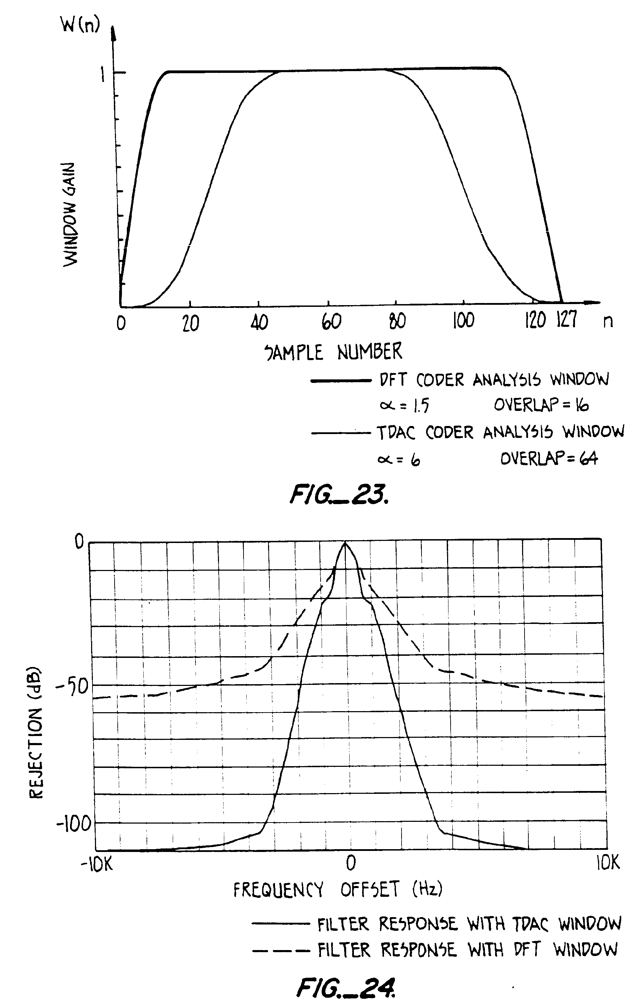

Unlike the TDAC window, the DFT window exhibits a gain of unity over a large interval, thereby reducing the block overlap length from 64 to 16 samples. See Figure 23. This reduction degrades the digital filter stopband rejection, but it incurs an increase in data rate of only 14.3% (128/(128-16)) over that of the TDAC coder.

The DFT window is generated in a manner similar to that of the TDAC embodiment except that the kernel Kaiser-Bessel function is 17 samples in length and has an alpha factor within the range of 1.5 to 3. See equation 12. The range of acceptable alpha values was determined in the same manner as that discussed above for the TDAC transform windows. Substituting these values into equations 13 through 16, the analysis and synthesis windows are obtained from the square root of the convolution product of the Kaiser-Bessel window and a rectangular window of a length 112 (the block length of 128 minus the overlap length of 16). The DFT analysis window is

$$WA(n) = \sqrt{\left\{\frac{\sum\limits_{k=0}^{111} W(n-k)}{\sum\limits_{k=0}^{16} W(k)}\right\}} \qquad \text{for } 0 \le n < N \qquad (25)$$

where W(n) = Kaiser-Bessel function of length 17, and the alpha factor is in the range 1.5 to 3.

The DFT and TDAC analysis windows are shown in Figure 23. As shown in Figure 24, the DFT window has poorer frequency selectivity than the TDAC window because of the reduced amount of overlap.

## C. Analysis Filter Bank - Forward Transform

The DFT implements the filter bank and is expressed as

$$C(k) = \sum_{n=0}^{N-1} x(n) \cdot \cos[2\pi k(\frac{n}{N})] \qquad \text{for } 0 \leq n < N \tag{26}$$

$$S(k) = \sum_{n=0}^{N-1} x(n) \cdot \sin[2\pi k(\frac{n}{N})] \qquad \text{for } 0 \leq n < N \tag{27}$$

where
$k$ = frequency coefficient number,
$n$ = input signal sample number,
$N$ = sample block length,
$x(n)$ = quantized value of input signal $x(t)$ at sample $n$,
$C(k)$ = real value or cosine coefficient $k$, and
$S(k)$ = imaginary value or sine coefficient $k$.

## D. Nonuniform Quantization

The first three sections of the nonuniform quantizer are similar to the corresponding sections of the nonuniform quantizer for the TDAC coder. The major difference is that the master exponent is determined by block-floating-point encoder 2220 prior to analysis windowing and frequency-domain transformation, and not by section two of the nonuniform quantizer as is done in the TDAC coder. Other minor differences are attributable to the differences in the structure of the block-floating-point representation, i.e., subband exponent lengths, number and length of coefficients. Compare Tables I and II. The evaluation of subband exponents in the DFT coder is based on pairs of transform coefficient values except for coefficient 0 (DC or 0 Hz) whose imaginary term is always zero and is ignored Each subband exponent value is determined from the largest component, real or imaginary, for any coefficient within the subband. The minimum bit lengths for the DFT coder are greater than that for the TDAC coder because the DFT filter frequency selectivity is poorer in this embodiment. As for the TDAC coder, the minimum bit lengths for the DFT coder were determined empirically using sinewave input and comparing filter selectivity to auditory masking characteristics.

## E. Adaptive Bit Allocation

The adaptive-bit allocation for the DFT coder differs from that used in the TDAC coder, but most of the differences stem from the structure of the transform block. Only 32 bits (rather than 34) are available for allocation. Allocation is made to both components of the real-imaginary pair for each coefficient. To simplify the allocation scheme, no dynamic bit allocations are made to coefficient 0. Its length is fixed equal to its minimum bit length as shown in Table II. Therefore, 32 bits are assigned to 40 coefficients pairs.

In contrast to the TDAC coder, roughly the same number of bits are available to assign to approximately twice as many code words. Consequently, the maximum number of bits that may be assigned to any code word is limited to 2 bits. Whereas the TDAC allocation scheme assigns as many as 4 bits to a coefficient using four tables or arrays, the DFT assignment scheme utilizes only two tiers.

## F. Formatting

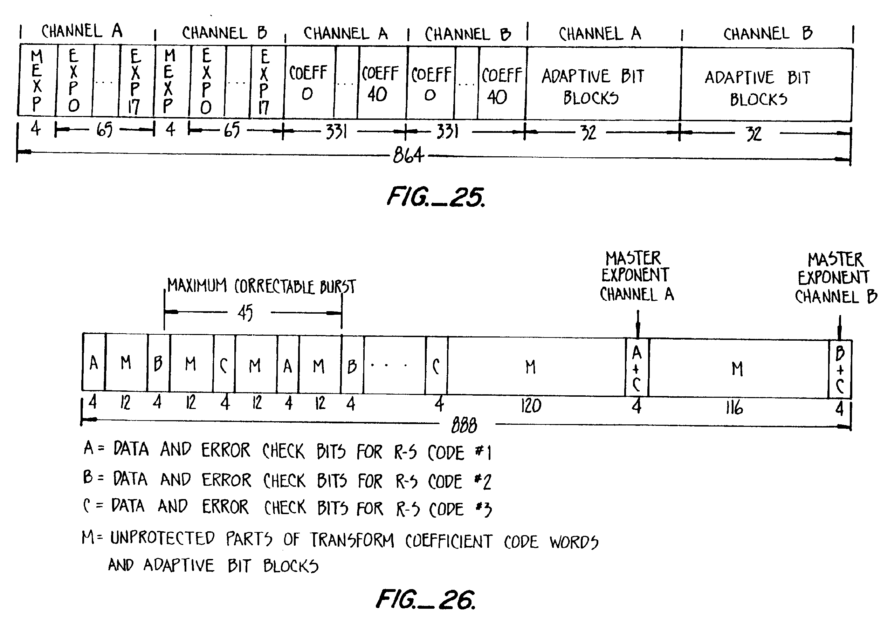

The structure of the formatted data is similar to that used for the TDAC coder, and is shown in Figures 25 and 26. The principle differences between the DFT format and the TDAC transform format arise from differences in the block-floating-point structure and the number of bits assigned to exponents and transform coefficients.

Referring to Table II, it may be seen that DFT nonuniform quantizer 2208 shown in Figure 22a produces 65 subband exponent bits, 331 transform coefficient bits, and 32 bits for adaptive-bit allocation. Block-floating-point encoder 2220 passes a 4-bit master exponent directly to formatter 2209 along path 2221. The total length of all encoded data for a single channel is 432 bits. In two-channel applications where data corruption is not

29

a problem, the preferred formatting structure is that shown in Figure 25.

For two-channel applications in which data corruption is of concern, an error correction scheme is necessary. A preferred structure is shown in Figure 26. The most critical data to protect are the master exponents and coefficient exponents which comprise 138 bits (69 bits per channel). Three Reed-Solomon codes are sufficient to protect these bits, providing the capacity to protect an additional 18 bits. This extra capacity is split equally between the two channels to provide redundant protection for the master exponent (4 bits), protection for the three most-significant bits of transform coefficient 0, and protection for the most-significant bit of the real and imaginary components of coefficient 1. Protection of the lowest frequency coefficients is desirable because the low frequency boost provided by postemphasis (see equation 24) makes any errors in code words below 300 Hz more audible.

## III. COMPUTER OPTIMIZED WINDOW DESIGN

An "optimum" window permits a transform-based digital filter to have the steepest transition band rolloff for a given level of ultimate rejection. This relationship between a window and the resultant filter frequency response is referred to in a shorthand manner as simply the window frequency response. As discussed above, these filter characteristics permit a transform coder to achieve lower bit rates for a given subjective level of encoded signal quality. For purposes of this invention, window optimization must consider the analysis-synthesis window pair rather than just an analysis-only window.

Analysis-only window design has received considerable attention but the prior art teaches little about the design of analysis-synthesis window pairs. The convolution technique described above derives a window pair from a known analysis-only window, however, it remains to be shown whether the technique can derive an optimum window pair from an optimum analysis-only window. A numerical optimization method described below, when constrained to design a window pair for use with the TDAC transform that has a specified level of ultimate rejection, creates a pair of windows in which each window has a shape substantially the same as an identically constrained window pair produced by the convolution technique. The optimization method establishes two facts: (1) it is possible to design an "optimum" window for a specified level of ultimate rejection, and (2) the convolution technique is much more computationally efficient and yet derives a window pair which is substantially optimum.

This result is very useful because it converts the problem of designing analysis-synthesis window pairs into the better understood problem of designing analysis-only windows. If an optimum analysis-only window is used as the starting point, the convolution technique will derive a window pair which is substantially optimum.

In general, the optimization process identifies an N-point analysis window whose corresponding frequency response curve best fits a target selectivity curve, subject to the constraints imposed by the TDAC transform. As discussed above, these constraints require that the square of the analysis window (the analysis-synthesis product-window), shifted by one-half block length and overlapped with itself, must add to unity within the overlap interval. Implemented as a digital computer program, the optimization process consists of the following steps: (1) initialize, (2) generate a set of points which define an analysis window, (3) construct a trial analysis window from the generated set of points, (4) determine the trial window frequency response, (5) calculate an error value for the trial window response, and (6) decide whether to continue the process.

The initialization step reads data from files which define the target or desired selectivity frequency response curve and specify a starting window shape. The target selectivity curve is derived empirically from listening tests, but its rate of transition band rolloff generally follows the lower slope of the human ear's psychoacoustic masking curve within a critical band.

The second step generates a set of points which define a trial analysis window. When the optimization process begins, the first trial window is constructed from the values specified by initialization data. As the process continues, successive trial windows are constructed by an optimization routine.

The optimization routine maintains a list of the best N/4+1 trial windows. The best window is that trial window whose frequency response curve conforms most closely to the target response curve. A Newton-Raphson technique has been used although most any multidimensional optimization method could be used. The basic strategy of the Newtonian method is to use the N/4+1 best windows to calculate the slope of a surface in an N/4 dimensional space and extrapolate the slope of the surface to its zero crossing. See, for example, Press, Numerical Recipes: The Art of Scientific Computing, New York: Cambridge University Press, 1986, pp. 254-59.

The third step constructs a trial analysis window N points in length from the set points generated in the second step. Each trial window is defined by only N/4 points. Because the window is symmetric and must add to unity with an adjacent window shifted by one-half block length, only the first N/4 points are independent. This relationship is expressed as:

$$W[N/2 - (i + 1)] \; = \; \sqrt{\{1 - W[i]^2\}} \qquad \text{for } 0 \leqq i < N/4 \quad (28)$$
$$W[i] \; = \; W[N - i - 1] \qquad \text{for } N/2 \leqq i < N \quad (29)$$

where

$W[i]$ = the analysis window function value for point i, and

$N$ = the window length.

The fourth step determines the trial window's frequency response curve. The response curve may be determined in any of several ways, however, the method used here is analogous to a swept-frequency FFT spectrum analyzer. Each point of the response curve is calculated from the average of the root-mean-square (RMS) of the corresponding transform coefficients obtained from the FFT of 100 overlapped sample blocks of a digitized input signal. The input signal is a sinusoid which sweeps through a band of frequencies one transform coefficient in width, centered about the frequency equal to one-half the Nyquist frequency. The amount of overlap between sample blocks is 50%.

For example, one embodiment of the coder samples the input signal at a 44.1 kHz rate into 128 point sample blocks. The bandwidth of one transform coefficient is 344.5 Hz (44.1 kHz / 128), and half of this bandwidth is 172.27 Hz. The Nyquist frequency is 22.05 kHz (44.1 kHz / 2), therefore one-half the Nyquist frequency is 11.025 kHz. The frequency response of a trial window is constructed from the RMS average of responses to a digitized sinusoidal signal which sweeps from a frequency of 10.85 kHz (11,025 - 172.26 Hz) to a frequency of 11.20 kHz (11,025 + 172.26 Hz). The length of the digitized signal is one hundred blocks of 128 points with a 50% overlap, or 6464 points.

The fifth step calculates an error value for the trial window response. The error value is calculated as a modified RMS of the point-by-point difference between the trial window response and the targe response curve. The modified RMS error calculation may be expressed as:

$$E \; = \; \sqrt{\left\{ \frac{\sum_{i=0}^{N} e_i^2}{N} \right\}} \tag{30}$$

where

$E$ = the modified RMS error value,

$N$ = the window length,

$$e_i \; = \; \begin{cases} (C_i - T_i) & \text{for } C_i > T_i \\ 0 & \text{otherwise.} \end{cases}$$

$C_i$ = calculated response at point i for the trial window (in dB), and

$T_i$ = response at point i of the target response curve (in dB).

The modified RMS error value is a logarithmically scaled measure because the response values are expressed in dB. A logarithmic measure is used because the number of bits required to represent transform coefficient is proportional to the logarithm of the desired signal-to-noise ratio.

The sixth step decides whether to continue the optimization process. The process continues until it has converged upon a solution or until the rate of convergence is sufficiently low.

Entries in Table III show the characteristics of several analysis windows derived by the convolutio technique, starting from Kaiser-Bessel windows with alpha values within a range between 4 and 7. See equations 12 through 17 above. The Table illustrates the trade off between the rate of transition band rolloff and the depth of stopband rejection. The rate of transition band rolloff, expressed in Hertz pe dB, is a linear approximation to the frequency response curve in the middle of the transition region Lower figures represent steeper rolloff. The level of ultimate rejection expressed in dB represents the response of the filter within the stopband relative to the frequency response at the center of the passband.

**Tables**

| Master Exp | Subband Exp | Subband Exp Ln | Coefficient Numbers | Minimum Bit Ln |
|---|---|---|---|---|
| MEXP0 | EXP0 | 3 bits* | 0 | 5 bits* |
| | EXP1 | | 1 | |
| | EXP2 | | 2 | |
| | EXP3 | | 3 | |
| | EXP4 | | 4 | |
| | EXP5 | | 5 | |
| | EXP6 | | 6 | |
| MEXP1 | EXP7 | 4 bits | 7-8 | 5 bits |
| | EXP8 | | 9-10 | |
| | EXP9 | | 11-12 | |
| | EXP10 | | 13-14 | 4 bits |
| | EXP11 | | 15-16 | |
| | EXP12 | | 17-18 | |
| | EXP13 | | 19-22 | 3 bits |
| | EXP14 | | 23-26 | |
| | EXP15 | | 27-30 | |
| | EXP16 | | 31-34 | |
| | EXP17 | | 35-38 | |
| | EXP18 | | 39-45 | 2 bits |
| 20 kHz Only | EXP19 | | 46-54 | |
| | EXP20 | | 55-62 | |

---

* The TDAC Discrete Sine Transform produces a coefficient S(0) value of zero for every block. This is known a priori by the transform decoder, therefore the DST exponent and code word for coefficient S(0) need not be transmitted or stored.

Table I

Frequency Coefficients for TDAC Coder

| Master Exp | Subband Exp | Subband Exp Ln | Coefficient Numbers | Minimum Bit Ln* |
|---|---|---|---|---|
| MEXP | | 4 bits | | |
| | EXP0 | 3 bits | 0 | 11 bits** |
| | EXP1 | | 1 | 9 bits |
| | EXP2 | | 2 | |
| | EXP3 | | 3 | |
| | EXP4 | | 4 | |
| | EXP5 | | 5 | 8 bits |
| | EXP6 | | 6 | |
| | EXP7 | 4 bits | 7-8 | 6 bits |
| | EXP8 | | 9-10 | |
| | EXP9 | | 11-12 | |
| | EXP10 | | 13-14 | 4 bits |
| | EXP11 | | 15-16 | |
| | EXP12 | | 17-18 | |
| | EXP13 | | 19-20 | |
| | | | 21-22 | 2 bits |
| | EXP14 | | 23-26 | |
| | EXP15 | | 27-30 | |
| | EXP16 | | 31-34 | |
| | EXP17 | | 35-40 | |

* Each transform coefficient is a complex number with a real and an imaginary component. The minimum bit length values shown are for each component.

** The imaginary component of coefficient 0 is always zero. This is known a priori by the transform decoder, therefore only the real component of coefficient 0 need be transmitted or stored.

Table II

Frequency Coefficients for DFT Coder

EP 0 447 495 B1

| Kaiser-Bessel Alpha Factor | Transition Band Rolloff (Hz/dB) | Stopband Ultimate Rejection (dB) |
|---|---|---|
| 4 | 25 | -89 |
| 5 | 27.5 | -99 |
| 6 | 31 | -111 |
| 7 | 33 | -122 |

Table III

Frequency Response Characteristics

for Derived Analysis Windows

## Claims

1. An encoder for the high-quality digital encoding of wideband audio information comprising signal samples, comprising

subband means (104, 108), including adaptive bit allocation means (106), for defining frequency subbands and for generating subband information in response to said signal samples, said subband information including for each of said subbands one or more digital words, each of said digital words comprising an adaptive portion and a non-adaptive portion, wherein coding accuracy of said adaptive portion is determined by said adaptive bit allocation means, and

formatting means (109) for assembling digital information including said subband information into a digital output having a format suitable for transmission or storage.

2. An encoder according to claim 1 wherein said subband means further comprises means (103) for generating analysis-window weighted signal sample blocks by weighting blocks of said signal samples with an analysis window, and wherein said subband means generates said subband information by applying a discrete transform to said analysis-window weighted signal sample blocks.

3. An encoder according to claim 1 or 2 wherein said subband means (104, 108) comprises filter bank means (104), and wherein coding accuracy of said non-adaptive portion is determined on the basis of a comparison of a representative frequency response for said filter bank means for each subband to a psychoacoustic masking threshold representative of each subband produced by a single tone or a very narrow band of noise.

4. An encoder according to claim 3 wherein a psychoacoustic masking threshold having a relatively high selectivity for frequencies below the masking tone or noise band is taken as representative of masking in lower frequency subbands and a psychoacoustic masking threshold having a relatively low selectivity for frequencies below the masking tone or noise band is taken as representative of masking in higher frequency subbands.

5. An encoder according to claim 4 wherein a psychoacoustic masking threshold for a single tone or very narrow band of noise at about 1 kHz is taken as representative for subbands within the frequency range of about 500 Hz to 2 kHz and a psychoacoustic masking threshold for a single tone or very narrow band of noise at about 4 kHz is taken as representative for subbands above about 2 kHz.

6. An encoder according to claim 3, 4, or 5 wherein coding accuracy of said non-adaptive portion is set such that the number of bits used to represent said non-adaptive portion is less than the number of bits required to have substantially no quantizing noise in excess of the representative psychoacoustic masking thresh-

34

old.

7. An encoder according to claim 6 wherein the number of bits used to represent said non-adaptive portion is two fewer than the amount required to have substantially no quantizing noise in excess of the representative psychoacoustic masking threshold.

8. An encoder according to any one of claims 1 through 7 wherein said subband information for each subband is expressed in block-floating-point form comprising one or more mantissas and a subband exponent, each of said digital words representing a mantissa wherein the coding accuracy of said adaptive portion is based on an effective exponent value, said effective exponent value equal to the value of the subband exponent.

9. An encoder according to any one of claims 1 through 7 wherein said subband information for all subbands is expressed in block-floating-point form comprising one or more mantissas for each subband, a subband exponent for each subband, and a master exponent for a set of subbands, whereby the range of subband exponent values is extended, each of said digital words representing a mantissa wherein the coding accuracy of said adaptive portion is based on an effective exponent value, said effective exponent value equal to the value represented by the subband exponent in combination with the associated master exponent.

10. An encoder according to any one of claims 1 through 9, wherein the generated subband information corresponding to an interval of said audio information constitutes a subband information block, said subband means further comprising means for estimating the relative energy level of each subband represented in a subband information block, said adaptive bit allocation means comprising
    means for allocating bits to the digital words of a first group of subbands possessing the greatest energy levels, said allocating continuing until a maximum number of bits has been allocated to each of the digital words of said first group of subbands or until the number of bits adaptively allocated equals or exceeds a limited number of adaptively allocatable bits, and
    means for allocating bits to the digital words of a second group of subbands each adjoining a subband in which each of the digital words have been allocated said maximum number of bits, each of the subbands of said second group of subbands constituting one subband of a pair of subbands adjoining one another, said allocating continuing until the maximum number of bits has been allocated to each of the digital words of said second group of subbands or until the number of bits adaptively allocated equals or exceeds said limited number of adaptively allocatable bits.

11. An encoder according to claim 10 wherein said means for allocating bits to the digital words of said second group of subbands allocates bits to the digital words of all adjoining subbands on the low-frequency side before bits are allocated to the digital words of all adjoining subbands on the high-frequency side.

12. An encoder according to claim 10 or 11 further comprising means for reducing the number of bits adaptively allocated to selected digital words until the number of bits adaptively allocated equals said limited number of adaptively allocatable bits.

13. An encoder according to any one of claims 10 through 12 in combination with claim 8 or 9 wherein said means for establishing the relative energy level of each subband represented in a subband information block establishes said relative energy level based upon the effective exponent value.

14. An encoder according to claim 13 wherein said means for establishing the relative energy level of each subband represented in a subband information block comprises
    means for ascertaining the effective exponent value of the subband which contains the maximum of the values represented by each mantissa in combination with its associated effective exponent value, and
    means for assigning a level number to each of all subbands represented in a subband information block, said level number equal to said maximum number of bits allocatable to each digital word reduced by the absolute value of the difference between the ascertained effective exponent value and the effective exponent value corresponding to the subband for which a level is to be assigned, but in no case assigning a level number less than zero.

15. An encoder according to any one of claims 1 through 14 wherein said formatting means (109) represents each digital word in as many as two segments, a first segment representing the digital word's minimum length being composed of a fixed number of bits and a second segment, if present, of varying bit length composed of adaptively allocated bits.

16. An encoder for the high-quality digital encoding of wideband analog audio information having a short signal propagation delay, comprising

means (101, 2201) for sampling and quantizing said wideband analog audio information into time-domain signal sample blocks, said signal sample blocks have a time period resulting in a signal propagation delay short enough so that an encode/decode system employing the encoder is usable for real-time aural feedback to a human operator,

analysis-window means (103, 2203) for modulating each signal sample block with a weighting function,

means (104, 2204) for generating frequency-domain transform coefficients in response to analysis-window weighted time-domain signal sample blocks, said means for generating frequency-domain transform coefficients comprises means for applying a discrete transform function to the analysis-window weighted time-domain signal sample blocks,

nonuniform subband quantizer means, (108, 2208) including adaptive bit allocation means, (106, 2206) for quantizing each frequency-domain transform coefficient and for grouping such quantized transform coefficients into subbands, and

formatting means (109, 2209) for assembling the nonuniformly quantized and grouped transform coefficients into a digital output having a format suitable for transmission or storage.

17. An encoder according to claim 16 wherein said analysis-window means (103, 2204) comprises the analysis window of an analysis-synthesis window pair.

18. An encoder for the high-quality digital encoding of wideband analog audio information comprising

means (101, 2201) for sampling and quantizing said wideband analog audio information into time-domain signal sample blocks,

analysis-window means (103, 2203) for modulating each signal sample block with a weighting function, wherein said weighting function is an analysis window of an analysis-synthesis window pair,

means (104, 2204) for generating frequency-domain transform coefficients in response to analysis-window 5 weighted time-domain signal sample blocks, said means for generating frequency-domain transform coefficients comprises means for applying a discrete transform function to the analysis-window weighted time-domain signal sample blocks,

nonuniform subband quantizer means, (108, 2208) including adaptive bit allocation means, (106, 2206) for quantizing each frequency-domain transform coefficient and for grouping such quantized transform coefficients into subbands, and

formatting means (109, 2209) for assembling the nonuniformly quantized and grouped transform coefficients into a digital output having a format suitable for transmission or storage.

19. An encoder according to claim 17 or 18 wherein said means for applying a discrete transform function alternately applies a Discrete Cosine Transform function and a Discrete Sine Transform function to the analysis-window weighted time-domain signal sample blocks in accordance with the Time-Domain Aliasing Cancellation technique and wherein said analysis window is derived from a Kaiser-Bessel window having an alpha value in the range of four through seven.

20. An encoder according to claim 17 or 18 wherein said means for applying a discrete transform function applies a Discrete Fourier Transform and wherein said analysis window is derived from a Kaiser-Bessel window having an alpha value of in the range of one and one-half through three.

21. An encoder according to claim 17 or 18 wherein said analysis-synthesis window pair is derived from substantially any window in the class of analysis windows permitting the design of a filter bank in which the transform-based digital filters have desired selectivity characteristics and the ability to trade off steepness of transition band rolloff against depth of stopband rejection in the filter characteristics.

22. An encoder according to claim 21 wherein said class of analysis windows includes the Kaiser-Bessel and Dolph-Chebyshev windows and windows derived from finite impulse filter coefficients using the Parks-McClellan method.

23. An encoder for the high-quality digital encoding of wideband audio information comprising signal sample blocks, said encoder comprising

analysis-window means (103, 2203) for generating analysis-window weighted sample blocks by weighting each signal sample block with a weighting function, wherein said weighting function is the analysis-window within a pair of analysis-/synthesis-windows, each of length $N$, and the product of both windows in said pair is a product window of length $N$ with an overlap interval of length V, said product window when overlapped and added o with itself across the overlap interval sums to a constant value,

means (104, 2204) for generating frequency-domain transform coefficients by applying a discrete transform function to said analysis-window weighted sample blocks,

nonuniform subband quantizer means, (108, 2208) including adaptive bit allocation means, (106, 2206) for quantizing each frequency-domain transform coefficient and for grouping such quantized transform coefficients into subbands, and

formatting means (109, 2209) for assembling the nonuniformly quantized and grouped transform coefficients into a digital output having a format suitable for transmission or storage, wherein said analysis-synthesis window pair is determinable by a method comprising

(1) generating an initial window having a length of $1+V$,

(2) generating an interim window by convolving said initial window with a unit pulse function of length $N-V$,

(3) defining a scaling factor by convolving said initial window with a unit pulse function of length one,

(4) obtaining said product window by dividing said interim window by said scaling factor, and

(5) obtaining said analysis-window by taking the $A$th power of said product window, and obtaining said synthesis-window by taking the $B$th power of said product window, wherein $A+B$ equals one.

24. An encoder according to claim 21 wherein the steepness of the transition band rolloff of the analysis window is maximized for the desired level of stopband rejection.

25. An encoder according to claim 24 wherein the desired level of stopband rejection is determined empirically by listening tests.

26. An encoder according to claim 24 wherein the transition band rolloff generally follows the lower slope of the human ear's psychoacoustic masking curve within a critical band.

27. An encoder according to claim 21 wherein the product of said analysis-synthesis window pair is derived from substantially any window in said class of analysis windows with the aid of a general purpose computer by a numerical optimization method comprising

initializing by reading data from files which define the desired frequency selectivity characteristics and specify a starting window shape,

generating a trial analysis window initially from values specified in the initialization data for the first trial window and subsequently for successive trial windows from values specified by a multidimensional optimization routine,

determining the frequency response characteristics of the digital filters that result from the use of the constructed trial analysis window in a transform coder,

calculating an error value for such frequency response characteristics with respect to the desired selectivity frequency characteristics of the digital filters, and

determining whether to continue the optimization process.

28. An encoder according to claim 17 or 18 wherein said analysis-synthesis window pair is derived from an analysis window derived from a numerical optimization method.

29. An encoder according to claim 16 or 18 further comprising preemphasis means (2219) for treating the wideband analog audio information prior to the sampling and quantizing of the information, wherein said means for applying a discrete transform function applies a Discrete Fourier Transform.

30. An encoder according to claim 29 wherein said preemphasis means (2219) has a second order shelf characteristic with about 19 dB attenuation at DC (0 Hz) and unity gain at high frequencies.

31. An encoder according to claim 1 wherein said formatting means places subband information represented by an invariant number of bits in pre-established positions within said digital output.

32. An encoder for the high-quality digital encoding of wideband analog audio information comprising

means (101, 2201) for sampling and quantizing said wideband analog audio information into time-domain signal sample blocks,

analysis-window means (103, 2203) for modulating each signal sample block with a weighting function, means (104, 2204) for generating frequency-domain transform coefficients in response to analysis-window weighted time-domain signal sample blocks,

nonuniform subband quantizer means, (108, 2208) including adaptive bit allocation means, (106, 2206) for quantizing each frequency-domain transform coefficient and for grouping such quantized transform coefficients into subbands, and

formatting means (109, 2209) for assembling the nonuniformly quantized and grouped transform coefficients into a digital output having a format suitable for transmission or storage, said formatting means employs error correction and detection codes to reduce the sensitivity of critical data to noise burst errors, said formatting means assembles the error correction and detection codes and data into formatted blocks and scatters the error correction and detection codes and the critical data throughout the formatted blocks to reduce the sensitivity of critical data to noise burst errors.

33. An encoder for the high-quality digital encoding of two channels of wideband analog audio information comprising

means (101, 2201) for sampling and quantizing said two channels of wideband analog audio information into time-domain signal sample blocks, said time-domain sample block samples are pure real values,

analysis-window means (103, 2203) for modulating each signal sample block with a weighting function,

means (104, 2204) for generating frequency-domain transform coefficients in response to analysis-window weighted time-domain signal sample blocks, said means comprises means for applying a discrete transform function to the analysis-window weighted time-domain signal sample blocks, said means for applying a discrete transform function is implemented by a single fast Fourier transform applied against two concurrent time-domain signal sample blocks,

nonuniform subband quantizer means, (108, 2208) including adaptive bit allocation means, (106, 2206) for quantizing each frequency-domain transform coefficient and for grouping such quantized transform coefficients into subbands, and

formatting means (109, 2209) for assembling the nonuniformly quantized and grouped transform coefficients into a digital output having a format suitable for transmission or storage.

34. A decoder for the high-quality reproduction of wideband audio information from a coded signal, comprising

deformatting means (112), including adaptive bit allocation means, for receiving said coded signal, for deriving subband information from said coded signal, and for reconstructing digital words using said derived subband information, said digital words comprising an adaptive portion and a non-adaptive portion, wherein coding o accuracy of said adaptive portion is determined by said adaptive bit allocation means, and

inverse subband means for generating full-band signal samples in response to said derived subband information.

35. A decoder according to claim 34 wherein said inverse subband means generates said full-band signal samples by applying a discrete inverse transform to said derived subband information.

36. A decoder according to claim 34 or 35 wherein said inverse subband means (113, 114) comprises inverse filter bank means (114), and wherein coding accuracy of said non-adaptive portion is determined on the basis of a comparison of a representative frequency response for said inverse filter bank means for each subband to a psychoacoustic masking threshold representative of each subband produced by a single tone or a very narrow band of noise.

37. A decoder according to claim 36 wherein a psychoacoustic masking threshold having a relatively high selectivity for frequencies below the masking tone or noise band is taken as representative of masking in lower frequency subbands and a psychoacoustic masking threshold having a relatively low selectivity for frequencies below the masking tone or noise band is taken as representative of masking in higher frequency subbands.

38. A decoder according to claim 37 wherein a psychoacoustic masking threshold for a single tone or very narrow band of noise at about 1 kHz is taken as representative for subbands within the frequency range of about 500 Hz to 2 kHz and a psychoacoustic masking threshold for a single tone or very narrow band of noise at about 4 kHz is taken as representative for subbands above about 2 kHz.

39. A decoder according to claim 36, 37, or 38 wherein coding accuracy of said non-adaptive portion is set such that the number of bits used to represent said non-adaptive portion is less than the number of bits required to have substantially no quantizing noise in excess of the representative psychoacoustic masking threshold.

40. A decoder according to claim 39 wherein the number of bits used to represent said non-adaptive portion is two fewer than the amount required to have substantially no quantizing noise in excess of the representative psychoacoustic masking threshold.

41. A decoder according to any one of claims 34 through 40 wherein information for each subband in said derived subband information block is expressed in block-floating-point form comprising one or more mantissas and a subband exponent, each of said digital words representing a mantissa wherein the coding accuracy of said adaptive portion is based on an effective exponent value, said effective exponent value equal to the value of the subband exponent.

42. A decoder according to any one of claims 34 through 40 wherein said information for all subbands in said derived subband information block is expressed in block-floating-point form comprising one or more mantissas for each subband, a subband exponent for each subband, and a master exponent for a set of subbands, whereby the range of subband exponent values is extended, each of said digital words representing a mantissa wherein the coding accuracy of said adaptive portion is based on an effective exponent value, said effective exponent value equal to the value represented by the subband exponent in combination with the associated master exponent.

43. A decoder according to any one of claims 34 through 42 wherein said subband information derived from an interval of said coded signal constitutes a subband information block, said decoder further comprising means for estimating the relative energy level of each subband represented in a subband information block, and wherein said adaptive bit allocation means assigns bits to at least some digital words, said adaptive bit allocation means comprising
means for allocating bits to the digital words of a o first group of subbands possessing the greatest energy levels, said allocating continuing until a maximum number of bits has been allocated to each of the digital words of said first group of subbands or until the number of bits adaptively allocated equals or exceeds a limited number of adaptively allocatable bits, and
means for allocating bits to the digital words of a second group of subbands each adjoining a subband in which each of the digital words have been allocated said maximum number of bits, each of the subbands of said second group of subbands constituting one subband of a pair of subbands adjoining one another, said allocating continuing until the maximum number of bits has been allocated to each of the digital words of said second group of subbands or until the number of bits adaptively allocated equals or exceeds said limited number of adaptively allocatable bits.

44. A decoder according to claim 43 wherein said means for allocating bits to the digital words of said second group of subbands allocates bits to the digital words of all adjoining subbands on the low-frequency side before bits are allocated to the digital words of all adjoining subbands on the high-frequency side.

45. A decoder according to claim 43 or 44 further comprising means for reducing the number of bits adaptively allocated to selected digital words until the number of bits adaptively allocated equals said limited number of adaptively allocatable bits.

46. A decoder according to any one of claims 43 through 45 in combination with claim 41 or 42 wherein said means for establishing the relative energy level of each subband represented in a derived subband information block establishes said relative energy level based upon the effective exponent value.

47. A decoder according to claim 46 wherein said means for establishing the relative energy level of each subband represented in a derived subband information block comprises
means for ascertaining the effective exponent value of the subband which contains the maximum of the values represented by each mantissa in combination with its associated effective exponent value, and

means for assigning a level number to each of all subbands represented in a derived subband information block, said level number equal to said maximum number of bits allocatable to each digital word reduced by the absolute value of the difference between the ascertained effective exponent value and the effective exponent value corresponding to the subband for which a level is to be assigned, but in no case assigning a level number less than zero.

48. An decoder according to any one of claims 34 through 47 wherein said deformatting means (112) reconstructs each digital word from as many as two segments, a first segment representing the digital word's minimum length being composed of a fixed number of bits and a second segment, if present, of varying bit length composed of adaptively allocated bits.

49. A decoder for the high-quality reproduction of digitally encoded wideband analog audio information, wherein the information was digitally encoded by an encoder that samples and quantizes said information into time-domain signal sample blocks, modulates each sample block in an analysis window with a weighting function, generates frequency-domain transform coefficients in response to analysis-window weighted time-domain signal sample blocks, nonuniformly quantizes each frequency-domain transform coefficient and groups such quantized transform coefficients into subbands, and assembles the nonuniformly quantized and grouped transform coefficients into a digital output having a format suitable for transmission or storage, comprising

deformatting means (112, 2212) receiving said digital output for deriving said quantized transform coefficients therefrom,

linearization means (113, 2213) for reconstructing decoded frequency-domain transform coefficients from the deformatted nonuniformly quantized transform coefficients,

means (114, 2214) for generating time-domain signal sample blocks in response to frequency-domain transform coefficients, said means having characteristics inverse to those of the means in the encoder for generating frequency-domain transform coefficients, said time-domain signal sample blocks having a time period resulting in a signal propagation delay short enough so that an encode/decode system employing the decoder is usable for real-time aural feedback to a human operator, said means for generating time-domain signal blocks comprises means for applying an inverse discrete transform function to the frequency-domain transform coefficients,

synthesis window means (115, 2215) for modulating the time-domain signal sample blocks to reduce the effects of quantizing errors at the block boundaries created during the encode/decode process, said synthesis window means having characteristics such that the product of its response and the response of said analysis window is unity when two adjacent signal sample blocks are overlapped and added,

signal block overlap-add means (116, 2216) for cancelling the weighting effects of the analysis window and the synthesis window means to recover a digitized representation of the time-domain signal, and

time-domain signal output means (117, 2217) for converting the digital time-domain signal to analog form.

50. A decoder according to claim 49 wherein said analysis window and said synthesis window comprise an analysis-synthesis window pair.

51. A decoder for the high-quality reproduction of digitally encoded wideband analog audio information, wherein the information was digitally encoded by an encoder that samples and quantizes said information into time-domain signal sample blocks, modulates each sample block in an analysis window with a weighting function, generates frequency-domain transform coefficients in response to analysis-window weighted time-domain signal sample blocks, nonuniformly quantizes each frequency-domain transform coefficient and groups such quantized transform coefficients into subbands, and assembles the nonuniformly quantized and grouped transform coefficients into a digital output having a format suitable for transmission or storage, comprising

deformatting means (112, 2212) receiving said digital output for deriving said quantized transform coefficients therefrom,

linearization means (113, 2213) for reconstructing decoded frequency-domain transform coefficients from the deformatted nonuniformly quantized transform coefficients,

means (114, 2214) for generating time-domain signal sample blocks in response to frequency-domain transform coefficients, said means having characteristics inverse to those of the means in the encoder for generating frequency-domain transform coefficients, said means for generating time-domain signal blocks comprises means for applying an inverse discrete transform function to the frequency-domain transform coefficients,

synthesis window means (115, 2215) comprising a synthesis window for modulating the time-domain signal sample blocks to reduce the effects of quantizing errors at the block boundaries created during the encode/decode process, said synthesis window means having characteristics such that the product of its response and the response of said analysis window is unity when two adjacent signal sample blocks are overlapped and added, wherein said synthesis window is the synthesis window of an analysis-synthesis window pair,

signal block overlap-add means (116, 2216) for cancelling the weighting effects of the analysis window and the synthesis window means to recover a digitized representation of the time-domain signal, and

time-domain signal output means (117, 2217) for converting the digital time-domain signal to analog form.

52. A decoder according to claim 50 or 51 wherein said means for applying an inverse discrete transform function alternately applies an inverse Discrete Cosine Transform function and an inverse Discrete Sine Transform function to the frequency-domain transform coefficients in accordance with the Time-Domain Aliasing Cancellation technique and wherein said windows are derived from a Kaiser-Bessel window having an alpha value in the range of four through seven.

53. A decoder according to claim 50 or 51 wherein said means for applying an discrete transform function applies an inverse Discrete Fourier Transform and wherein said windows are derived from a Kaiser-Bessel window having an alpha value of in the range of one and one-half through three.

54. A decoder according to claim 50 or 51 wherein said analysis-synthesis window pair is derived from substantially any window in the class of analysis windows permitting the design of a filter bank in which the transform-based digital filters have desired selectivity characteristics and the ability to trade off steepness of transition band rolloff against depth of stopband rejection in the filter characteristics.

55. A decoder according to claim 54 wherein said class of analysis windows includes the Kaiser-Bessel and Dolph-Chebyshev windows and windows derived from finite impulse filter coefficients using the Parks-McClellan method.

56. A decoder for the high-quality reproduction of digitally encoded wideband audio information, wherein the information was digitally encoded by an encoder that generates analysis-window weighted sample blocks by weighting blocks of audio information samples with an analysis window function, generates frequency-domain transform coefficients by applying a forward transform to said analysis-window weighted sample blocks, and encodes said transform coefficients into a digital output having a format suitable for transmission or storage, said decoder comprising

deformatting means (112, 2212) receiving said digital output for reconstructing said frequency-domain transform coefficients therefrom,

means (114, 2214) for generating time-domain signal sample blocks in response to said reconstructed frequency-domain transform coefficients by applying an inverse transform having characteristics inverse to those of said forward transform, and

synthesis window means (115, 2215) for weighting the time-domain signal sample blocks with a synthesis-window function, wherein said synthesis window function is the synthesis-window within a pair of analysis-/synthesis-windows, each of length $N$, and the product of both windows in said pair is a product window of length $N$ with an overlap interval of length $V$, said product window when overlapped and added with itself across the overlap interval sums to a constant value, and

signal block overlap-add means (116, 2216) for cancelling the weighting effects of the analysis window and the synthesis window means to recover a digital representation of said audio information, wherein said analysis-synthesis window pair is determinable by a method comprising

(1) generating an initial window having a length of $1+V$,

(2) generating an interim window by convolving said initial window with a unit pulse function of length $N-V$,

(3) defining a scaling factor by convolving said initial window with a unit pulse function of length one,

(4) obtaining said product window by dividing said interim window by said scaling factor, and

(5) obtaining said analysis-window by taking the Ath power of said product window, and obtaining said synthesis-window by taking the Bth power of said product window, wherein *A+B* equals one.

57. A decoder according to claim 54 wherein the steepness of the transition band rolloff of the analysis and synthesis windows are maximized for the desired level of stopband rejection.

58. A decoder according to claim 57 wherein the desired level of stopband rejection is determined empirically by listening tests.

59. A decoder according to claim 57 wherein the transition band rolloff generally follows the lower slope of the human ear's psychoacoustic masking curve within a critical band.

60. A decoder according to claim 54 wherein the product of said analysis-synthesis window pair is derived from substantially any window in said class of analysis windows with the aid of a general purpose computer by a numerical optimization method comprising

initializing by reading data from files which define the desired frequency selectivity characteristics and specify a starting window shape,

generating a trial analysis window initially from values specified in the initialization data for the first trial window and subsequently for successive trial windows from values specified by a multidimensional optimization routine,

determining the frequency response characteristics of the digital filters that result from the use of the constructed trial analysis window in a transform coder,

calculating an error value for such frequency response characteristics with respect to the desired selectivity frequency characteristics of the digital filters, and

determining whether to continue the optimization process.

61. A decoder according to claim 50 or 51 wherein said analysis-synthesis window pair is derived from an analysis window derived from a numerical optimization method.

62. A decoder according to claim 49 or 51 further comprising deemphasis means (2224) for treating the wideband analog audio information output from said time-domain signal output means, (2217) wherein said means for applying an inverse discrete transform function applies an inverse Discrete Fourier Transform.

63. A decoder according to claim 62 wherein said deemphasis means (2224) has a characteristic which is the inverse of a second order shelf characteristic with about 19 dB attenuation at DC (0 Hz) and unity gain at high frequencies.

64. A system for the high-quality processing of wideband analog audio information comprising an encoder according to any one of claims 1-33 and a decoder according to any one of claims 34-63.

65. A system according to claim 64 wherein the signal propagation delay through the system, comprising the period of said time-domain signal sample blocks in the encoder, the period of said time-domain signal sample blocks in the decoder, the processing time of said encoder, and the processing time of said decoder, is short enough that the system is usable for real-time aural feedback to a human operator.

66. A decoder according to claim 34 wherein said coded signal comprises digital information represented by an invariant number of bits and digital information represented by an adaptive number of bits, and wherein said deformatting means further comprises means for deriving said subband information from said digital information represented by an invariant number of bits which is placed in pre-established positions within said coded signal.

67. An encoder according to claim 1 wherein said subband means generates said subband information by applying a filterbank to said signal samples, and wherein the coding accuracy of said nonadaptive portion is determinable by a method comprising

(1) comparing a representative frequency response for a frequency subband of said filterbank to a representative psychoacoustic masking threshold for spectral energy within said frequency subband,

(2) generating a subband value equal to the number of bits required to encode spectral energy within said frequency subband such that substantially no quantizing noise exceeds said representative psychoacoustic masking threshold,

(3) setting said nonadaptive coding accuracy for said frequency subband less than said subband value, and

(4) reiterating the previous steps for each of said plurality of frequency subbands, wherein the respective nonadaptive coding accuracy is set less than the corresponding subband value.

**68.** A decoder according to claim 34 wherein said inverse subband means generates said full-band signal samples by applying an inverse filterbank to said derived subband information, and wherein the coding accuracy of said nonadaptive coding portion is determinable by a method comprising

(1) comparing a representative frequency response for a frequency subband of said inverse filterbank to a representative psychoacoustic masking threshold for spectral energy within said frequency subband,

(2) generating a subband value equal to the number of bits required to encode spectral energy within said frequency subband such that substantially no quantizing noise exceeds said representative psychoacoustic masking threshold,

(3) setting said nonadaptive coding accuracy for said frequency subband less than said subband value, and

(4) reiterating the previous steps for each of said plurality of frequency subbands, wherein the respective nonadaptive coding accuracy is set less than the corresponding subband value, and

means for generating said reproduction of audio information in response to said subband information.

**69.** An apparatus according to claim 23 or 56 wherein *A* and *B* are equal.


## Patentansprüche

**1.** Codierer für die hochqualitative digitale Codierung von Signalabtastwerten enthaltender breitbandiger Audioinformation, umfassend

Teilbandmittel (104, 108), die adaptive Bitzuweisungsmittel (106) enthalten, zur Festlegung von Frequenzteilbändern und zur Erzeugung von Teilbandinformation als Antwort auf die Signalabtastwerte, wobei die Teilbandinformation für jedes der Teilbänder ein oder mehrere digitale Wörter enthält, wobei jedes der digitalen Wörter einen adaptiven Teil und einen nicht-adaptiven Teil umfaßt, und wobei die Codierungsgenauigkeit des adaptiven Teils von den adaptiven Bitzuweisungsmitteln bestimmt wird, und

Formatierungsmittel (109) zum Zusammensetzen von digitaler Information einschließlich der Teilbandinformation zu einem digitalen Ausgangssignal mit einem zur Übertragung oder Speicherung geeigneten Format.

**2.** Codierer nach Anspruch 1, bei dem die Teilbandmittel ferner Mittel zur Erzeugung von mit einem Analysefenster gewichteten Signalabtastwertblöcken durch Gewichten von Blöcken der Signalabtastwerte mit einem Analysefenster umfassen, und bei dem die Teilbandmittel die Teilbandinformation durch Anwenden einer diskreten Transformation auf die mit einem Analysefenster gewichteten Signalabtastwertblöcke erzeugen.

**3.** Codierer nach Anspruch 1 oder 2, bei dem die Teilbandmittel (104, 108) Filterbankmittel (104) umfassen, und bei dem die Codierungsgenauigkeit des nicht-adaptiven Teils auf der Basis eines Vergleichs eines repräsentativen Frequenzgangs für die Filterbankmittel für jedes Teilband mit einem psychoakustischen Maskierungs-Schwellenwert bestimmt wird, der für jedes Teilband repräsentativ ist und von einem Einzelton oder einem sehr schmalen Geräuschband erzeugt wird.

**4.** Codierer nach Anspruch 3, bei dem ein psychoakustischer Maskierungs-Schwellenwert mit einer relativ hohen Selektivität für Frequenzen unterhalb des Markierungstons oder Markierungsgeräuschbandes als repräsentativ für die Maskierung in Teilbändern niedrigerer Frequenz genommen wird, während ein psychoakustischer Maskierungs-Schwellenwert mit einer relativ niedrigen Selektivität für Frequenzen unterhalb des Maskierungstones oder des Maskierungsgeräuschbandes als repräsentativ für die Maskierung in Teilbändern höherer Frequenz genommen wird.

**5.** Codierer nach Anspruch 4, bei dem ein psychoakustischer Maskierungs-Schwellenwert für einen Einzelton oder ein sehr schmales Geräuschband bei etwa 1 kHz als repräsentativ für Teilbänder innerhalb des Frequenzbereichs von etwa 500 Hz bis 2 kHz genommen wird, während ein psychoakustischer Maskierungs-Schwellenwert für einen Einzelton oder ein sehr schmales Geräuschband bei etwa 4 kHz als repräsentativ für Teilbänder oberhalb etwa 2 kHz genommen wird.

**6.** Codierer nach Anspruch 3, 4 oder 5, bei dem die Codierungsgenauigkeit des nicht-adaptiven Teils so eingestellt ist, daß die zur Darstellung des nicht-adaptiven Teils verwendete Anzahl von Bits geringer als die Anzahl von Bits ist, die dazu erforderlich ist, im wesentlichen kein Quantisierungsrauschen über den repräsentativen psychoakustischen Maskierungs-Schwellenwert hinaus zu haben.

**7.** Codierer nach Anspruch 6, bei dem die Anzahl von zur Darstellung des nicht-adaptiven Teils verwendeten Bits zwei weniger beträgt, als die Menge, die dafür erforderlich ist, daß im wesentlichen kein Quantisierungsrauschen über den repräsentativen psychoakustischen Maskierungs-Schwellenwert hinaus vorhanden ist.

**8.** Codierer nach einem der Ansprüche 1 bis 7, bei dem die Teilbandinformation für jedes Teilband in Block-Gleitkomma-Form ausgedrückt ist, umfassend eine oder mehrere Mantissen und einen Teilbandexponenten, wobei jedes der digitalen Wörtern eine Mantisse repräsentiert und die Codierungsgenauigkeit des adaptiven Teils auf einem effektiven Exponentenwert basiert, der gleich dem Wert des Teilbandexponenten ist.

**9.** Codierer nach einem der Ansprüche 1 bis 7, bei dem die Teilbandinformation für alle Teilbänder in Block-Gleitkomma-Form ausgedrückt ist, umfassend eine oder mehrere Mantissen für jedes Teilband, einen Teilbandexponenten für jedes Teilband und einen Masterexponenten für einen Satz von Teilbändern, wodurch der Bereich der Teilbandexponentenwerte ausgedehnt wird, wobei jedes der digitalen Wörter eine Mantisse repräsentiert und die Codierungsgenauigkeit des adaptiven Teils auf einem effektiven Exponentenwert basiert, der gleich dem von dem Teilbandexponenten in Verbindung mit dem zugehörigen Masterexponenten repräsentierten Wert ist.

**10.** Codierer nach einem der Ansprüche 1 bis 9, bei dem die erzeugte Teilbandinformation, die einem Intervall der Audioinformation entspricht, einen Teilband-Informationsblock darstellt, wobei die Teilbandmittel ferner Mittel zum Bewerten des relativen Energiepegels jedes in dem Teilband-Informationsblock repräsentierten Teilbandes umfassen und die adaptiven Bitzuweisungsmittel aufweisen

Mittel zur Zuweisung von Bits zu den digitalen Wörtern einer ersten Gruppe von Teilbändern, die die größten Energiepegel besitzen, wobei die Zuweisung fortschreitet, bis eine maximale Anzahl von Bits jedem der digitalen Wörter der ersten Gruppe von Teilbändern zugewiesen wurde oder bis die Anzahl adaptiv zugewiesener Bits einer begrenzten Anzahl adaptiv zuweisbarer Bits gleicht oder diese übersteigt, und

Mittel zur Zuweisung von Bits zu den digitalen Wörtern einer zweiten Gruppe von Teilbänder, von denen jedes an ein Teilband angrenzt, innerhalb dessen jedem der digitalen Wörter die maximale Anzahl von Bits zugewiesen wurde, wobei jedes der Teilbänder der zweiten Gruppe von Teilbändern ein Teilband eines Paares von aneinander angrenzenden Teilbändern darstellt und die Zuweisung fortschreitet, bis die maximale Anzahl von Bits jedem der digitalen Wörter der zweiten Gruppe von Teilbändern zugewiesen wurde oder bis die Anzahl adaptiv zugewiesener Bits der begrenzten Anzahl adaptiv zuweisbarer Bits gleicht oder diese übersteigt.

**11.** Codierer nach Anspruch 10, bei dem die Mittel zur Zuweisung von Bits zu den digitalen Wörtern der zweiten Gruppe von Teilbändern den digitalen Wörtern aller angrenzenden Teilbänder auf der niederfrequenten Seite Bits zuweisen, bevor Bits den digitalen Wörtern aller angrenzender Teilbänder auf der hochfrequenten Seite zugewiesen werden.

**12.** Codierer nach Anspruch 10 oder 11, ferner umfassend Mittel zur Verringerung der Anzahl von ausgewählten digitalen Wörtern adaptiv zugewiesenen Bits, bis die Anzahl von adaptiv zugewiesenen Bits der begrenzten Anzahl von adaptiv zuweisbaren Bits gleicht.

**13.** Codierer nach einem der Ansprüche 10 bis 12 in Verbindung mit Anspruch 8 oder 9, bei dem die Mittel zur Ermittlung des relativen Energiepegels jedes in einem Teilband-Informationsblock repräsentierten Teilbandes den relativen Energiepegel auf der Basis des effektiven Exponentenwerts ermitteln.

**14.** Codierer nach Anspruch 13, bei dem die Mittel zur Ermittlung des relativen Energiepegels jedes in einem Teilband-Informationsblock repräsentierten Teilbandes umfassen

Mittel zur Ermittlung des effektiven Exponentenwerts desjenigen Teilbandes, das das Maximum der von den einzelnen Mantissen in Verbindung mit ihrem zugehörigen effektiven Exponentenwert repräsentierten Werte enthält, und

Mittel zur Zuweisung einer Stufenzahl zu jedem einzelnen aller Teilbänder, die in einem Teilband-Informationsblock repräsentiert sind, wobei die Stufenzahl gleich der maximalen Anzahl von Bits ist, die jedem Digitalwort zuweisbar ist, verringert um den Absolutwert der Differenz zwischen dem ermittelten effektiven Exponentenwert und dem effektiven Exponentenwert entsprechend dem Teilband, dem ein Pegel zuzuweisen ist, wobei jedoch in keinem Fall eine Stufenzahl kleiner als null zugewiesen wird.

15. Codierer nach einem der Ansprüche 1 bis 14, bei dem die Formatierungsmittel (109) jedes digitale Wort in bis zu zwei Segmenten darstellen, einem ersten Segment, welches die minimale Länge des digitalen Worts repräsentiert und aus einer festen Anzahl von Bits zusammengesetzt ist, und einem zweiten Segment, sofern vorhanden, mit variierender Bitlänge, das sich aus adaptiv zugewiesenen Bits zusammensetzt.

16. Codierer für die hochqualitative digitale Codierung von analoger breitbandiger Audioinformation mit einer kurzen Signaldurchlaufverzögerung, umfassend

Mittel (101, 2201) zum Abtasten und Quantisieren der analogen breitbandigen Audioinformation zu Zeitbereichs-Signalabtastwertblöcken, die eine Zeitperiode aufweisen, welche zu einer Signaldurchlaufzeit führt, die kurz genug ist, damit ein den Codierer verwendendes Codier/Decodier-System für eine Echtzeit-Hörrückkopplung zu einem menschlichen Operator verwendbar ist,

Analysefenstermittel (103, 2203) zur Modulation jedes Signalabtastwertblocks mit einer Gewichtungsfunktion,

Mittel (104, 2204) zur Erzeugung von Frequenzbereichs-Transformationskoeffizienten als Antwort auf die mit einem Analysefenster gewichteten Zeitbereichs-Signalabtastwertblöcke, wobei die Mittel zur Erzeugung von Frequenzbereichs-Transformationskoeffizienten, Mittel zum Anwenden einer diskreten Transformationsfunktion auf die mit einem Analysefenster gewichteten Zeitbereichs-Signalabtastwertblöcke umfassen,

ungleichförmige Teilbandquantisiermittel (108, 2208), die adaptive Bitzuweisungsmittel (106, 2206) enthalten, zur Quantisierung jedes Frequenzbereichs-Transformationskoeffizienten und zur Gruppierung dieser quantisierten Transformationskoeffizienten in Teilbänder, und

Formatierungsmittel (109, 2209) zum Zusammensetzen der ungleichförmig quantisierten und gruppierten Transformationskoeffizienten zu einem digitalen Ausgangssignal mit einem zur Übertragung oder Speicherung geeigneten Format.

17. Codierer nach Anspruch 16, bei dem die Analysefenstermittel (103, 2204) das Analysefenster eines Analyse-Synthese-Fensterpaares umfassen.

18. Codierer zur hochqualitativen digitalen Codierung von analoger breitbandiger Audioinformation, umfassend

Mittel (101, 2001) zum Abtasten und Quantisieren der breitbandigen analogen Audioinformation zu Zeitbereichs-Signalabtastwertblöcken,

Analysefenstermittel (103, 2203) zum Modulieren jedes Signalabtastwertblocks mit einer Gewichtungsfunktion, wobei die Gewichtungsfunktion ein Analysefenster eines Analyse-Synthese-Fensterpaares ist,

Mittel (104, 2204) zum Erzeugen von Frequenzbereichs-Transformationskoeffizienten als Antwort auf die mit einem Analysefenster gewichteten Zeitbereichs-Signalabtastwertblöcke, wobei die Mittel zum Erzeugen von Frequenzbereichs-Transformationskoeffizienten Mittel zum Anwenden einer diskreten Transformationsfunktion auf die mit einem Analysefenster gewichteten Zeitbereichs-Signalabtastwertblöcke umfassen,

ungleichförmige Teilbandquantisiermittel (108, 2208), die adaptive Bitzuweisungsmittel (106, 2206) enthalten, zur Quantisierung jedes Frequenzbereichs-Transformationskoeffizienten und zum Gruppieren dieser quantisierten Transformationskoeffizienten in Teilbänder, und

Formatierungsmittel (109, 2209) zum Zusammensetzen der ungleichförmig quantisierten und gruppierten Transformationskoeffizienten zu einem digitalen Ausgangssignal mit einem zur Übertragung oder Speicherung geeigneten Format.

19. Codierer nach Anspruch 17 oder 18, bei dem die Mittel zum Anwenden einer diskreten Transformationsfunktion abwechselnd eine diskrete Cosinus-Transformationsfunktion und eine diskrete Sinus-Transformationsfunktion auf die mit einem Analysefenster gewichteten Zeitbereichs-Signalabtastwertblöcke entsprechend der Zeitbereichs-Aliasing-Auslöschtechnik (Time Domain Aliasing Cancellation) anwenden, und bei dem das Analysefenster von einem Kaiser-Bessel-Fenster mit einem Alpha-Wert im Bereich von 4 bis 7 abgeleitet ist.

20. Codierer nach Anspruch 17 oder 18, bei dem die Mittel zum Anwenden einer diskreten Transformationsfunktion eine diskrete Fourier-Transformation anwenden und bei dem das Analysefenster von einem Kaiser-Bessel-Fenster mit einem Alpha-Wert im Bereich von anderthalb bis drei abgeleitet ist.

21. Codierer nach Anspruch 17 oder 18, bei dem das Analyse-Synthese-Fensterpaar abgeleitet ist von im wesentlichen irgendeinem Fenster der Klasse von Analysefenstern, die die Gestaltung einer Filterbank gestatten, bei der die auf einer Transformation basierenden digitalen Filter gewünschte Selektivitätscharakteristiken aufweisen, sowie die Fähigkeit, die Steilheit des Übergangsbandabfalls gegen die Sperrbandunterdrückung in der Filterkennlinie auszuhandeln.

22. Codierer nach Anspruch 21, bei dem die Klasse von Analysefenstern die Kaiser-Bessel- und Dolph-Chebyshev-Fenster sowie Fenster enthält, die unter Verwendung der Parks-McClellan-Methode von nichtrekursiven Filterkoeffizienten abgeleitet wurden.

23. Codierer für die hochqualitative digitale Codierung von Signalabtastwertblöcke umfassender breitbandiger Audioinformation, umfassend

Analysefenstermittel (103, 2203) zur Erzeugung von mit einem Analysefenster gewichteten Abtastwertblöcken durch Gewichten jedes Signalabtastwertblocks mit einer Gewichtungsfunktion, wobei die Gewichtungsfunktion das Analysefenster eines Paares von Analysefenster/Synthesefenster, je der Länge N, ist und das Produkt beider Fenster des Paares ein Produktfenster der Länge N mit einem Überlappungsintervall der Länge V ist und sich das Produktfenster, wenn es überlappt und über das Überlappungsintervall mit sich selbst addiert wird, zu einem konstanten Wert summiert,

Mittel (104, 2204) zum Erzeugen von Frequenzbereichs-Transformationskoeffizienten durch Anwenden einer diskreten Transformationsfunktion auf die mit einem Analysefenster gewichteten Abtastwertblöcke,

ungleichförmige Teilbandquantisiermittel (108, 2208), die adaptive Bitzuweisungsmittel (106, 2206) enthalten, zum Quantisieren jedes Frequenzbereichs-Transformationskoeffizienten und zum Gruppieren dieser quantisierten Transformationskoeffizienten in Teilbänder, und

Formatierungsmittel (109, 2209) zum Zusammensetzen der ungleichförmig quantisierten und gruppierten Transformationskoeffizienten zu einem digitalen Ausgangssignal mit einem zur Übertragung oder Speicherung geeigneten Format,

wobei das Analyse-Synthese-Fensterpaar bestimmbar ist durch ein Verfahren umfassend

(1) Erzeugen eines Ausgangsfensters mit einer Länge 1 + V,

(2) Erzeugen eines Zwischenfensters durch Faltung des Ausgangsfensters mit einer Einheitsimpulsfunktion der Länge N-V,

(3) Definieren eines Skalierungsfaktors durch Faltung des Ausgangsfensters mit einer Einheitsimpulsfunktion der Länge 1,

(4) Gewinnen des Produktfensters durch Teilen des Zwischenfensters durch den Skalierungsfaktor, und

(5) Gewinnen des Analysefensters durch Potenzieren des Produktfensters zur A-ten Potenz und Gewinnen des Synthesefensters durch Potenzieren des Produktfensters zur B-ten Potenz, wobei A + B = 1.

24. Codierer nach Anspruch 21, bei dem die Steilheit des Übergangsbandabfalls des Analysefensters für den gewünschten Wert der Sperrbandunterdrückung maximiert ist.

25. Codierer nach Anspruch 24, bei dem der gewünschte Wert der Sperrbandunterdrückung empirisch durch Hörtests ermittelt ist.

26. Codierer nach Anspruch 24, bei dem der Übergangsbandabfall allgemein der unteren Neigung der psychoakustischen Maskierungskurve des menschlichen Ohres innerhalb eines kritischen Bandes folgt.

27. Codierer nach Anspruch 21, bei dem das Produkt des Analyse-Synthese-Fensterpaares von im wesentlichen irgendeinem Fenster der besagten Klasse von Analysefenstern mit Hilfe eines Allzweckcomputers durch ein numerisches Optimierungsverfahren abgeleitet ist, umfassend

Initialisierung durch Lesen von Daten aus Dateien, die die gewünschten Frequenzselektivitätscharakteristiken definieren und eine Startfensterform spezifizieren,

Erzeugen eines Versuchs-Analysefensters, anfänglich aufgrund von in den Initialisierungsdaten für das erste Versuchsfenster spezifizierten Werten und nachfolgend für aufeinanderfolgende Versuchsfenster aufgrund von Werten, die durch eine multidimensionale Optimierungsroutine spezifiziert werden,

Bestimmen der Frequenzgangscharakteristiken der digitalen Filter, die aus der Verwendung des konstruierten Versuchs-Analysefensters in einem Transformationscodierer resultieren,

Errechnen eines Fehlerwerts für solche Frequenzgangscharakteristiken in bezug auf die gewünschten Selektivitätsfrequenzcharakteristiken der digitalen Filter,

Bestimmen, ob der Optimierungsprozess fortgesetzt werden soll.

28. Codierer nach Anspruch 17 oder 18, bei dem das Analyse-Synthese-Fensterpaar von einem Analysefenster abgeleitet ist, welches durch ein numerisches Optimierungsverfahren abgeleitet ist.

29. Codierer nach Anspruch 16 oder 18, ferner umfassend Preemphasismittel (2219) zur Behandlung der breitbandigen analogen Audioinformation vor der Abtastung und Quantisierung der Information, wobei die Mittel zum Anwenden einer diskreten Transformationsfunktion eine diskrete Fourier-Transformation anwenden.

30. Codierer nach Anspruch 29, bei dem die Preemphasismittel (2219) eine Shelfcharakteristik zweiter Ordnung mit etwa 19 dB Abschwächung bei Gleichstrom (0 Hz) und der Verstärkung eins bei hohen Frequenzen aufweisen.

31. Codierer nach Anspruch 1, bei dem die Formatierungsmittel Teilbandinformation, die von einer invarianten Anzahl von Bits repräsentiert wird, an vorgegebenen Positionen innerhalb des digitalen Ausgangssignals plaziert.

32. Codierer für die hochqualitative digitale Codierung von breitbandiger analoger Audioinformation, umfassend

Mittel (101, 2001) zur Abtastung und Quantisierung der breitbandigen analogen Audioinformation zu Zeitbereichs-Signalabtastwertblöcken,

Analysefenstermittel (103, 2203) zur Modulation jedes Signalabtastwertblocks mit einer Gewichtungsfunktion,

Mittel (104, 2204) zur Erzeugung von Frequenzbereichs-Transformationskoeffizienten als Antwort auf mit einem Analysefenster gewichtete Zeitbereichs-Signalabtastwertblöcke,

ungleichförmige Teilbandquantisiermittel (108, 2208), die adaptive Bitzuweisungsmittel (106, 2206) enthalten, zur Quantisierung jedes Frequenzbereichs-Transformationskoeffizienten und zum Gruppieren dieser quantisierten Transformationskoeffizienten in Teilbänder, und

Formatierungsmittel (109, 2209) zum Zusammensetzen der ungleichförmig quantisierten und gruppierten Transformationskoeffizienten zu einem digitalen Ausgangssignal mit einem zur Übertragung oder Speicherung geeigneten Format, wobei die Formatierungsmittel Fehler-Korrektur- und -Erkennungscodes einsetzen, um die Empfindlichkeit kritischer Daten gegenüber Geräuschbündelfehlern zu verringern, und die Formatierungsmittel die Fehler-Korrektur- und -Erkennungscodes und Daten zu formatierten Blöcken zusammensetzen und die Fehler-Korrektur- und Erkennungscodes und die kritischen Daten über die formatierten Blöcke verstreuen, um die Empfindlichkeit kritischer Daten gegenüber Geräuschbündelfehlern zu verringern.

33. Codierer für die hochqualitative digitale Codierung von zwei Kanälen breitbandiger analoger Audioinformation umfassend

Mittel (101, 2201), zum Abtasten und Quantisieren der beiden Kanäle breitbandiger analoger Audioinformation zu Zeitbereichs-Signalabtastwertblöcken, wobei die Zeitbereichs-Abtastwertblöcke reine reelle Werte sind,

Analysefenstermittel (103, 2203) zur Modulation jedes Signalabtastwertblocks mit einer Gewichtungsfunktion,

Mittel (104, 2204) zur Erzeugung von Frequenzbereichs-Transformationskoeffizienten als Antwort auf mit einem Analysefenster gewichtete Zeitbereichs-Signalabtastwertblöcke, wobei die Mittel Mittel zum Anwenden einer diskreten Transformationsfunktion auf die mit dem Analysefenster gewichteten Zeitbereichs-Signalabtastwertblöcke umfassen und die Mittel zum Anwenden einer diskreten Transformationsfunktion durch eine einzige schnelle Fourier-Transformation implementiert sind, die auf zwei gleichzeitige Zeitbereichs-Signalabtastwertblöcke angewendet wird,

ungleichförmige Teilbandquantisiermittel (108, 2208), die adaptive Bitzuweisungsmittel (106, 2206) enthalten, zur Quantisierung jedes Frequenzbereichs-Transformationskoeffizienten und zum Gruppieren dieser quantisierten Transformationskoeffizienten in Teilbänder, und

Formatierungsmittel (109, 2209) zum Zusammensetzen der ungleichförmig quantisierten und gruppierten Transformationskoeffizienten zu einem digitalen Ausgangssignal mit einem zur Übertragung oder Speicherung geeigneten Format.

34. Decoder für die hochqualitative Reproduktion breitbandiger Audioinformation von einem codierten Signal, umfassend

Deformatierungsmittel (112), die adaptive Bitzuweisungsmittel enthalten, zum Empfang des codierten Signals, zur Ableitung von Teilbandinformation aus dem codierten Signal und zur Rekonstruktion digitaler Wörter unter Verwendung der abgeleiteten Teilbandinformation, wobei die digitalen Wörter einen adaptiven Teil und einen nicht-adaptiven Teil umfassen, und die Codierungsgenauigkeit des adaptiven Teils von den adaptiven Bitzuweisungsmitteln bestimmt wird, und

inverse Teilbandmittel zur Erzeugung von Vollband-Signalabtastwerten als Antwort auf die abgeleitete Teilbandinformation.

35. Decoder nach Anspruch 34, bei dem die inversen Teilbandmittel die Vollband-Signalabtastwerte durch Anwenden einer diskreten inversen Transformation auf die abgeleitete Teilbandinformation erzeugen.

36. Decoder nach Anspruch 34 oder 35, bei dem die inversen Teilbandmittel (113, 114) inverse Filterbandmittel (114) umfassen und bei dem die Codierungsgenauigkeit des nichtadaptiven Teils auf der Basis eines Vergleichs eines repräsentativen Frequenzgangs für die inversen Filterbankmittel für jedes Teilband mit einem psychoakustischen Maskierungs-Schwellenwert, der für jedes Teilband repräsentativ ist und von einem Einzelton oder einem sehr schmalen Geräuschband erzeugt ist, bestimmt ist.

37. Decoder nach Anspruch 36, bei dem ein psychoakustischer Maskierungs-Schwellenwert mit einer relativ hohen Selektivität für Frequenzen unterhalb des Markierungstons oder Markierungsgeräuschbandes als repräsentativ für die Maskierung in Teilbändern niedrigerer Frequenz genommen wird, während ein psychoakustischer Maskierungs-Schwellenwert mit einer relativ niedrigen Selektivität für Frequenzen unterhalb des Maskierungstones oder des Maskierungsgeräuschbandes als repräsentativ für die Maskierung in Teilbändern höherer Frequenz genommen wird.

38. Decoder nach Anspruch 37, bei dem ein psychoakustischer Maskierungs-Schwellenwert für einen Einzelton oder ein sehr schmales Geräuschband bei etwa 1 kHz als repräsentativ für Teilbänder innerhalb des Frequenzbereichs von etwa 500 Hz bis 2 kHz genommen wird, während ein psychoakustischer Maskierungs-Schwellenwert für einen Einzelton oder ein sehr schmales Geräuschband bei etwa 4 kHz als repräsentativ für Teilbänder oberhalb etwa 2 kHz genommen wird.

39. Decoder nach Anspruch 36, 37 oder 38, bei dem die Codierungsgenauigkeit des nicht-adaptiven Teils so eingestellt ist, daß die zur Darstellung des nicht-adaptiven Teils verwendete Anzahl von Bits geringer als die Anzahl von Bits ist, die dazu erforderlich ist, im wesentlichen kein Quantisierungsrauschen über den repräsentativen psychoakustischen Maskierungs-Schwellenwert hinaus zu haben.

40. Decoder nach Anspruch 39, bei dem die Anzahl von zur Darstellung des nicht-adaptiven Teils verwendeten Bits zwei weniger beträgt, als die Menge, die dafür erforderlich ist, daß im wesentlichen kein Quantisierungsrauschen über den repräsentativen psychoakustischen Maskierungs-Schwellenwert hinaus vorhanden ist.

41. Decoder nach einem der Ansprüche 34 bis 40, bei dem Information für jedes Teilband in dem abgeleiteten Teilband-Informationsblock in Block-Gleitkomma-Form ausgedrückt ist, umfassend eine oder mehrere Mantissen und einen Teilbandexponenten, wobei jedes der digitalen Wörter eine Mantisse repräsentiert und die Codierungsgenauigkeit des adaptiven Teils auf einem effektiven Exponentenwert beruht, der gleich ist dem Wert des Teilbandexponenten.

42. Decoder nach einem der Ansprüche 34 bis 40, bei dem die Information für alle Teilbänder in dem abgeleiteten Teilband-Informationsblock in Block-Gleitkomma-Form ausgedrückt ist, umfassend eine oder mehrere Mantissen für jedes Teilband, einen Teilbandexponenten für jedes Teilband und einen Masterexponenten für einen Satz von Teilbändern, wodurch der Bereich der Teilbandexponentenwerte ausgedehnt wird, wobei jedes der digitalen Wörter eine Mantisse repräsentiert und die Codierungsgenauigkeit des adaptiven Teils auf einem effektiven Exponentenwert beruht, der gleich ist dem Wert, der von dem Teilbandexponenten in Verbindung mit dem zugehörigen Masterexponenten repräsentiert wird.

43. Decoder nach einem der Ansprüche 34 bis 42, bei dem die Teilbandinformation, die von einem Intervall des codierten Signals abgeleitet ist, einen Teilband-Informationsblock darstellt, der Decoder ferner Mittel zur Bewertung des relativen Energiepegels jedes Teilbandes, das in dem Teilband-Informationsblock repräsentiert ist, enthält und bei dem die adaptiven Bitzuweisungsmittel Bits wenigstens einigen der digitalen Wörter zuweisen, wobei die adaptiven Bitzuweisungsmittel umfassen

Mittel zur Zuweisung von Bits zu den digitalen Wörtern einer ersten Gruppe von Teilbändern, die die größten Energiepegel besitzen, wobei die Zuweisung fortschreitet, bis eine maximale Anzahl von Bits jedem der digitalen Wörter der ersten Gruppe von Teilbändern zugewiesen wurde oder bis die Anzahl adaptiv zugewiesener Bits einer begrenzten Anzahl adaptiv zuweisbarer Bits gleicht oder diese übersteigt, und

Mittel zur Zuweisung von Bits zu den digitalen Wörtern einer zweiten Gruppe von Teilbänder, von denen jedes an ein Teilband angrenzt, innerhalb dessen jedem der digitalen Wörter die maximale Anzahl von Bits zugewiesen wurde, wobei jedes der Teilbänder der zweiten Gruppe von Teilbändern ein Teilband eines Paares von aneinander angrenzenden Teilbändern darstellt und die Zuweisung fortschreitet, bis die maximale Anzahl von Bits jedem der digitalen Wörter der zweiten Gruppe von Teilbändern zugewiesen wurde oder bis die Anzahl adaptiv zugewiesener Bits der begrenzten Anzahl adaptiv zuweisbarer Bits gleicht oder diese übersteigt.

44. Decoder nach Anspruch 43, bei dem die Mittel zur Zuweisung von Bits zu den digitalen Wörtern der zweiten Gruppe von Teilbändern den digitalen Wörtern aller angrenzenden Teilbänder auf der niederfrequenten Seite Bits zuweisen, bevor Bits den digitalen Wörtern aller angrenzender Teilbänder auf der hochfrequenten Seite zugewiesen werden.

45. Decoder nach Anspruch 43 oder 44, ferner umfassend Mittel zur Verringerung der Anzahl von ausgewählten digitalen Wörtern adaptiv zugewiesenen Bits, bis die Anzahl von adaptiv zugewiesenen Bits der begrenzten Anzahl von adaptiv zuweisbaren Bits gleicht.

46. Decoder nach einem der Ansprüche 43 bis 45 in Verbindung mit Anspruch 41 oder 42, bei dem die Mittel zur Ermittlung des relativen Energiepegels jedes in einem abgeleiteten Teilband-Informationsblock repräsentierten Teilbandes den relativen Energiepegel auf der Basis des effektiven Exponentenwerts ermittelt.

47. Decoder nach Anspruch 46, bei dem die Mittel zur Ermittlung des relativen Energiepegels jedes in einem abgeleiteten Teilband-Informationsblock repräsentierten Teilbandes umfassen

Mittel zur Ermittlung des effektiven Exponentenwerts desjenigen Teilbandes, das das Maximum der von den einzelnen Mantissen in Verbindung mit ihrem zugehörigen effektiven Exponentenwert repräsentierten Werte enthält, und

Mittel zur Zuweisung einer Stufenzahl zu jedem einzelnen aller Teilbänder, die in einem abgeleiteten Teilband-Informationsblock repräsentiert sind, wobei die Stufenzahl gleich der maximalen Anzahl von Bits ist, die jedem Digitalwort zuweisbar ist, verringert um den Absolutwert der Differenz zwischen dem ermittelten effektiven Exponentenwert und dem effektiven Exponentenwert entsprechend dem Teilband, dem ein Pegel zuzuweisen ist, wobei jedoch in keinem Fall eine Stufenzahl kleiner als null zugewiesen wird.

48. Decoder nach einem der Ansprüche 34 bis 47, bei dem die Deformatierungsmittel (112) jedes digitale Wort aus bis zu zwei Segmenten rekonstruiert, einem ersten Segment, das die Minimallänge des digitalen Worts repräsentiert und sich aus einer festen Anzahl von Bits zusammensetzt, und einem zweiten Segment, falls vorhanden, einer variierenden Bitlänge, das sich aus adaptiv zugewiesenen Bits zusammensetzt.

49. Decoder zur hochqualitativen Reproduktion digital codierter breitbandiger analoger Audioinformation, bei dem die Information mittels eines Codierers digital codiert wurde, der die Information zu Zeitbereichs-Signalabtastwertblöcken abtastet und quantisiert, jeden Abtastwertblock in einem Analysefenster mit einer Gewichtungsfunktion moduliert, als Antwort auf die mit einem Analysefenster gewichteten Zeitbereichs-Signalabtastwertblöcke Frequenzbereichs-Transformationskoeffizienten erzeugt, jeden Frequenzbereichs-Transformationskoeffizienten ungleichförmig quantisiert und diese quantisierten Transformationskoeffizienten in Teilbänder gruppiert, und die ungleichförmig quantisierten und gruppierten Transformationskoeffizienten zu einem digitalen Ausgangssignal mit einem zur Übertragung oder Speicherung geeigneten Format zusammensetzt, umfassend

Deformatierungsmittel (112, 2212), die das digitale Ausgangssignal erhalten, um daraus die quantisierten Transformationskoeffizienten abzuleiten,

Linearisierungsmittel (113, 2213) zur Rekonstruktion decodierter Frequenzbereichs-Transformationskoeffizienten aus den deformatierten, ungleichförmig quantisierten Transformationskoeffizienten,

Mittel (114, 2214) zur Erzeugung von Zeitbereichs-Signalabtastwertblöcken als Antwort auf die Frequenzbereichs-Transformationskoeffizienten, wobei die Mittel inverse Charakteristiken zu jenen der Mittel in dem Codierer zur Erzeugung der Frequenzbereichs-Transformationskoeffizienten aufweisen, wobei die Zeitbereichssignalabtastwertblöcke eine Zeitperiode aufweisen, die in einer Signaldurchlaufzeit resultiert, die kurz genug ist, damit ein den Decoder einsetzendes Codier/Decodiersystem für eine Echtzeit-Hörrückkopplung zu einem menschlichen Operator verwendbar ist, wobei die Mittel zur Erzeugung von Zeitbereichs-Signalblöcken Mittel zum Anwenden einer inversen diskreten Transformationsfunktion auf die Frequenzbereichs-Transformationskoeffizienten umfassen,

Synthesefenstermittel (115, 2215) zum Modulieren der Zeitbereichs-Signalabtastwertblöcke zur Verringerung der Effekte von Quantisierungsfehlern an den Blockgrenzen, die während des Codier/Decodierprozesses entstehen, wobei die Synthesefenstermittel Eigenschaften aufweisen, derart, daß das Produkt ihrer Antwort und der Antwort des Analysefensters eins ergibt, wenn zwei benachbarte Signalabtastwertblöcke überlappt und addiert werden,

Signalblock-Überlappungs-Addierungsmittel (116, 2216) zur Aufhebung der Gewichtungseffekte der Analysefenster- und der Synthesefenstermittel zur Wiedergewinnung einer digitalisierten Repräsentation des Zeitbereichssignals, und

Zeitbereichssignalausgangsmittel (117, 2217) zur Umsetzung des digitalen Zeitbereichssignals in analoge Form.

50. Decoder nach Anspruch 49, bei dem das Analysefenster und das Synthesefenster ein Analyse-Synthese-Fensterpaar umfassen.

51. Decoder für die hochqualitative Reproduktion digital codierter breitbandiger analoger Audioinformation, bei dem die Information mittels eines Codierers digital codiert wurde, der die Information zu Zeitbereichs-Signalabtastwertblöcken abtastet und quantisiert, jeden Abtastwertblock in einem Analysefenster mit einer Gewichtungsfunktion moduliert, als Antwort auf mit einem Analysefenster gewichtete Zeitbereichs-Signalabtastwertblöcke Frequenzbereichs-Transformationskoeffizienten erzeugt, jeden Frequenzbereichs-Transformationskoeffizient ungleichförmig quantisiert und diese quantisierten Transformationskoeffizienten in Teilbänder gruppiert, und die ungleichförmig quantisierten und gruppierten Transformationskoeffizienten zu einem digitalen Ausgangssignal mit einem zur Übertragung oder Speicherung geeigneten Format zusammensetzt, umfassend

Deformatierungsmittel (112, 2212), die das digitale Ausgangssignal empfangen, um daraus die quantisierten Transformationskoeffizienten abzuleiten,

Linearisierungsmittel (113, 2213) zur Rekonstruktion decodierter Frequenzbereichs-Transformationskoeffizienten aus den deformatierten ungleichförmig quantisierten Transformationskoeffizienten,

Mittel (114, 2214) zur Erzeugung von Zeitbereichs-Signalabtastwertblöcken als Antwort auf die Frequenzbereichs-Transformationskoeffizienten, wobei die Mittel Eigenschaften invers zu jenen der Mittel in dem Decoder zur Erzeugung von Frequenzbereichs-Transformationskoeffizienten aufweisen, wobei die Mittel zur Erzeugung von Zeitbereichs-Signalblöcken Mittel zum Anwenden einer inversen diskreten Transformationsfunktion auf die Frequenzbereichs-Transformationskoeffizienten umfassen,

Synthesefenstermittel (115, 2215) umfassend ein Synthesefenster zum Modulieren der Zeitbereichs-Signalabtastwertblöcke zur Verringerung der Effekte von Quantisierungsfehlern an den Blockgrenzen, die während des Codier/Decodierprozesses auftreten, wobei die Synthesefenstermittel Eigenschaften aufweisen derart, daß das Produkt ihrer Antwort und der Antwort des Analysefensters eins ergibt, wenn zwei benachbarte Signalabtastwertblöcke überlappt und addiert werden, wobei das Synthesefenster das Synthesefenster eines Analyse-Synthese-Fensterpaares ist,

Signalblock-Überlappungs-Addierungsmittel (116, 2216) zur Aufhebung der Gewichtungseffekte der Analysefenster- und der Synthesefenstermittel zur Wiedergewinnung einer digitalisierten Repräsentation des Zeitbereichssignals, und

Zeitbereichssignalausgangsmittel (117, 2217) zur Umsetzung des digitalen Zeitbereichssignals in analoge Form.

52. Decoder nach Anspruch 50 oder 51, bei dem die Mittel zum Anwenden einer inversen diskreten Transformationsfunktion abwechselnd eine inverse diskrete Cosinus-Transformationsfunktion und eine inverse diskrete Sinus-Transformationsfunktion auf die Frequenzbereichs-Transformationskoeffizienten entsprechend der Zeitbereichs-Aliasing-Auslöschtechnik umfassen, und bei dem die Fenster von einem Kaiser-Bessel-Fenster mit einem Alpha-Wert im Bereich von 4 bis 7 abgeleitet sind.

53. Decoder nach Anspruch 50 oder 51, bei dem die Mittel zum Anwenden einer diskreten Transformationsfunktion eine inverse diskrete Fourier-Transformation anwenden, und bei dem die Fenster von einem Kaiser-Bessel-Fenster mit einem Alpha-Wert im Bereich von anderthalb bis drei abgeleitet sind.

54. Decoder nach Anspruch 50 oder 51, bei dem das Analyse-Synthese-Fensterpaar abgeleitet ist von im wesentlichen irgendeinem Fenster der Klasse von Analysefenstern, die die Gestaltung einer Filterbank gestatten, bei der die auf einer Transformation basierenden digitalen Filter gewünschte Selektivitätscharakteristiken aufweisen, sowie die Fähigkeit, die Steilheit des Übergangsbandabfalls gegen die Sperrbandunterdrückung in der Filterkennlinie auszuhandeln.

55. Decoder nach Anspruch 54, bei dem die Klasse von Analysefenstern die Kaiser-Bessel- und Dolph-Chebyshev-Fenster sowie Fenster enthält, die unter Verwendung der Parks-McClellan-Methode von nichtrekursiven Filterkoeffizienten abgeleitet wurden.

56. Decoder zur hochqualitativen Reproduktion digital codierter breitbandiger Audioinformation, bei dem die Information von einem Codierer digital codiert wurde, der mit einem Analysefenster gewichtete Abtastwertblöcke durch Gewichten von Blöcken von Abtastwerten der Audioinformation mit einer Analysefensterfunktion erzeugt, durch Anwenden einer Vorwärtstransformation auf die mit einem Analysefenster gewichteten Abtastwertblöcke Frequenzbereichs-Transformationskoeffizienten erzeugt und die Transformationskoeffizienten zu einem digitalen Ausgangssignal mit einem zur Übertragung oder Speicherung geeigneten Format codiert, wobei der Decoder umfaßt

Deformatierungsmittel (112, 2212) die das digitale Ausgangssignal empfangen, um daraus die Frequenzbereichs-Transformationskoeffizienten abzuleiten,

Mittel (114, 2214) zur Erzeugung von Zeitbereichs-Signalabtastwertblöcken als Antwort auf die rekonstruierten Frequenzbereichs-Transformationskoeffizienten durch Anwenden einer Rücktransformation mit Eigenschaften invers zu jenen der Vorwärtstransformation, und

Synthesefenstermittel (115, 2215) zur Gewichtung der Zeitbereichs-Signalabtastwertblöcke mit einer Synthesefensterfunktion, wobei die Synthesefensterfunktion das Synthesefenster eines Paares von Analysefenster/Synthesefenster, je der Länge N, ist und das Produkt beider Fenster des Paares ein Produktfenster der Länge N mit einem Überlappungsintervall der Länge V ist, wobei das Produktfenster, wenn es über das Überlappungsintervall überlappt und mit sich selbst addiert wird, sich zu einem konstanten Wert summiert, und

Signalblock-Überlappungs-Addierungsmittel (116, 2216) zur Aufhebung der Gewichtungseffekte der Analysefenster- und der Synthesefenstermittel zur Wiedergewinnung einer digitalen Repräsentation der Audioinformation,

wobei das Analyse-Synthese-Fensterpaar durch ein Verfahren bestimmbar ist, umfassend

(1) Erzeugen eines Ausgangsfensters mit einer Länge 1 + V,

(2) Erzeugen eines Zwischenfensters durch Faltung des Ausgangsfensters mit einer Einheitsimpulsfunktion der Länge N-V,

(3) Definieren eines Skalierungsfaktors durch Faltung des Ausgangsfensters mit einer Einheitsimpulsfunktion der Länge 1,

(4) Gewinnen des Produktfensters durch Teilen des Zwischenfensters durch den Skalierungsfaktor, und

(5) Gewinnen des Analysefensters durch Potenzieren des Produktfensters zur A-ten Potenz und Gewinnen des Synthesefensters durch Potenzieren des Produktfensters zur B-ten Potenz, wobei A + B = 1.

57. Decoder nach Anspruch 54, bei dem die Steilheit des Übergangsbandabfalls des Analyse- und des Synthesefensters für den gewünschten Pegel der Sperrbandunterdrückung maximiert ist.

58. Decoder nach Anspruch 57, bei dem der gewünschte Wert der Sperrbandunterdrückung empirisch durch Hörtests ermittelt ist.

**59.** Decoder nach Anspruch 57, bei dem der Übergangsbandabfail allgemein der unteren Neigung der psychoakustischen Maskierungskurve des menschlichen Ohres innerhalb eines kritischen Bandes folgt.

**60.** Decoder nach Anspruch 54, bei dem das Produkt des Analyse-Synthese-Fensterpaares von im wesentlichen irgendeinem Fenster der besagten Klasse von Analysefenstern mit Hilfe eines Allzweckcomputers durch ein numerisches Optimierungsverfahren abgeleitet ist, umfassend

Initialisierung durch Lesen von Daten aus Dateien, die die gewünschten Frequenzselektivitätscharakteristiken definieren und eine Startfensterform spezifizieren,

Erzeugen eines Versuchs-Analysefensters, anfänglich aufgrund von in den Initialisierungsdaten für das erste Versuchsfenster spezifizierten Werten und nachfolgend für aufeinanderfolgende Versuchsfenster aufgrund von Werten, die durch eine multidimensionale Optimierungsroutine spezifiziert werden,

Bestimmen der Frequenzgangscharakteristiken der digitalen Filter, die aus der Verwendung des konstruierten Versuchs-Analysefensters in einem Transformationscodierer resultieren,

Errechnen eines Fehlerwerts für solche Frequenzgangscharakteristiken in bezug auf die gewünschten Selektivitätsfrequenzcharakteristiken der digitalen Filter,

Bestimmen, ob der Optimierungsprozess fortgesetzt werden soll.

**61.** Decoder nach Anspruch 50 oder 51, bei dem das Analyse-Synthese-Fensterpaar von einem Analysefenster abgeleitet ist, welches durch ein numerisches Optimierungsverfahren abgeleitet ist.

**62.** Decoder nach Anspruch 49 oder 51, ferner umfassend Deemphasismittel (2224) zur Behandlung des breitbandigen analogen Audioinformationsausgangssignals von den Zeitbereichs-Signalausgangsmitteln (2217), wobei die Mittel zum Anwenden einer inversen diskreten Transformationsfunktion eine inverse diskrete Fourier-Transformation anwenden.

**63.** Decoder nach Anspruch 62, bei dem die Deemphasismittel (2224) eine Charakteristik aufweisen, die das Inverse einer Shelfcharakteristik zweiter Ordnung mit etwa 19 dB Abschwächung bei Gleichstrom (0 Hz) und der Verstärkung eins bei hohen Frequenzen ist.

**64.** System für die hochqualitative Verarbeitung von breitbandiger analoger Audioinformation, umfassend einen Codierer nach einem der Ansprüche 1 bis 33 und einem Decoder nach einem der Ansprüche 34 bis 63.

**65.** System nach Anspruch 64, bei dem die Signaldurchlaufverzögerung durch das System, umfassend die Periode der Zeitbereichs-Signalabtastwertblöcke in dem Codierer, die Periode der Zeitbereichs-Signalabtastwertblöcke in dem Decoder, die Verarbeitungszeit in dem Codierer und die Verarbeitungszeit in dem Decoder, kurz genug ist, damit das System für eine Echtzeit-Hörrückkopplung zu einem menschlichen Operator verwendbar ist.

**66.** Decoder nach Anspruch 34, bei dem das codierte Signal digitale Information umfaßt, die von einer invarianten Anzahl von Bits repräsentiert wird, und digitale Information, die von einer adaptiven Anzahl von Bits repräsentiert wird, und bei dem die Deformatierungsmittel ferner Mittel umfassen zur Ableitung der Teilbandinformation aus der durch eine invariante Anzahl von Bits repräsentierten digitalen Information, die an vorgegebenen Positionen innerhalb des codierten des Signals plaziert ist.

**67.** Codierer nach Anspruch 1, bei dem Teilbandmittel die Teilbandinformation durch Anwenden einer Filterbank auf die Signalabtastwerte erzeugen, und bei dem die Codierungsgenauigkeit des nicht-adaptiven Teils durch ein Verfahren bestimmbar ist, umfassend

(1) Vergleichen eines repräsentativen Frequenzgangs für ein Frequenzteilband der Filterbank mit einem repräsentativen psychoakustischen Maskierungs-Schwellenwert für Spektralenergie innerhalb des Frequenzteilbandes,

(2) Erzeugen eines Teilbandwerts gleich der Anzahl von Bits, die zum Codieren der Spektralenergie innerhalb des Frequenzteilbandes erforderlich ist derart, daß im wesentlichen kein Quantisierungsgeräusch den repräsentativen psychoakustischen Maskierungs-Schwellenwert übersteigt,

(3) Einstellen der nicht-adaptiven Codierungsgenauigkeit für das Frequenzteilband auf weniger als den Teilbandwert, und

(4) Wiederholen der vorherigen Schritte für jedes der Vielzahl von Frequenzteilbändern, wobei die jeweilige nicht-adaptive Codierungsgenauigkeit geringer als der entsprechende Teilbandwert eingestellt wird.

**68.** Decoder nach Anspruch 34, bei dem die inversen Teilbandmittel die Vollband-Signalabtastwerte durch Anwenden einer inversen Filterbank auf die abgeleitete Teilbandinformation erzeugen, und bei dem die Codierungsgenauigkeit des nicht-adaptiven Codierteils durch ein Verfahren bestimmbar ist, umfassend

(1) Vergleichen eines repräsentativen Frequenzgangs für ein Frequenzteilband der inversen Filterbank mit einem repräsentativen psychoakustischen Maskierungs-Schwellenwert für Spektralenergie innerhalb des Frequenzteilbandes,

(2) Erzeugen eines Teilbandwerts gleich der Anzahl von Bits, die zum Codieren der Spektralenergie innerhalb des Frequenzteilbandes erforderlich ist derart, daß im wesentlichen kein Quantisierungsgeräusch den repräsentativen psychoakustischen Maskierungs-Schwellenwert übersteigt,

(3) Einstellen der nicht-adaptiven Codierungsgenauigkeit für das Frequenzteilband auf weniger als den Teilbandwert,

(4) Wiederholen der vorherigen Schritte für jedes der Vielzahl von Frequenzteilbändern, wobei die jeweilige nicht-adaptive Codierungsgenauigkeit geringer als der entsprechende Teilbandwert eingestellt wird, und

Mittel zur Erzeugung der Reproduktion der Audioinformation als Antwort auf die Teilbandinformation.

**69.** Vorrichtung nach Anspruch 23 oder 56, bei der A und B gleich sind.

## Revendications

**1.** Codeur pour le codage digital de haute qualité d'une information audio à large bande comprenant des échantillons de signal, codeur comprenant :
- un moyen de sous-bande (104, 108) comprenant un moyen d'allocation binaire adaptative (106) pour définir des sous-bandes de fréquences et pour générer une information de sous-bande en réponse auxdits échantillons de signal, ladite information de sous-bande comprenant pour chacune desdites sous-bandes un ou plusieurs mots numériques, chacun desdits mots numériques comprenant une partie adaptative et une partie non adaptative, moyen dans lequel la précision de codage de ladite partie adaptative est déterminé par ledit moyen d'allocation binaire adaptative; et
- un moyen de formatage 109 pour assembler l'information numérique comprenant ladite information de sous-bande en une sortie numérique présentant un format adapté à la transmission ou au stockage.

**2.** Codeur selon la revendication 1, dans lequel ledit moyen de sous-bande comprend, de plus, un moyen (103) pour générer des blocs d'échantillons de signal pondérés par fenêtre d'analyse en pondérant des blocs desdits échantillons de signal à l'aide d'une fenêtre d'analyse et dans lequel ledit moyen de sous-bande génère ladite information de sous-bande en appliquant une transformée discrète auxdits blocs d'échantillons de signal pondérés par fenêtre d'analyse.

**3.** Codeur selon la revendication 1 ou 2, dans lequel ledit moyen de sous-bande (104, 108) comprend un moyen de banque de filtrage (104) et dans lequel la précision de codage de ladite partie non adaptative est déterminée sur la base d'une comparaison entre une réponse en fréquence représentative pour ledit moyen de banque de filtrage pour chaque sous-bande et un seuil de masquage psycho-acoustique représentant chaque sous-bande produite par une seule fréquence audible ou une bande très étroite de bruit.

**4.** Codeur selon la revendication 3, dans lequel un seuil de masquage psycho-acoustique présentant une sélectivité relativement grande pour des fréquences en dessous de la fréquence audible de masquage ou de la bande de bruit est considéré comme représentant le masquage dans des sous-bandes de plus basses fréquences et un seuil de masquage psycho-acoustique présentant une sélectivité relativement basse pour des fréquences en dessous de la fréquence audible de masquage ou de la bande de bruit est considéré comme représentant le masquage dans des sous-bandes de plus hautes fréquences.

**5.** Codeur selon la revendication 4, dans lequel un seuil de masquage psycho-acoustique pour une seule fréquence audible ou une bande très étroite de bruit d'environ 1 kHz est considéré comme représentant les sous-bandes dans la gamme de fréquences d'environ 500 Hz à 2 kHz et un seuil de masquage psycho-acoustique pour une seule fréquence audible ou une bande très étroite de bruit d'environ 4 kHz est consi-

EP 0 447 495 B1

déré comme représentant les sous-bandes au dessus d'environ 2 kHz.

6. Codeur selon la revendication 3, 4 ou 5, dans lequel la précision de codage de ladite partie non adaptative est telle que le nombre de bits utilisés pour représenter ladite partie non adaptative est inférieure au nombre de bits requis pour obtenir pratiquement aucun bruit de quantification en plus du seuil de masquage psycho-acoustique représentatif.

7. Codeur selon la revendication 6, dans lequel le nombre de bits utilisés pour représenter ladite partie non adaptative est deux fois inférieur à la valeur requise pour n'obtenir pratiquement pas de bruit de quantification en plus du seuil de masquage psycho-acoustique représentatif.

8. Codeur selon l'une quelconque des revendications 1 à 7, dans lequel ladite information de sous-bande pour chaque sous-bande est exprimée sous la forme d'un bloc à virgule flottante comprenant une ou plusieurs mantisses et un exposant de sous-bande, chacun desdits mots numériques représentant une mantisse dans laquelle la précision de codage de ladite partie adaptative est basée sur une valeur effective d'exposant, ladite valeur effective d'exposant étant égale à la valeur de l'exposant de sous-bande.

9. Codeur selon l'une quelconque des revendications 1 à 7, dans lequel ladite information de sous-bande pour toutes les sous-bandes est exprimée sous la forme d'un bloc à virgule flottante comprenant une ou plusieurs mantisses pour chaque sous-bande, un exposant de sous-bande pour chaque sous-bande et un exposant principal pour un ensemble de sous-bandes, la gamme des valeurs d'exposant de sous-bande étant ainsi étendue, chacun desdits mots numériques représentant une mantisse dans laquelle la précision de codage de ladite partie adaptative est basée sur une valeur effective d'exposant, ladite valeur effective d'exposant étant égale à la valeur représentée par l'exposant de sous-bande en combinaison avec l'exposant principal associé.

10. Codeur selon l'une quelconque des revendications 1 à 9, dans lequel l'information de sous-bande générée correspondant à un intervalle de ladite information audio constitue un bloc d'information de sous-bande, ledit moyen de sous-bande comprenant, de plus, un moyen pour estimer le niveau d'énergie relatif de chaque sous-bande représenté dans un bloc d'information de sous-bande, ledit moyen d'allocation binaire adaptative comprenant :
    - un moyen pour allouer des bits aux mots numériques d'un premier groupe de sous-bandes possédant les plus hauts niveaux d'énergie, ladite allocation se poursuivant jusqu'à ce qu'un nombre maximal de bits soit alloués à chacun des mots numériques dudit premier groupe de sous-bandes ou jusqu'à ce que le nombre de bits alloués, de façon adaptative, soit égal ou dépasse un nombre limité de bits pouvant être alloués de façon adaptative; et
    - un moyen pour allouer des bits aux mots numériques d'un second groupe de sous-bandes, voisin chacun d'une sous-bande dans laquelle chacun des mots numériques reçoit ledit nombre maximal de bits, chacune des sous-bandes dudit second groupe de sous-bandes constituant une sous-bande d'une paire de sous-bandes attenantes, ladite allocation se poursuivant jusqu'à ce que le nombre maximal de bits soit alloué à chacun des mots numériques dudit second groupe de sous-bandes ou jusqu'à ce que le nombre de bits alloués, de façon adaptative, soit égal ou dépasse ledit nombre limité de bits pouvant être alloués de façon adaptative.

11. Codeur selon la revendication 10, dans lequel ledit moyen d'allocation de bits aux mots numériques dudit second groupe de sous-bandes alloue des bits aux mots numériques de toutes les sous-bandes attenantes sur le côté basse fréquence avant que des bits soient alloués aux mots numériques de toutes les sous-bandes attenantes sur le côté haute fréquence.

12. Codeur selon la revendication 10 ou 11, comprenant, de plus, un moyen pour réduire le nombre de bits alloués, de façon adaptative, aux mots numériques choisis jusqu'à ce que le nombre de bits alloués, de façon adaptative, soit égal audit nombre limité de bits pouvant être alloués de façon adaptative.

13. Codeur selon l'une quelconque des revendications 10 à 12, en combinaison avec la revendication 8 ou 9, dans lequel ledit moyen pour établir le niveau relatif d'énergie pour chaque sous-bande représenté dans un bloc d'information de sous-bande établit ledit niveau relatif d'énergie sur la base de la valeur effective d'exposant.

14. Codeur selon la revendication 13, dans lequel ledit moyen pour établir le niveau relatif d'énergie de chaque

54

sous-bande représenté dans un bloc d'information de sous-bande comprend :

- un moyen pour vérifier la valeur effective d'exposant de la sous-bande contenant le maximum des valeurs représentées par chaque mantisse en combinaison avec sa valeur effective d'exposant associée; et
- un moyen pour assigner un nombre de niveau à chacune de toutes les sous-bandes représenté dans un bloc d'information de sous-bande, ledit nombre de niveau étant égal audit nombre maximum de bits pouvant être alloués à chaque mot numérique réduit de la valeur absolue de la différence entre la valeur effective d'exposant vérifiée et la valeur effective d'exposant correspondant à la sous-bande pour laquelle un niveau doit être assigné mais dans aucun cas, pour assigner un nombre de niveau inférieur à zéro.

15. Codeur selon l'une quelconque des revendications 1 à 14, dans lequel ledit moyen de formatage (109) représente chaque mot numérique jusque dans deux segments, un premier segment représentant la longueur minimum du mot numérique composée d'un nombre fixé de bits et un second segment, si c'est le cas, de longueur binaire variable composé des bits alloués de façon adaptative.

16. Codeur pour le codage numérique de haute qualité d'une information audio analogique de large bande possédant un court retard de propagation de signal, codeur comprenant :
- un moyen (101, 2201) pour échantillonner et quantifier ladite information audio analogique de large bande en blocs d'échantillons de signal dans le temps, lesdits blocs d'échantillons de signal possédant une période de temps entraînant un retard de propagation du signal assez court pour qu'un système de codage/décodage utilisant le codeur puisse être utilisé pour une rétroaction orale en temps réel vers un opérateur humain;
- un moyen de fenêtre d'analyse (103, 2203) pour moduler chaque bloc d'échantillons de signal à l'aide d'une fonction de pondération;
- un moyen (104, 2204) pour générer des coefficients de transformée en fréquence en réponse aux blocs d'échantillons de signal dans le temps pondérés par fenêtre d'analyse, ledit moyen de génération des coefficients de transformée en fréquence comprenant un moyen pour appliquer une fonction discrète de transformée aux bloc d'échantillons de signal dans le temps pondérés par fenêtre d'analyse;
- un moyen de quantificateur non uniforme de sous-bande (108, 2208) comprenant un moyen d'allocation binaire adaptative (106, 2206) pour quantifier chaque coefficient de transformée en fréquence et pour grouper de tels coefficients de transformée quantifiés en sous-bande; et
- un moyen de formatage (109, 2209) pour assembler les coefficients de transformée quantifiés et groupés, de façon non uniforme, en une sortie numérique présentant un format adapté à la transmission ou au stockage.

17. Codeur selon la revendication 16, dans lequel ledit moyen de fenêtre d'analyse (103, 2204) comprend la fenêtre d'analyse d'une paire de fenêtres d'analyse/synthèse.

18. Codeur pour le codage digital de haute qualité d'une information audio analogique de large bande comprenant :
- un moyen (101, 2201) pour échantillonner et quantifier ladite information audio analogique de large bande en blocs d'échantillons de signal dans le temps;
- un moyen de fenêtre d'analyse (103, 2203) pour moduler chaque bloc d'échantillons de signal à l'aide d'une fonction de pondération, moyen dans lequel ladite fonction de pondération est une fenêtre d'analyse d'une paire de fenêtres d'analyse/synthèse;
- un moyen (104, 2204) pour générer des coefficients de transformée en fréquence en réponse aux bloc d'échantillons de signal dans le temps pondérés par fenêtre d'analyse, ledit moyen de génération des coefficients de transformée en fréquence comprenant un moyen pour appliquer une fonction discrète de transformée aux bloc d'échantillons de signal dans le temps pondérés par fenêtre d'analyse;
- un moyen de quantificateur non uniforme de sous-bande (108, 2208) comprenant un moyen d'allocation binaire adaptative (106, 2206) pour quantifier chaque coefficient de transformée en fréquence et pour grouper de tels coefficients de transformée quantifiés en sous-bande; et
- un moyen de formatage (109, 2209) pour assembler les coefficients de transformée quantifiés et groupés, de façon non uniforme, en une sortie numérique présentant un format adapté à la transmission ou au stockage.

**19.** Codeur selon la revendication 17 ou 18, dans lequel ledit moyen pour appliquer une fonction discrète de transformée applique, de façon alternée, une fonction de Transformée Discrète en Cosinus et une fonction de Transformée Discrète en Sinus aux blocs d'échantillons de signal dans le temps pondérés par fenêtre d'analyse selon la technique d'Annulation d'Alias dans le Temps et dans lequel ladite fenêtre d'analyse est dérivée d'une fenêtre de Kaiser-Bessel possédant une valeur alpha comprise entre 4 et 7.

**20.** Codeur selon la revendication 17 ou 18, dans lequel ledit moyen pour appliquer une fonction discrète de transformée applique une Transformée Discrète de Fourier et dans lequel ladite fenêtre d'analyse est dérivée d'une fenêtre de Kaiser-Bessel possédant une valeur alpha comprise entre 1,5 et 3.

**21.** Codeur selon la revendication 17 ou 18, dans lequel ladite paire de fenêtres d'analyse/synthèse est dérivée de pratiquement une quelconque fenêtre de la classe des fenêtres d'analyse permettant la conception d'une banque de filtrage dans laquelle les filtres digitaux à base de transformée présentent une caractéristique de sélectivité désirée et la capacité de faire un compromis entre la pente de décrochage de bande de transition et la profondeur de rejet de la bande d'arrêt dans les caractéristiques du filtre.

**22.** Codeur selon la revendication 21, dans lequel ladite classe des fenêtres d'analyse comprend les fenêtres de Kaiser-Bessel et Dolph-Chebyshev et des fenêtres dérivées de coefficients finis de filtre par impulsions utilisant le procédé de Parks-McClellan.

**23.** Codeur pour le codage digital de haute qualité d'une information audio à large bande comprenant des blocs d'échantillons de signal, ledit codeur comprenant:
- un moyen de fenêtre d'analyse (103, 2203) pour générer des blocs d'échantillons pondérés par fenêtre d'analyse en pondérant chaque blocs d'échantillons de signal à l'aide d'une fonction de pondération, moyen dans lequel ladite fonction de pondération est la fenêtre d'analyse d'une paire de fenêtres d'analyse/synthèse, chacune d'une longueur $N$ et le produit de chaque fenêtre de ladite paire est une fenêtre produit de longueur $N$ avec un intervalle de recouvrement de longueur $V$, ladite fenêtre produit, une fois superposée et ajoutée à elle-même sur l'intervalle de recouvrement, s'ajoutant à une valeur constante;
- un moyen (104, 2204) pour générer des coefficients de transformée en fréquence en appliquant une fonction discrète de transformée auxdits blocs d'échantillons pondérés par fenêtre d'analyse;
- un moyen de quantificateur non uniforme de sous-bande (108, 2208) comprenant un moyen d'allocation binaire adaptative (106, 2206) pour quantifier chaque coefficient de transformée en fréquence et pour grouper de tels coefficients de transformée quantifiés en sous-bandes; et
- un moyen de formatage (109, 2209) pour assembler les coefficients de transformée quantifiés et groupés, de façon non uniforme, en une sortie numérique présentant un format adapté à la transmission ou au stockage,

    codeur dans lequel ladite paire de fenêtres d'analyse/synthèse peut être déterminé par un procédé comprenant les étapes suivantes :

    (1) la génération d'une fenêtre initiale présentant une longueur de 1 + $V$;

    (2) la génération d'une fenêtre par intérim par convolution de ladite fenêtre initiale avec une fonction d'impulsion unitaire de longueur $N$ - $V$;

    (3) la définition d'un facteur de cadrage par convolution de ladite fenêtre initiale avec une fonction d'impulsion unitaire de longueur unitaire;

    (4) l'obtention de ladite fenêtre produit en divisant ladite fenêtre par intérim avec ledit facteur de cadrage; et

    (5) l'obtention de ladite fenêtre d'analyse en prenant la puissance de ladite fenêtre produit et l'obtention de ladite fenêtre de synthèse en prenant la puissance $B$ de ladite fenêtre produit, $A + B$ étant égal à 1.

**24.** Codeur selon la revendication 21, dans lequel la pente du décrochage de la bande de transition de la fenêtre d'analyse est maximisé pour le niveau désiré de rejet de la bande d'arrêt.

**25.** Codeur selon la revendication 24, dans lequel le niveau désiré de rejet de la bande d'arrêt est déterminé, de façon empirique, par des tests d'écoute.

**26.** Codeur selon la revendication 24, dans lequel la pente de la bande de transition suit globalement la pente inférieure de la courbe de masquage psycho-acoustique de l'oreille humaine dans une bande critique.

**27.** Codeur selon la revendication 21, dans lequel le produit de ladite paire de fenêtres d'analyse/synthèse est dérivé d'une quelconque fenêtre de ladite classe des fenêtres d'analyse à l'aide d'un ordinateur à usage général selon un procédé d'optimisation numérique comprenant les étapes suivantes :

- l'initialisation par la lecture de données de fichiers définissant les caractéristiques désirées de sélectivité en fréquence et spécifiant une forme de fenêtre de départ;
- la génération d'une fenêtre d'analyse d'essai initialement à partir de valeurs spécifiées dans les données d'initialisation pour la première fenêtre d'essai puis pour les fenêtres d'essai successives à partir de valeurs spécifiées par un programme d'optimisation à plusieurs dimensions;
- la détermination des caractéristiques de réponse en fréquence des filtres digitaux résultant de l'utilisation de la fenêtre d'analyse d'essai construite dans un codeur à transformée;
- le calcul d'une valeur d'erreur pour de telles caractéristiques de réponse en fréquence par rapport aux caractéristiques désirées de sélectivité en fréquence des filtres digitaux; et
- la détermination pour savoir si on poursuit le processus d'optimisation.

**28.** Codeur selon la revendication 17 ou 18, dans lequel ladite paire de fenêtres d'analyse/synthèse est dérivée d'une fenêtre d'analyse dérivée d'un procédé d'optimisation numérique.

**29.** Codeur selon la revendication 16 ou 18, comprenant, de plus, un moyen de pré-amplification (2219) pour traiter l'information audio analogique de large bande avant l'échantillonnage et la quantification de l'information, codeur dans lequel ledit moyen d'application d'une fonction discrète de transformée applique une Transformée Discrète de Fourier.

**30.** Codeur selon la revendication 29, dans lequel ledit moyen de pré-amplification (2219) possède une caractéristique de plateau du second ordre avec une atténuation d'environ 19 dB à DC (0 Hz) et un gain unitaire aux hautes fréquences.

**31.** Codeur selon la revendication 1, dans lequel ledit moyen de formatage place une information de sous-bande représentée par un nombre invariable de bits dans des positions préétablies dans ladite sortie numérique.

**32.** Codeur pour le codage digital de haute qualité d'une information audio analogique de large bande comprenant :

- un moyen (101, 2201) pour échantillonner et quantifier ladite information audio analogique de large bande en blocs d'échantillons de signal dans le temps;
- un moyen de fenêtre d'analyse (103, 2203) pour moduler chaque bloc d'échantillons de signal à l'aide d'une fonction de pondération;
- un moyen (104, 2204) pour générer des coefficients de transformée en fréquence en réponse aux bloc d'échantillons de signal dans le temps pondérés par fenêtre d'analyse;
- un moyen de quantificateur non uniforme de sous-bande (108, 2208) comprenant un moyen d'allocation binaire adaptative (106, 2206) pour quantifier chaque coefficient de transformée en fréquence et pour grouper de tels coefficients de transformée quantifiés en sous-bande; et
- un moyen de formatage (109, 2209) pour assembler les coefficients de transformée quantifiés et groupés, de façon non uniforme, en une sortie numérique présentant un format adapté à la transmission ou au stockage, ledit moyen de formatage utilisant des codes de correction et de détection d'erreur pour réduire la sensibilité des données critiques aux erreurs brusques de bruit, ledit moyen de formatage assemblant les codes et les données de correction et de détection d'erreur en blocs formatés et dispersant les codes de correction et de détection d'erreur et les données critiques dans les blocs formatés afin de réduire la sensibilité des données critiques aux erreurs brusques de bruit.

**33.** Codeur pour le codage digital de haute qualité d'une information audio analogique de large bande à deux canaux comprenant :

- un moyen (101, 2201) pour échantillonner et quantifier ladite information audio analogique de large bande à deux canaux en blocs d'échantillons de signal dans le temps, lesdits échantillons de blocs dans le temps étant des valeurs réelles pures;
- un moyen de fenêtre d'analyse (103, 2203) pour moduler chaque bloc d'échantillons de signal à l'aide d'une fonction de pondération;
- un moyen (104, 2204) pour générer des coefficients de transformée en fréquence en réponse aux bloc d'échantillons de signal dans le temps pondérés par fenêtre d'analyse, ledit moyen de génération des coefficients de transformée en fréquence comprenant un moyen pour appliquer une fonction discrète de transformée aux bloc d'échantillons de signal dans le temps pondérés par fenêtre d'analyse, ledit moyen d'application d'une fonction discrète de transformée étant mis en oeuvre par une seule transformée rapide de Fourier appliquée à deux blocs d'échantillons de signal dans le temps;

- un moyen de quantificateur non uniforme de sous-bande (108, 2208) comprenant un moyen d'allocation binaire adaptative (106, 2206) pour quantifier chaque coefficient de transformée en fréquence et pour grouper de tels coefficients de transformée quantifiés en sous-bande; et
- un moyen de formatage (109, 2209) pour assembler les coefficients de transformée quantifiés et groupés, de façon non uniforme, en une sortie numérique présentant un format adapté à la transmission ou au stockage.

34. Décodeur pour la lecture de haute qualité d'une information audio à large bande à partir d'un signal codé, comprenant :
- un moyen de déformatage (112) comprenant un moyen d'allocation binaire adaptative pour recevoir ledit signal codé, pour dériver une information de sous-bande à partir dudit signal codé et pour reconstruire les mots numériques à l'aide de ladite information de sous-bande dérivée, lesdits mots numériques comprenant une partie adaptative et une partie non adaptative, moyen dans lequel la précision du codage de ladite partie adaptative est déterminée par ledit moyen d'allocation binaire adaptative; et
- un moyen inverse de sous-bande pour générer des échantillons de signaux pleine bande en réponse à ladite information de sous-bande dérivée.

35. Décodeur selon la revendication 34, dans lequel ledit moyen inverse de sous-bande génère lesdits échantillons de signal de pleine bande par application d'une transformée discrète inverse à ladite information de sous-bande dérivée.

36. Décodeur selon la revendication 34 ou 35, dans lequel ledit moyen inverse de sous-bande (113, 114) comprend un moyen de banque de filtrage inverse (114) et dans lequel la précision de codage de ladite partie non adaptative est déterminée sur la base d'une comparaison d'une réponse en fréquence représentative dudit moyen de banque de filtrage inverse pour chaque sous-bande avec un seuil de masquage psycho-acoustique représentant chaque sous-bande produite par une seule fréquence audible ou une bande très étroite de bruit.

37. Décodeur selon la revendication 36, dans lequel un seuil de masquage psycho-acoustique présentant une sélectivité relativement élevée pour des fréquences en dessous de la fréquence audible de masquage ou de la bande de bruit est pris comme représentant le masquage dans des sous-bandes de plus basses fréquences et un seuil de masquage psycho-acoustique présentant une sélectivité relativement faible pour des fréquences en dessous de la fréquence audible de masquage ou de la bande de bruit est pris comme représentant le masquage dans des sous-bandes de plus hautes fréquences.

38. Décodeur selon la revendication 37, dans lequel un seuil de masquage psycho-acoustique pour une seule fréquence audible ou pour une bande très étroite de bruit d'environ 1 kHz est pris comme représentant les sous-bandes dans la gamme de fréquences d'environ 500 Hz à 2 kHz et un seuil de masquage psycho-acoustique pour une seule fréquence audible ou pour une bande très étroite de bruit d'environ 4 kHz est pris comme représentant les sous-bandes au dessus d'environ 2 kHz.

39. Décodeur selon la revendication 36, 37 ou 38, dans lequel la précision de codage de ladite partie non adaptative est telle que le nombre de bits utilisés pour représenter ladite partie non adaptative est inférieure à celui des bits requis pour obtenir pratiquement aucun bruit de quantification en plus du seuil de masquage psycho-acoustique représentatif.

40. Décodeur selon la revendication 39, dans lequel le nombre de bits utilisés pour représenter ladite partie non adaptative est de deux fois inférieur à la valeur requise pour n'obtenir pratiquement aucun bruit de quantification en plus du seuil de masquage psycho-acoustique représentatif.

41. Décodeur selon l'une quelconque des revendications 34 à 40, dans lequel ladite information de sous-bande pour chaque sous-bande dans ledit bloc d'information de sous-bande dérivé est exprimée sous la forme d'un bloc à virgule flottante comprenant une ou plusieurs mantisses et un exposant de sous-bande, chacun desdits mots numériques représentant une mantisse dans laquelle la précision de codage de ladite partie adaptative est basée sur une valeur effective d'exposant, ladite valeur effective d'exposant étant égale à la valeur de l'exposant de sous-bande.

42. Décodeur selon l'une quelconque des revendications 34 à 40, dans lequel ladite information pour toutes les sous-bandes dans ledit bloc d'information de sous-bande dérivé est exprimée sous la forme d'un bloc à virgule flottante comprenant une ou plusieurs mantisses pour chaque sous-bande, un exposant de sous-bande pour chaque sous-bande et un exposant principal pour un ensemble de sous-bandes, la gamme des valeurs d'exposant de sous-bande étant ainsi étendue, chacun desdits mots numériques représentant une mantisse, dans lequel la précision de codage de ladite partie adaptative est basée sur une valeur effective d'exposant, ladite valeur effective d'exposant étant égale à la valeur représentée par l'exposant de sous-bande en combinaison avec l'exposant principal associé.

43. Décodeur selon l'une des revendications 34 à 42, dans lequel ladite information de sous-bande dérivée d'un intervalle dudit signal codé constitue un bloc d'information de sous-bande, ledit décodeur comprenant, de plus, un moyen pour estimer le niveau relatif d'énergie de chaque sous-bande représenté dans un bloc d'information de sous-bande et dans lequel ledit moyen d'allocation binaire adaptative assigne des bits à au moins certains mots numériques, ledit moyen d'allocation binaire adaptative comprenant :
   - un moyen pour allouer des bits aux mots numériques d'un premier groupe de sous-bandes possédant les plus hauts niveaux d'énergie, ladite allocation se poursuivant jusqu'à ce qu'un nombre maximal de bits soit alloués à chacun des mots numériques dudit premier groupe de sous-bandes ou jusqu'à ce que le nombre de bits alloués, de façon adaptative, soit égal ou dépasse un nombre limité de bits pouvant être alloués de façon adaptative; et
   - un moyen pour allouer des bits aux mots numériques d'un second groupe de sous-bandes voisines chacunes d'une sous-bande dans laquelle chacun des mots numériques reçoit ledit nombre maximal de bits, chacune des sous-bandes dudit second groupe de sous-bandes constituant une sous-bande d'une paire de sous-bandes attenantes, ladite allocation se poursuivant jusqu'à ce que le nombre maximal de bits soit alloué à chacun des mots numériques dudit second groupe de sous-bandes ou jusqu'à ce que le nombre de bits alloués, de façon adaptative, soit égal ou dépasse ledit nombre limité de bits pouvant être alloués de façon adaptative.

44. Décodeur selon la revendication 43, dans lequel ledit moyen d'allocation des bits aux mots numériques dudit second groupe de sous-bandes alloue des bits aux mots numériques de toutes les sous-bandes attenantes sur le côté basse fréquence avant l'allocation de bits aux mots numériques de toutes les sous-bandes attenantes sur le côté haute fréquence.

45. Décodeur selon la revendication 43 ou 44, comprenant, de plus, un moyen pour réduire le nombre de bits alloués, de façon adaptative, aux mots numériques choisis jusqu'à ce que le nombre de bits alloués, de façon adaptative, soit égal audit nombre limité de bits pouvant être alloués de façon adaptative.

46. Décodeur selon l'une quelconque des revendications 43 à 45 en combinaison avec la revendication 41 ou 42, dans lequel ledit moyen pour établir le niveau relatif d'énergie de chaque sous-bande représentée dans un bloc dérivé d'information de sous-bande établit ledit niveau relatif d'énergie sur la base de la valeur effective d'exposant.

47. Décodeur selon la revendication 46, dans lequel ledit moyen pour établir le niveau relatif d'énergie de chaque sous-bande représentée dans un bloc dérivé d'information de sous-bande comprend :
   - un moyen pour vérifier la valeur effective d'exposant de la sous-bande contenant le maximum des valeurs représentées par chaque mantisse en combinaison avec sa valeur effective d'exposant associée; et
   - un moyen pour assigner un nombre de niveau à chacune de toutes les sous-bandes représenté dans un bloc d'information de sous-bande dérivé, ledit nombre de niveau étant égal audit nombre maximum de bits pouvant être alloués à chaque mot numérique réduit de la valeur absolue de la différence entre la valeur effective d'exposant vérifiée et la valeur effective d'exposant correspondant à la sous-bande pour laquelle un niveau doit être assigné mais dans aucun cas, pour assigner un nombre de niveau inférieur à zéro.

48. Décodeur selon l'une quelconque des revendications 34 à 47, dans lequel ledit moyen de déformatage (112) reconstruit chaque mot numérique à partir de deux segments, un premier segment représentant la longueur minimale de mot numérique composée d'un nombre fixé de bits et un second segment, si c'est le cas, d'une longueur variable de bits composée des bits alloués de façon adaptative.

**49.** Décodeur pour la lecture de haute qualité d'une information audio analogique de large bande codée, de façon numérique, dans lequel l'information a été codée, de façon numérique, par un codeur qui échantillonne et quantifie ladite information en blocs d'échantillons de signal dans le temps, module chaque blocs d'échantillons de signal dans une fenêtre d'analyse à l'aide d'une fonction de pondération, génère des coefficients de transformée en fréquence en réponse aux blocs d'échantillons de signal dans le temps pondérés par fenêtre d'analyse, quantifie, de façon non uniforme, chaque coefficient de transformée en fréquence, groupe de tels coefficients de transformée quantifiés en sous-bandes et assemble les coefficients de transformée quantifiés et groupés, de façon non uniforme, en une sortie numérique présentant un format adapté à la transmission ou au stockage, décodeur comprenant :

- un moyen de déformatage (112, 2212) recevant ladite donnée numérique pour en dériver lesdits coefficients quantifiés de transformée;
- un moyen de linéarisation (113, 2213) pour reconstruire les coefficients décodés de transformée en fréquence à partir des coefficients déformatés de transformée quantifiés de façon non uniforme;
- un moyen (114, 2214) pour générer des blocs d'échantillons de signal dans le temps en réponse aux coefficients de transformée en fréquence, ledit moyen présentant des caractéristiques inverses à celles du moyen dans le codeur pour générer des coefficients de transformée en fréquence, lesdits blocs d'échantillons de signal dans le temps possédant une période de temps entraînant un retard de propagation du signal assez court pour qu'un système de codage/décodage utilisant le décodeur puisse être utilisé pour une rétroaction orale en temps réel vers un opérateur humain, ledit moyen de génération des blocs d'échantillons de signal dans le temps comprenant un moyen pour appliquer une fonction inverse de transformée discrète aux coefficients de transformée en fréquence;
- un moyen de fenêtre de synthèse (115, 2215) pour moduler les blocs d'échantillons de signal dans le temps afin de réduire les effets des erreurs de quantification aux frontières de blocs créées lors du processus de codage/décodage, ledit moyen de fenêtre de synthèse présentant une caractéristique telle que le produit de sa réponse et de la réponse de ladite fenêtre d'analyse soit unitaire lorsque deux blocs d'échantillons de signal adjacents sont chevauchés et ajoutés;
- un moyen de recouvrement/addition de bloc de signal (116, 2216) pour annuler les effets de pondération de la fenêtre d'analyse et du moyen de fenêtre de synthèse afin de récupérer une représentation numérisée du signal dans le temps; et
- un moyen de sortie du signal dans le temps (117, 2217) pour convertir le signal numérique dans le temps sous forme analogique.

**50.** Décodeur selon la revendication 49, dans lequel ladite fenêtre d'analyse et ladite fenêtre de synthèse comprennent une paire de fenêtres d'analyse/synthèse.

**51.** Décodeur pour la lecture de haute qualité d'une information audio analogique de large bande codée, de façon numérique, dans lequel l'information a été codée, de façon numérique, par un codeur qui échantillonne et quantifie ladite information en blocs d'échantillons de signal dans le temps, module chaque blocs d'échantillons de signal dans une fenêtre d'analyse à l'aide d'une fonction de pondération, génère des coefficients de transformée en fréquence en réponse aux blocs d'échantillons de signal dans le temps pondérés par fenêtre d'analyse, quantifie, de façon non uniforme, chaque coefficient de transformée en fréquence, groupe de tels coefficients de transformée quantifiés en sous-bandes et assemble les coefficients de transformée quantifiés et groupés, de façon non uniforme, en une sortie numérique présentant un format adapté à la transmission ou au stockage, décodeur comprenant :

- un moyen de déformatage (112, 2212) recevant ladite donnée numérique pour en dériver lesdits coefficients quantifiés de transformée;
- un moyen de linéarisation (113, 2213) pour reconstruire les coefficients décodés de transformée en fréquence à partir des coefficients déformatés de transformée quantifiés de façon non uniforme;
- un moyen (114, 2214) pour générer des blocs d'échantillons de signal dans le temps en réponse aux coefficients de transformée en fréquence, ledit moyen présentant des caractéristiques inverses à celles du moyen dans le codeur pour générer des coefficients de transformée en fréquence, ledit moyen pour générer des blocs de signaux dans le temps comprenant un moyen pour appliquer une fonction discrète de transformée inverse aux coefficients de transformée en fréquence;
- un moyen de fenêtre de synthèse (115, 2215) pour moduler les blocs d'échantillons de signal dans le temps afin de réduire les effets des erreurs de quantification aux frontières de blocs créées lors du processus de codage/décodage, ledit moyen de fenêtre de synthèse présentant une caractéristique telle que le produit de sa réponse et de la réponse de ladite fenêtre d'analyse soit unitaire lorsque deux blocs d'échantillons de signal adjacents sont chevauchés et ajoutés, moyen dans lequel ladite fenêtre de synthèse est la fenêtre de synthèse d'une paire de fenêtres d'analyse/synthèse;
- un moyen de recouvrement/addition de bloc de signal (116, 2216) pour annuler les effets de pondération de la fenêtre d'analyse et du moyen de fenêtre de synthèse afin de récupérer une représentation numérisée du signal dans le temps; et
- un moyen de sortie du signal dans le temps (117, 2217) pour convertir le signal numérique dans le temps sous forme analogique.

52. Décodeur selon la revendication 50 ou 51 dans lequel ledit moyen pour appliquer une fonction discrète de transformée inverse applique, de façon alternée, une fonction inverse de Transformée Discrète en Cosinus et une fonction inverse Transformée Discrète en Sinus aux coefficients de transformée en fréquence selon la technique d'Annulation d'Alias dans le Temps et dans lequel lesdites fenêtres sont dérivées d'une fenêtre de Kaiser-Bessel possédant une valeur alpha comprise entre 4 et 7.

53. Décodeur selon la revendication 50 ou 51, dans lequel ledit moyen pour appliquer une fonction discrète de transformée applique une Transformée Discrète de Fourier inverse et dans lequel lesdites fenêtres sont dérivées d'une fenêtre de Kaiser-Bessel présentant une valeur alpha comprise entre 1,5 et 3.

54. Décodeur selon la revendication 50 ou 51, dans lequel ladite paire de fenêtres d'analyse/synthèse est dérivée de pratiquement une quelconque fenêtre de la classe des fenêtres d'analyse permettant la conception d'une banque de filtrage dans laquelle les filtres digitaux à base de transformée présentent une caractéristique de sélectivité désirée et la capacité de faire un compromis entre la pente de décrochage de bande de transition et la profondeur de rejet de la bande d'arrêt dans les caractéristiques du filtre.

55. Décodeur selon la revendication 54, dans lequel ladite classe des fenêtres d'analyse comprend les fenêtres de Kaiser-Bessel et Dolph-Chebyshev et des fenêtres dérivées de coefficients finis de filtre par impulsion utilisant le procédé de Parks-McClellan.

56. Décodeur pour la lecture de haute qualité d'une information audio de large bande codée, de façon numérique, dans lequel l'information a été codée, de façon numérique, par un codeur générant des blocs d'échantillons pondérés par fenêtre d'analyse par pondération de blocs d'échantillons d'information audio à l'aide d'une fonction de fenêtre d'analyse, générant des coefficients de transformée en fréquence par application d'une transformée directe auxdits blocs d'échantillons pondérés par fenêtre d'analyse et codant lesdits coefficients de transformée en une sortie numérique présentant un format adapté à la transmission ou au stockage, ledit décodeur comprenant :
- un moyen de déformatage (112, 2212) recevant ladite sortie numérique pour reconstituer lesdits coefficients de transformée en fréquence;
- un moyen (114, 2214) pour générer des blocs d'échantillons de signal dans le temps en réponse auxdits coefficients reconstitués de transformée en fréquence par application d'une transformée inverse ayant une caractéristique inverse à celle de ladite transformée directe;
- un moyen de fenêtre de synthèse (115, 2215) pour pondérer les blocs d'échantillons de signal dans le temps à l'aide d'une fonction de fenêtre de synthèse, moyen dans lequel ladite fonction de fenêtre de synthèse est la fenêtre de synthèse d'une paire de fenêtres d'analyse/synthèse, chacune de longueur $N$ et le produit de chaque fenêtre de ladite paire est une fenêtre produit de longueur $N$ avec un intervalle de recouvrement de longueur $V$, ladite fenêtre produit lors du recouvrement et de l'addition avec elle-même sur l'intervalle de recouvrement s'ajoute à une valeur constante; et
- un moyen de recouvrement/addition de blocs de signal (116, 2216) pour annuler les effets de pondération de la fenêtre d'analyse et du moyen de fenêtre de synthèse afin de récupérer une représentation numérique de ladite information audio;
    décodeur dans lequel ladite paire de fenêtres d'analyse/synthèse peut être déterminé par un procédé comprenant les étapes suivantes :
(1) la génération d'une fenêtre initiale présentant une longueur de 1 + $V$;
(2) la génération d'une fenêtre par intérim par convolution de ladite fenêtre initiale avec une fonction d'impulsion unitaire de longueur $N$ - $V$;
(3) la définition d'un facteur de cadrage par convolution de ladite fenêtre initiale avec une fonction d'impulsion unitaire de longueur unitaire;
(4) l'obtention de ladite fenêtre produit en divisant ladite fenêtre par intérim avec ledit facteur de cadrage; et

(5) l'obtention de ladite fenêtre d'analyse en prenant la puissance *A* de ladite fenêtre produit et l'obtention de ladite fenêtre de synthèse en prenant la puissance B de ladite fenêtre produit, *A + B* étant égal à 1.

57. Décodeur selon la revendication 54, dans lequel la pente du décrochage de bande de transition des fenêtres d'analyse et de synthèse est maximisée pour le niveau désiré de rejet de la bande d'arrêt.

58. Décodeur selon la revendication 57, dans lequel le niveau désiré de rejet de la bande d'arrêt est déterminé, de façon empirique, par des tests d'écoute.

59. Décodeur selon la revendication 57, dans lequel le décrochage de la bande de transition suit globalement la pente inférieure de la courbe de masquage psycho-acoustique de l'oreille humaine dans une bande critique.

60. Décodeur selon la revendication 24, dans lequel le produit de ladite paire de fenêtres d'analyse/synthèse est dérivé d'une quelconque fenêtre de ladite classe de fenêtres d'analyse à l'aide d'un ordinateur à vocation générale selon un procédé d'optimisation numérique comprenant les étapes suivantes :
   - l'initialisation par la lecture de données de fichiers définissant les caractéristiques désirées de sélectivité en fréquence et spécifiant une forme de fenêtre de départ;
   - la génération d'une fenêtre d'analyse d'essai initialement à partir de valeurs spécifiées dans les données d'initialisation pour la première fenêtre d'essai puis pour les fenetres d'essai successives à partir de valeurs spécifiées par un programme d'optimisation à plusieurs dimensions;
   - la détermination des caractéristiques de réponse en fréquence des filtres digitaux résultant de l'utilisation de la fenêtre d'analyse d'essai construite dans un codeur à transformée;
   - le calcul d'une valeur d'erreur pour de telles caractéristiques de réponse en fréquence par rapport aux caractéristiques désirées de sélectivité en fréquence des filtres digitaux; et
   - la détermination pour savoir si on poursuit le processus d'optimisation.

61. Décodeur selon la revendication 50 ou 51, dans lequel ladite paire de fenêtres d'analyse/synthèse est dérivée d'une fenêtre d'analyse dérivée d'un procédé d'optimisation numérique.

62. Décodeur selon la revendication 49 ou 51, comprenant, de plus, un moyen de désaccentuation (2224) pour traiter la sortie analogique d'information audio de large bande à partir dudit moyen de sortie de signal dans le temps (2217) dans lequel ledit moyen pour appliquer une fonction inverse de transformée discrète applique une Transformée Discrète de Fourier inverse.

63. Décodeur selon la revendication 62, dans lequel ledit moyen de désaccentuation (2224) possède une caractéristique qui est l'inverse d'une caractéristique à plateau du second ordre avec une atténuation d'environ 19 dB à DC (0 Hz) et un gain unitaire aux hautes fréquences.

64. Système pour le traitement de haute qualité d'une information audio analogique de large bande comprenant un codeur selon l'une quelconque des revendications 1 à 33 et un décodeur selon l'une quelconque des revendications 34 à 63.

65. Système selon la revendication 64, dans lequel le retard de propagation du signal dans le système comprenant la période desdits blocs d'échantillons de signal dans le temps du codeur, la période desdits blocs d'échantillons de signal dans le temps du décodeur, le temps de traitement dudit codeur et le temps de traitement dudit décodeur est assez court pour que le système soit utilisable pour une rétroaction orale en temps réel vers un opérateur humain.

66. Décodeur selon la revendication 34, dans lequel ledit signal codé comprend une information numérique représentée par un nombre invariable de bits et une information numérique représentée par un nombre adaptatif de bits et dans lequel ledit moyen de déformatage comprend, de plus, un moyen pour dériver ladite information de sous-bande de ladite information numérique représentée par un nombre invariable de bits qui est placé dans des positions préétablies dudit signal codé.

67. Codeur selon la revendication 1, dans lequel ledit moyen de sous-bande génère ladite information de sous-bande par application d'une banque de filtrage auxdits échantillons de signal et dans lequel la précision de codage de la partie non adaptative peut être déterminée par un procédé comprenant les étapes suivantes :

(1) la comparaison d'une réponse représentative en fréquence pour une sous-bande de fréquences de ladite banque de filtrage avec un seuil de masquage psycho-acoustique représentatif de l'énergie spectral dans ladite sous-bande de fréquences;

(2) la génération d'une valeur de sous-bande égale au nombre de bits requis pour coder l'énergie spectrale dans ladite sous-bande de fréquences de telle façon que pratiquement aucun bruit de quantification ne dépasse ledit seuil de masquage psycho-acoustique représentatif;

(3) l'établissement de ladite précision de codage non adaptatif pour ladite sous-bande de fréquences en dessous de ladite valeur de sous-bande; et

(4) la réitération des étapes précédentes pour chacune de ladite pluralité de sous-bandes de fréquences, selon laquelle la précision de codage non adaptatif respectif est établie en dessous de la valeur correspondante de sous-bande.

68. Décodeur selon la revendication 34, dans lequel ledit moyen de sous-bande inverse génère lesdits échantillons de signal de pleine bande par application d'une banque de filtrage inverse à ladite information de sous-bande dérivée et dans lequel la précision de codage de ladite partie de codage non adaptatif peut être déterminée par un procédé comprenant les étapes suivantes :

(1) la comparaison d'une réponse représentative en fréquence pour une sous-bande de fréquences de ladite banque de filtrage inverse avec un seuil de masquage psycho-acoustique représentatif de l'énergie spectral dans ladite sous-bande de fréquences;

(2) la génération d'une valeur de sous-bande égale au nombre de bits requis pour coder l'énergie spectrale dans ladite sous-bande de fréquences de telle façon que pratiquement aucun bruit de quantification ne dépasse ledit seuil de masquage psycho-acoustique représentatif;

(3) l'établissement de ladite précision de codage non adaptatif pour ladite sous-bande de fréquences en dessous de ladite valeur de sous-bande; et

(4) la réitération des étapes précédentes pour chacune de ladite pluralité de sous-bandes de fréquences, selon laquelle la précision de codage non adaptatif respectif est établie en dessous de la valeur correspondante de sous-bande; et

un moyen pour générer ladite lecture de l'information audio en réponse à ladite information de sous-bande.

69. Dispositif selon la revendication 23 ou 56, dans lequel A et B sont égaux.

FIG_1a.

FIG_1b.

FIG._2a.

FIG._2b.

EP 0 447 495 B1

FIG._2c.

EP 0 447 495 B1

EP 0 447 495 B1

FIG._2d.

FIG._2e.

67

FIG._3a.

FIG._3b.

EP 0 447 495 B1

FIG._4.

FIG._5.

X(t)

+MAX

-MAX

t

FIG._6b.

X(t) o

W(t) o

X

o Y(t)

FIG._6a.

W(t)

1

0

t

FIG._6c.

Y(t)

+MAX

-MAX

t

FIG._6d.

EP 0 447 495 B1

REPEAT FOR ALL SUBBANDS $SB_i$
    FIND LARGEST COEFFICIENT $C_{MAX}$ IN $SB_i$
    SET $S_{MAX}$ ← LEFT-SHIFTS TO NORMALIZE $C_{MAX}$
    SET SUBBAND EXPONENT $EXP_i$ ← $S_{MAX}$
— 701

FOR SUBBANDS $SB_0$ TO $SB_6$
    FIND SMALLEST SUBBAND EXPONENT $X_{MIN}$
    IF $X_{MIN} \geq 3$ THEN
        SET MEXPO ← 1
        SET $EXP_i$ FOR SUBBANDS ← $EXP_i$ - 3
    ELSE
        SET MEXPO ← 0
        IF ANY $EXP_i > 7$ THEN SET $EXP_i$ ← 7
— 702a

FOR SUBBANDS $SB_7$ TO $SB_{18}$ *
    FIND SMALLEST SUBBAND EXPONENT $X_{MIN}$
    IF $X_{MIN} \geq 3$ THEN
        SET MEXP1 ← 1
        SET $EXP_i$ FOR SUBBANDS ← $EXP_i$ - 3
    ELSE
        SET MEXP1 ← 0
        IF ANY $EXP_i > 15$ THEN SET $EXP_i$ ← 15
— 702b

REPEAT FOR ALL SUBBANDS $SB_i$
    REPEAT FOR ALL COEFFICIENTS C IN $SB_i$
        LOOKUP MINIMUM BIT LENGTH MINLEN(C)
— 703

DO ADAPTIVE-BIT ALLOCATION: SET A(i) FOR ALL $SB_i$
— 704

REPEAT FOR ALL SUBBANDS $SB_i$
    REPEAT FOR ALL COEFFICIENTS C IN $SB_i$
        SHIFT C TO LEFT $EXP_i$ + 3·MEXP TIMES
        SET C LENGTH ← MINLEN(C) + A(1)
        ROUND AND TRUNCATE C TO LENGTH
— 705

*THE 20 kHz CODER USES SUBBANDS $SB_7$ TO $SB_{20}$.

## FIG._7.

```
SET ALL ELEMENTS OF A( )  ─ 0
FIND SMALLEST SUBBAND EXPONENT X_MIN
REPEAT  FOR ALL SUBBANDS SB_i                                    ─800
        SET M(i)  ─ X_MIN - EXP_i
        SET M(i)  ─ M(i) +4
        IF M(i) < 0 THEN SET M(i) ─ 0
```

```
STOP WHEN ALL ALLOCABLE BITS  ARE ALLOCATED
    REPEAT  FOR ALL  SUBBANDS SB_i
            IF M(i) = 4 THEN SET A(i)    ─ A(i)+1
    REPEAT FOR ALL  SUBBANDS SB_i                               ─801
            IF M(i) ≥ 3 THEN SET A(i)    ─ A(i)+1
    REPEAT  FOR ALL  SUBBANDS SB_i
            IF M(i) ≥ 2 THEN SET A(i)    ─ A(i)+1
    REPEAT FOR ALL  SUBBANDS SB_i
            IF M(i) ≥ 1 THEN SET A(i)    ─ A(i)+1
```

```
STOP WHEN ALL ALLOCABLE BITS ARE ALLOCATED
    REPEAT FOR ALL SUBBANDS SB_i
            IF 1 ≤ A(i) ≤ 3 THEN SET A(i)  ─ A(i)+1
    REPEAT FOR ALL SUBBANDS SB_i                               ─802
            IF 2 ≤ A(i) ≤ 3 THEN SET A(i)  ─ A(i)+1
    REPEAT FOR ALL SUBBANDS SB_i
            IF A(i) = 3 THEN SET A(i)   ─ A(i)+1
```

```
REPEAT UNTIL  ALL  ALLOCABLE BITS  ARE ALLOCATED        ─803
STEP 1 REPEAT FOR SUBBANDS SB_17 TO SB_i*
        IF {A(i-1), A(i), A(i+1)} = {0,0,4} THEN SET A(i) ─ 1
STEP 2  IF {A(0), A(1)} = {0,4} THEN SET A(0)++ ─ 1
        IF {A(17), A(18)}+ = {4,0} THEN SET A(18) ─ 1
STEP 3 REPEAT FOR SUBBANDS SB_17 TO SB_i**
        IF {A(i-1), A(i), A(i+1)} = {4,0,0} THEN SET A(i) ─ 1
STEP 4 REPEAT 4 TIMES
        REPEAT FOR ALL SUBBANDS SET IN STEP1
            SET A(i) ─ A(i)+1
        REPEAT FOR ALL SUBBANDS SET IN STEP2
            SET A(i) ─ A(i)+1
        REPEAT FOR ALL SUBBANDS SET IN STEP3
            SET A(i) ─ A(i)+1
```

* THE 20 kHz CODER USES SUBBANDS SB_19 TO SB_1.
** FOR DST BLOCKS, THE LOWER LIMIT IS SUBBAND SB_2.
+ THE 20 kHz CODER TESTS {A(19), A(20)}, AND SETS A(20) ─ 1.
++ FOR DST BLOCKS, TEST {A(1), A(2)}, AND SET A(1) ─ 1.

*FIG._8.*

FIG._9.

FIG 10

FIG.—11.

FIG._12.

FIG._13.

EP 0 447 495 B1

FIG._14a.

$X(t)$

FIG._14b.

$W_C(t)$

DCT
SAMPLE BLOCK

FIG._14c.

$W_S(t)$

DST
SAMPLE BLOCK

FIG._14d.

$X_C(t)$

FIG._14e.

$X_S(t)$

FIG._15a.

FIG._15b.

FIG._15c.

FIG._15d.

FORWARD/INVERSE
DCT
TRANSFORM

$Y_c(t)$

FIG._16a.

FORWARD/INVERSE
DST
TRANSFORM

$Y_s(t)$

FIG._16d.

$W_c(t)$

FIG._16b.

$W_s(t)$

FIG._16e.

$Y_c'(t)$

FIG._16c.

$Y_s'(t)$

FIG._16f.

$Y(t)$

FIG._16g.

FIG._17.

$FIG.\_18.$

FIG._19.

| CHANNEL A | | | | CHANNEL B | | | | CHANNEL A | | CHANNEL B | | CHANNEL A | CHANNEL B |
|---|---|---|---|---|---|---|---|---|---|---|---|---|---|
| M X 0 | M X 1 | E X P 0 | ... E X P 18 | M X 0 | M X 1 | E X P 1 | ... E X P 18 | COEFF 0 | ... COEFF 45 | COEFF 1 | ... COEFF 45 | ADAPTIVE BIT BLOCKS | ADAPTIVE BIT BLOCKS |
| 2 | | ⊢ 69 ⊣ | | 2 | | ⊢ 66 ⊣ | | ⊢ 163 ⊣ | | ⊢ 158 ⊣ | | ⊢ 34 ⊣ | ⊢ 34 ⊣ |

⊢———————————————— 528 ————————————————⊣

CHANNEL A: DCT BLOCK

CHANNEL B: DST BLOCK

*FIG._20.*

MAXIMUM CORRECTABLE BURST
⊢——— 33 ———⊣

LOWER FREQUENCY MASTER EXPONENTS

A+C          B+C

| A | M | B | M | C | M | A | M | B | ... | C | M | A | M | B | M | C |
|---|---|---|---|---|---|---|---|---|---|---|---|---|---|---|---|---|
| 4 | 8 | 4 | 8 | 4 | 8 | 4 | 8 | 4 | | 4 | 30 | 31 | 8 | 31 | 8 | 2 |

⊢———————————————— 552 ————————————————⊣

A = DATA AND ERROR CHECK BITS FOR R-S CODE #1

B = DATA AND ERROR CHECK BITS FOR R-S CODE #2

C = DATA AND ERROR CHECK BITS FOR R-S CODE #3

M = COEFFICIENT CODE WORDS AND ADAPTIVE BIT DATA

(UNPROTECTED BY ERROR CODES) *FIG._21.*

FIG._22a.

FIG._22b.

EP 0 447 495 B1

FIG_23.

FIG._24.

EP 0 447 495 B1

| CHANNEL A | | | | CHANNEL B | | | | CHANNEL A | | | CHANNEL B | | | CHANNEL A | CHANNEL B |
|---|---|---|---|---|---|---|---|---|---|---|---|---|---|---|---|
| M E X P | E X P O | ... | E X P 17 | M E X P | E X P O | ... | E X P 17 | COEFF O | ... | COEFF 40 | COEFF O | ... | COEFF 40 | ADAPTIVE BIT BLOCKS | ADAPTIVE BIT BLOCKS |
| 4 | ←—— 65 ——→ | | | 4 | ←—— 65 ——→ | | | ←——— 331 ———→ | | | ←——— 331 ———→ | | | ←——— 32 ———→ | ←——— 32 ———→ |

←——————————————————————— 864 —————————————————————→

*FIG._25.*

MAXIMUM CORRECTABLE BURST

←———— 45 ————→

MASTER EXPONENT CHANNEL A

MASTER EXPONENT CHANNEL B

| A | M | B | M | C | M | A | M | B | ... | C | M | A + C | M | B + C |
|---|---|---|---|---|---|---|---|---|---|---|---|---|---|---|
| 4 | 12 | 4 | 12 | 4 | 12 | 4 | 12 | 4 | | 4 | 120 | 4 | 116 | 4 |

←——————————————————————— 888 —————————————————————→

A = DATA AND ERROR CHECK BITS FOR R-S CODE #1

B = DATA AND ERROR CHECK BITS FOR R-S CODE #2

C = DATA AND ERROR CHECK BITS FOR R-S CODE #3

M = UNPROTECTED PARTS OF TRANSFORM COEFFICIENT CODE WORDS AND ADAPTIVE BIT BLOCKS

*FIG._26.*